# EUROPEAN PATENT SPECIFICATION

(11) **EP 3 468 249 B1**
(45) Date of publication and mention of the grant of the patent: **07.04.2021**
(21) Application number: 17809694.7
(22) Date of filing: 05.06.2017
(51) Int. Cl.: H04W 76/12, H04L 29/06, H04W 4/20, H04W 80/10

(54) **VOICE DATA TRANSMISSION CONTROL METHOD AND DEVICE**
SPRACHDATENÜBERTRAGUNGSTEUERUNGSVERFAHREN UND -VORRICHTUNG
PROCÉDÉ ET DISPOSITIF DE COMMANDE DE TRANSMISSION DE DONNÉES VOCALES

(30) Priority: 06.06.2016 CN 201610394190
(43) Date of publication of application: 10.04.2019
(73) Proprietor: Huawei Technologies Co., Ltd., Longgang District Shenzhen, Guangdong 518129 (CN)
(72) Inventor: ZENG, Qinghai, Shenzhen Guangdong 518129 (CN); GENG, Tingting, Shenzhen Guangdong 518129 (CN)
(74) Representative: Epping - Hermann - Fischer
(86) International application number: PCT/CN2017/087208
(87) International publication number: WO 2017/211255

(56) References cited:
- WO-A1-2015/131441
- WO-A1-2015/131441
- WO-A1-2016/064637
- CN-A- 102 457 813
- CN-A- 103 491 641
- CN-A- 103 647 764
- KR-A- 20130 048 676

## Description

### TECHNICAL FIELD

The present invention relates to the field of communications technologies, and in particular, to a voice data transmission control method and device.

### BACKGROUND

As data services grow explosively and networks shift to all Internet Protocol (Internet Protocol, IP), a Long Term Evolution (Long Term Evolution, LTE) network no longer provides a circuit switched (Circuit Switched, CS) domain, but reserves only one packet switched (packet switching, PS) domain: an evolved packet core (Evolved Packet Core, EPC). Therefore, the LTE network is an all-IP network without a circuit switched CS domain. In the LTE network, a voice over IP service, to be specific, voice over LTE (Voice over LTE, VoLTE), needs to be provided based on the packet switched PS domain. Therefore, an IP multimedia system (IP Multimedia Subsystem, IMS) is introduced and is superposed on an LTE core network. A VoLTE system controls services by using an IMS system, and implements a bearer by using an EPC system, thereby implementing IMS-based voice and multimedia services in the packet switched domain. For user equipment (User Equipment, UE), to support the VoLTE voice service, the user equipment needs to support not only LTE related functions but also IMS related functions.

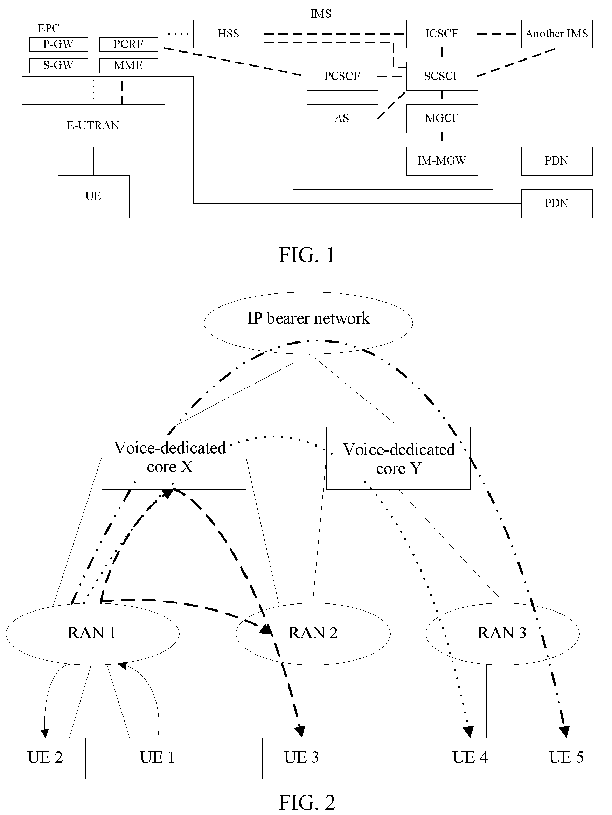

FIG. 1 is a schematic diagram of a network system architecture in which an IMS is superposed on an LTE core network to implement a VoLTE service. The VoLTE service includes a voice signaling packet and a voice service data packet, where the voice signaling packet includes Session Initiation Protocol (Session Initiation Protocol, SIP) signaling before establishment of a voice connection and during releasing of the voice connection, and the voice service data packet is a carrier of voice data transmitted in a network during a call process.

In FIG. 1, a solid-line connection indicates a communications link for a data flow of an IMS voice, a dotted line indicates a communications link for LTE signaling, and a dashed line indicates a communications link for IMS signaling.

The network system architecture shown in FIG. 1 includes UE, an evolved universal terrestrial radio access network (Evolved Universal Terrestrial Radio Access Network, E-UTRAN), an EPC, an IMS, and a packet data network (Packet Data Network, PDN), and may further include other IMSs.

The EPC may include a packet data network gateway Packet Data Network-GateWay, P-GW), a PCRF, a serving gateway (Serving Gateway, S-GW), a mobility management entity (Mobile Management Entity, MME), and a home location server (Home Subscriber Server, HSS). The IMS may include a proxy call session control function (Proxy-Call Session Control Function, P-CSCF), an authentication server (Authentication Server, AS), a serving call session control function (Serving Call Session Control Function, S-CSCF), an interrogating call session control function (Interrogating Call Session Control Function, I-CSCF), a media gateway control function (Media Gateway Control Function, MGCF), and an IP multimedia media gateway function (IP Multimedia Media Gateway Function, IM-MGW).

In the network system architecture shown in FIG. 1, a main function of the IMS is to add a sub service of the HSS for the UE. This is because SIP also supports a registration service and a call proxy service, but the SIP registration service is only responsible for recording whether address data and a password of an account of the UE are correct; however, the HSS in the IMS adds a service subscription database (for example, a value-added service) on a basis of the SIP registration service, and a billing point responsible for controlling charging. Therefore, an IMS solution of an operator usually serves at least one hundred million users. In the IMS solution of the operator, because a quantity of served users is large and users are distributed widely, a CSCF exists and needs to be divided into a plurality of sub systems, for example, a P-CSCF, an I-CSCF, and an S-CSCF as shown in FIG. 1. The P-CSCF is responsible for interacting with the UE of the IMS, and may compress or encrypt SIP and then deliver SIP to the I-CSCF. The I-CSCF queries the HSS to authenticate the account and password of the UE, and may further query the HSS to determine whether the UE owes fees, which services are subscribed to, and from which P-CSCF the UE comes. From which P-CSCF the UE comes is used to determine whether the UE is in a roaming state. The I-CSCF further finds, based on the HSS, an area to which the user belongs, and correspondingly allocates an S-CSCF that serves the area and is in an idle state. The S-CSCF completes UE registration and authentication, call routing processing, and call service triggering. In addition, the MGW is responsible for interconnecting mobile terminals supporting different communications standards such as 4G, 3G, and 2G and fixed phones, to interwork PS and CS domains.

Based on the foregoing descriptions, the IMS is introduced in all-IP LTE. Because IMS functional network elements have complex structures, there is a long delay in a VoLTE service establishment procedure, and efficiency of service establishment is low.

WO 2015/131441 A1 relates to a method comprising: sending a first INVITE message by a local user equipment (UE) if in a mobile originated (MO) mode, wherein the first INVITE message includes local session description protocol (SDP) information; receiving a second INVITE message by the local UE, wherein the second INVITE message includes remote SDP information if in a mobile termination (MT) mode; and performing a UE-initiated dedicated bearer allocation procedure prior to receiving a first response in the MO mode or prior to sending a second response in the MT mode.

### SUMMARY

Embodiments of the present invention provide a voice data transmission control method and device to simplify a functional network element for voice transmission control, reduce a delay in a service establishment procedure, and improve efficiency of service establishment.

According to a first aspect, an embodiment of the present invention provides a voice data transmission control method, where the method is applied to a radio access network device side, the radio access network device is particularly a radio access network device applied to a calling terminal side, and an implementation of the method includes:
after receiving a connection establishment request from a calling terminal, sending, by a radio access network device, first configuration information to the calling terminal, and establishing a voice-dedicated domain based first signaling connection between the radio access network device and the calling terminal based on the first configuration information;
receiving, by the radio access network device by using the first signaling connection, a call establishment request sent by the calling terminal; and
sending, by the radio access network device, the call establishment request to the core network device, and establishing a voice-dedicated domain based second signaling connection between the radio access network device and the core network device.

In an optional implementation, the voice-dedicated domain is a circuit switched CS domain or an Internet Protocol multimedia subsystem IMS domain. If the voice-dedicated domain is the CS domain, a voice payload may be transmitted without consuming an unnecessary protocol header. If the voice-dedicated domain is the IMS domain, the voice-dedicated domain may be compatible with a radio access network device or a terminal device that does not support the CS domain, where the radio access network device may support both the two domains.

In an optional implementation, the call establishment request sent by the calling terminal is transmitted by using any one of the following signaling connections: non-access stratum NAS signaling, Session Initiation Protocol SIP signaling, and SIP signaling carried in NAS signaling. This embodiment provides preferred signaling of the call establishment request to match the signaling connection in this embodiment of the present invention.

This embodiment of the present invention further provides at least the following three specific connection modes between the radio access network device and the core network and between the radio access network device and the calling terminal.

In an optional implementation, the call establishment request carries identifier information of a called terminal, and the identifier information of the called terminal is used by the radio access network device or the core network device to identify the called terminal; and
after the sending, by the radio access network device, the call establishment request to the core network device, the method further includes:
receiving, by the radio access network device, a call response from the core network device, sending the call response to the calling terminal, and establishing a packet switched PS domain based second data connection dedicated to carrying voice data, between the radio access network device and the core network device; and
receiving, by the radio access network device, second configuration information from the core network device, and establishing a PS domain based first data connection dedicated to carrying the voice data, between the radio access network device and the calling terminal based on the second configuration information.

In this embodiment, the PS domain is used both between the radio access network device and the core network and between the radio access network device and the calling terminal, and is used in a scenario in which the calling terminal does not support the CS domain or selects the PS domain. If the PS domain is also used for the second data connection, format conversion required by the voice data between different data connections can be reduced.

In an optional implementation, the call establishment request carries identifier information of a called terminal, and the identifier information of the called terminal is used by the radio access network device or the core network device to identify the called terminal; and
after the sending, by the radio access network device, the call establishment request to the core network device, the method further includes:
receiving, by the radio access network device, a call response from the core network device, sending the call response to the calling terminal, and establishing a CS domain based second data connection dedicated to carrying voice data, between the radio access network device and the core network device; and
receiving, by the radio access network device, second configuration information from the core network device, and establishing a CS domain based first data connection dedicated to carrying the voice data, between the radio access network device and the calling terminal based on the second configuration information.

In this embodiment, the CS domain is used both between the radio access network device and the core network and between the radio access network device and the calling terminal. This can reduce format conversion required by the voice data between different data connections. In addition, during voice data transmission in the CS domain, a voice payload may be transmitted preferentially, or at least a protocol header of a complete VoIP or PS data packet is not required, and therefore protocol header overheads can be reduced.

In an optional implementation, the call establishment request carries identifier information of a called terminal, and the identifier information of the called terminal is used by the radio access network device or the core network device to uniquely identify the called terminal; and
after the sending, by the radio access network device, the call establishment request to the core network device, the method further includes:
receiving, by the radio access network device, a call response from the core network device, sending the call response to the calling terminal, and establishing a CS domain based second data connection dedicated to carrying voice data, between the radio access network device and the core network device; and
receiving, by the radio access network device, second configuration information from the core network device, and establishing a PS domain based first data connection dedicated to carrying the voice data, between the radio access network device and the calling terminal based on the second configuration information.

In this embodiment, the CS domain is used between the radio access network device and the core network, and the PS domain is used between the radio access network device and the calling terminal. This may be used in a scenario in which the calling terminal does not support the CS domain or selects the PS domain. If the CS domain is used for the second data connection, a voice payload may be transmitted preferentially, or at least a protocol header of a complete VoIP or PS data packet is not required, and therefore protocol header overheads can be reduced.

In an optional implementation, this embodiment of the present invention further provides the following different data connection establishment solutions based on different distributions of the calling terminal and the called terminal when the two terminals are distributed in different locations, that is, located in a service range of a same radio access network device or located in service ranges of different radio access network devices. Before establishing the second data connection, the method further includes:
obtaining, by the radio access network device, a home location of the called terminal; and
the radio access network device may perform any one of the following:
   if both the called terminal and the calling terminal are in a service range of the radio access network device, the radio access network device establishes a fourth data connection between the radio access network device and the called terminal; or
   if the called terminal is in a service range of another radio access network device in a service range of the core network device, the radio access network device establishes a second data connection between the radio access network device and the core network device, or establishes a fifth data connection between the radio access network device and the another radio access network device; or
   if the called terminal is beyond a service range of the core network device, the radio access network device establishes a second data connection between the radio access network device and the core network device.

Based on the foregoing at least three different data connection solutions, this embodiment of the present invention further provides the following targeted voice data transmission solutions. When the voice data is a voice payload, the solutions may be applied to an application scenario such as 5G, where a protocol header almost occupies no overhead; or when the voice data exists in a form of a data packet, some or all protocol headers may be carried, and this may be selected based on a data transmission mode supported or actively selected by a system or a terminal. Details of use are as follows:
In an optional implementation, the method further includes:
receiving, by the radio access network device, the voice data by using the first data connection, where the voice data includes a voice payload; and sending, by the radio access network device, the voice payload to the core network device by using the second data connection.

Alternatively, in an optional implementation, the method further includes:
receiving, by the radio access network device, the voice data by using the first data connection, where the voice data includes a voice payload and configuration information of the voice payload; and
restoring, by the radio access network device, a protocol header of the voice payload based on the configuration information to obtain a voice data packet carrying the protocol header, and sending the voice data packet carrying the protocol header to the core network device by using the second data connection; or sending the configuration information and the voice payload to the core network device by using the second data connection.

Alternatively, in an optional implementation, the method further includes:
receiving, by the radio access network device, the voice data by using the first data connection, where the voice data includes a first voice data packet, and the first voice data packet includes a voice payload and a data link layer L2 protocol header; and sending, by the radio access network device, the first voice data packet to the core network device by using the second data connection.

Alternatively, in an optional implementation, the method further includes:
receiving, by the radio access network device, the voice data by using the first data connection, where the voice data includes a second voice data packet, and the second voice data packet includes a voice payload and carries identifier information used to indicate a sequence of the second voice data packet; and sending, by the radio access network device, the second voice data packet to the core network device by using the second data connection.

Alternatively, in an optional implementation, the method further includes:
receiving, by the radio access network device, the voice data by using the first data connection, where the voice data includes a third voice data packet, and the third voice data packet includes a voice payload and a voice over Internet Protocol VoIP protocol header and carries identifier information used to indicate a sequence of the third voice data packet; and sending, by the radio access network device, the third voice data packet to the core network device by using the second data connection.

In an optional implementation, the method further includes:
receiving, by the radio access network device, the voice data from the called terminal by using the second data connection, where the voice data includes a voice payload; and sending, by the radio access network device, the voice payload to the calling terminal by using the first data connection.

Alternatively, in an optional implementation, the method further includes:
receiving, by the radio access network device, the voice data from the called terminal by using the second data connection, where the voice data includes a voice payload and configuration information of the voice payload; and
restoring, by the radio access network device, a protocol header of the voice payload based on the configuration information to obtain a voice data packet carrying the protocol header, and sending the voice data packet carrying the protocol header to the calling terminal by using the first data connection; or sending the configuration information and the voice payload to the calling terminal by using the first data connection.

Alternatively, in an optional implementation, the method further includes:
receiving, by the radio access network device, the voice data from the called terminal by using the second data connection, where the voice data includes a fourth voice data packet, and the fourth voice data packet includes a voice payload and an L2 protocol header; and sending, by the radio access network device, the fourth voice data packet to the calling terminal by using the first data connection.

Alternatively, in an optional implementation, the method further includes:
receiving, by the radio access network device, the voice data from the called terminal by using the second data connection, where the voice data includes a fifth voice data packet, and the fifth voice data packet includes a voice payload and carries identifier information used to indicate a sequence of the fifth voice data packet; and sending, by the radio access network device, the fifth voice data packet to the calling terminal by using the first data connection.

Alternatively, in an optional implementation, the method further includes: receiving, by the radio access network device, the voice data by using the second data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and sending, by the radio access network device, the sixth voice data packet to the calling terminal by using the first data connection.

In an optional implementation, the method further includes:
receiving, by the radio access network device, the voice data by using the first data connection, where the voice data includes a voice payload; and sending, by the radio access network device, the voice payload to the core network device by using the second data connection.

Alternatively, in an optional implementation, the method further includes:
receiving, by the radio access network device, the voice data by using the first data connection, where the voice data includes a voice payload and configuration information of the voice payload; and
restoring, by the radio access network device, a protocol header of the voice payload based on the configuration information to obtain a voice data packet carrying the protocol header obtained through restoration, and sending, to the core network device by using the second data connection, the voice data packet carrying the protocol header obtained through restoration; or sending the configuration information and the voice payload to the core network device by using the second data connection.

In an optional implementation, the method further includes:
receiving, by the radio access network device, the voice data from the called terminal by using the second data connection, where the voice data includes a voice payload;
and sending, by the radio access network device, the voice payload to the calling terminal by using the first data connection.

Alternatively, in an optional implementation, the method further includes:
receiving, by the radio access network device, the voice data by using the second data connection, where the voice data includes a voice payload and configuration information of the voice payload; and
restoring, by the radio access network device, a protocol header of the voice payload based on the configuration information to obtain a voice data packet carrying the protocol header obtained through restoration, and sending, to the calling terminal by using the first data connection, the voice data packet carrying the protocol header obtained through restoration; or sending the configuration information and the voice payload to the calling terminal by using the first data connection.

In an optional implementation, the method further includes:
receiving, by the radio access network device, the voice data by using the first data connection, where the voice data includes a first voice data packet, and the first voice data packet includes a voice payload and a data link layer L2 protocol header; and
sending, by the radio access network device, the first voice data packet to the core network device by using the second data connection.

Alternatively, in an optional implementation, the method further includes:
receiving, by the radio access network device, the voice data by using the first data connection, where the voice data includes a second voice data packet, and the second voice data packet includes a voice payload and carries identifier information used to indicate a sequence of the second voice data packet; and sending, by the radio access network device, the second voice data packet to the core network device by using the second data connection.

Alternatively, in an optional implementation, the method further includes:
receiving, by the radio access network device, the voice data by using the first data connection, where the voice data includes a third voice data packet, and the third voice data packet includes a voice payload and a voice over Internet Protocol VoIP protocol header and carries identifier information used to indicate a sequence of the third voice data packet; and sending, by the radio access network device, the third voice data packet to the core network device by using the second data connection.

In an optional implementation, the method further includes:
receiving, by the radio access network device, the voice data from the called terminal by using the second data connection, where the voice data includes a fourth voice data packet, and the fourth voice data packet includes a voice payload and an L2 protocol header; and sending, by the radio access network device, the fourth voice data packet to the calling terminal by using the first data connection.

Alternatively, in an optional implementation, the method further includes:
receiving, by the radio access network device, the voice data from the called terminal by using the fourth data connection, where the voice data includes a fifth voice data packet, and the fifth voice data packet includes a voice payload and carries identifier information used to indicate a sequence of the fifth voice data packet; and sending, by the radio access network device, the fifth voice data packet to the calling terminal by using the first data connection.

Alternatively, in an optional implementation, the method further includes:
receiving, by the radio access network device, the voice data by using the second data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and sending, by the radio access network device, the sixth voice data packet to the calling terminal by using the first data connection.

In an optional implementation, if the first data connection and the second data connection are based on different domains, the radio access network device side may first perform voice data format conversion to reduce an amount of calculation required by conversion by the terminal device; in addition, if PS domain voice data is converted into CS domain voice data for transmission on the first data connection, air interface resources can be saved greatly; and the method further includes: before sending the voice data, converting, by the radio access network device, received CS domain voice data into PS domain voice data, or converting received PS domain voice data into CS domain voice data, where the PS domain voice data includes any one of the voice data packet carrying the protocol header, the first voice data packet, the second voice data packet, the third voice data packet, the fourth voice data packet, the fifth voice data packet, and the sixth voice data packet, and the CS domain voice data includes the voice payload.

In an optional implementation, this embodiment of the present invention further provides an example of a protocol header to be restored. Details are as follows: The protocol header obtained through restoration is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

In an optional implementation, in this embodiment of the present invention, the voice data may be distinguished, and a priority of sending the voice data is increased, so that quality of the voice data is controlled conveniently. Details are as follows: The method further includes:
before sending the voice data packet, reading, by the radio access network device, indication information carried in the voice data, and increasing a priority of the voice data based on the indication information; or before sending the voice data packet, adding, by the radio access network device to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

In an optional implementation, this embodiment of the present invention further provides a specific implementation solution for transmitting the voice data on an air interface as follows: The method further includes:
receiving or sending, by the radio access network device, the voice data by using the first data connection; where
a mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.
In this embodiment of the present invention, the voice data is transmitted on the air interface in CDM or TDM mode. In addition, frequency hopping is implemented by setting a subcarrier spacing, and a frequency selective gain may be obtained. Details are as follows:
In an optional implementation, the sending the voice data in frequency division multiplexing FDM mode on at least one subcarrier includes:
sending the voice data in frequency hopping mode on the at least one subcarrier.

In an optional implementation, the sending the voice data in frequency hopping mode on the at least one subcarrier includes:
mapping, on the at least one subcarrier based on a predetermined frequency hopping mechanism, the voice data to the at least one subcarrier for sending; or
when signal strength of a voice-dedicated subcarrier is higher than a second threshold, sending the voice data by using the voice-dedicated subcarrier, and when the signal strength of the voice-dedicated subcarrier is lower than a first threshold, sending the voice data by using a common reserved subcarrier, where the second threshold and the first threshold are used to select a subcarrier with better quality to perform frequency hopping and obtain a better frequency selective gain.

In an optional implementation, in a scenario of using time division multiplexing in this embodiment of the present invention, voice data of a plurality of terminals may be included in a single timeslot resource block, where all the voice data of the plurality of terminals may be uplink voice data, or may be downlink voice data. This can improve utilization of resource blocks, and correspondingly improve network coverage. Details are as follows: A single timeslot resource block on the air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

According to a second aspect, an embodiment of the present invention provides a voice data transmission control method, where the method is applied to a calling terminal side, and the method specifically includes:
sending, by a calling terminal, a connection establishment request to a radio access network device;
receiving, by the calling terminal, first configuration information sent by the radio access network device;
establishing, by the calling terminal, a voice-dedicated domain based first signaling connection between the calling terminal and the radio access network device based on the first configuration information;
sending, by the calling terminal, a call establishment request to the radio access network device by using the first signaling connection, where the call establishment request carries identifier information of a called terminal, and the identifier information of the called terminal is used by the radio access network device or the core network device to identify the called terminal;
after receiving a call response sent by the radio access network device, determining, by the calling terminal, that a call is successful; and
receiving, by the calling terminal, second configuration information sent by the radio access network device, and establishing a voice-dedicated domain based first data connection between the calling terminal and the radio access network device.

In an optional implementation, the voice-dedicated domain is a circuit switched CS domain or an Internet Protocol multimedia subsystem IMS domain.

In an optional implementation, the call establishment request sent by the calling terminal is transmitted by using any one of the following signaling connections: non-access stratum NAS signaling, Session Initiation Protocol SIP signaling, and SIP signaling carried in NAS signaling. In an optional implementation, the voice-dedicated domain based first data connection includes a packet switched PS domain based first data connection dedicated to carrying voice data; and
the method further includes: sending, by the calling terminal, the voice data to the radio access network device by using the first data connection, where the voice data includes a voice payload; or
the method further includes: sending, by the calling terminal, the voice data to the radio access network device by using the first data connection, where the voice data includes a voice payload and configuration information of the voice payload; or the method further includes: sending, by the calling terminal, the voice data to the radio access network device by using the first data connection, where the voice data includes a first voice data packet, and the first voice data packet includes a voice payload and a data link layer L2 protocol header; or
the method further includes: sending, by the calling terminal, the voice data to the radio access network device by using the first data connection, where the voice data includes a second voice data packet, and the second voice data packet includes a voice payload and carries identifier information used to indicate a sequence of the second voice data packet; or
the method further includes: sending, by the calling terminal, the voice data to the radio access network device by using the first data connection, where the voice data includes a third voice data packet, and the third voice data packet includes a voice payload and a voice over Internet Protocol VoIP protocol header and carries identifier information used to indicate a sequence of the third voice data packet.

In an optional implementation, the voice-dedicated domain based first data connection includes a PS domain based first data connection dedicated to carrying voice data; and
the method further includes: receiving, by the calling terminal, the voice data that is from the called terminal and is sent by the radio access network device, where the voice data includes a voice payload; or
the method further includes: receiving, by the calling terminal, the voice data that is from the called terminal and is sent by the radio access network device, where the voice data includes a voice payload and configuration information of the voice payload; or
the method further includes: receiving, by the calling terminal, the voice data that is from the called terminal and is sent by the radio access network device, where the voice data includes a fourth voice data packet, and the fourth voice data packet includes a voice payload and an L2 protocol header; or
the method further includes: receiving, by the calling terminal, the voice data that is from the called terminal and is sent by the radio access network device, where the voice data includes a fifth voice data packet, and the fifth voice data packet includes a voice payload and carries identifier information used to indicate a sequence of the fifth voice data packet; or
the method further includes: receiving, by the calling terminal, the voice data that is from the called terminal and is sent by the radio access network device, where the voice data includes a sixth voice data packet, and the sixth voice data packet includes a voice payload and a voice over Internet Protocol VoIP protocol header and carries, in L2, identifier information used to indicate a sequence of the sixth voice data packet.

In an optional implementation, the voice-dedicated domain based first data connection includes a CS domain based first data connection dedicated to carrying voice data; and
a CS domain based second data connection exists between the radio access network device and the core network device, and the method further includes: receiving, by the calling terminal, the voice data that is from the called terminal and is sent by the radio access network device, where the voice data includes a voice payload; or receiving, by the calling terminal, the voice data that is from the called terminal and is sent by the radio access network device, where the voice data includes a voice payload and configuration information of the voice payload; or
a CS domain based second data connection exists between the radio access network device and the core network device, and the method further includes:
   sending, by the calling terminal, the voice data to the radio access network device by using the first data connection, where the voice data includes a first voice data packet, and the first voice data packet includes a voice payload and a data link layer L2 protocol header; or sending, by the calling terminal, the voice data to the radio access network device by using the first data connection, where the voice data includes a second voice data packet, and the second voice data packet includes a voice payload and carries identifier information used to indicate a sequence of the second voice data packet; or sending, by the calling terminal, the voice data to the radio access network device by using the first data connection, where the voice data includes a third voice data packet, and the third voice data packet includes a voice payload and a voice over Internet Protocol VoIP protocol header and carries identifier information used to indicate a sequence of the third voice data packet.

In an optional implementation, the voice-dedicated domain based first data connection includes a PS domain based first data connection dedicated to carrying voice data; and
a CS domain based second data connection exists between the radio access network device and the core network device, and the method further includes: receiving, by the calling terminal, the voice data that is from the called terminal and is sent by the radio access network device, where the voice data includes a voice payload; or
receiving, by the calling terminal, the voice data that is from the called terminal and is sent by the radio access network device, where the voice data includes a voice payload and configuration information of the voice payload; or
a CS domain based second data connection exists between the radio access network device and the core network device, and the method further includes:
   receiving, by the calling terminal, the voice data that is from the called terminal and is sent by the radio access network device, where the voice data includes a fourth voice data packet, and the fourth voice data packet includes a voice payload and an L2 protocol header; or receiving, by the calling terminal, the voice data that is from the called terminal and is sent by the radio access network device, where the voice data includes a fifth voice data packet, and the fifth voice data packet includes a voice payload and carries identifier information used to indicate a sequence of the fifth voice data packet; or receiving, by the calling terminal, the voice data that is from the called terminal and is sent by the radio access network device, where the voice data includes a sixth voice data packet, and the sixth voice data packet includes a voice payload and a voice over Internet Protocol VoIP protocol header and carries, in L2, identifier information used to indicate a sequence of the sixth voice data packet.

In an optional implementation, the method further includes:
before sending the voice data packet, adding, by the calling terminal to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

In an optional implementation, the method further includes:
receiving or sending, by the calling terminal, the voice data by using the first data connection; where
a mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.
In an optional implementation, the sending the voice data in frequency division multiplexing FDM mode on at least one subcarrier includes:
sending the voice data in frequency hopping mode on the at least one subcarrier.

In an optional implementation, the sending the voice data in frequency hopping mode on the at least one subcarrier includes:
mapping, on the at least one subcarrier based on a predetermined frequency hopping mechanism, the voice data to the at least one subcarrier for sending; or
when signal strength of a voice-dedicated subcarrier is higher than a second threshold, sending the voice data by using the voice-dedicated subcarrier, and when the signal strength of the voice-dedicated subcarrier is lower than a first threshold, sending the voice data by using a common reserved subcarrier.

In an optional implementation, a single timeslot resource block on an air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

According to a third aspect, an embodiment of the present invention further provides a voice data transmission control method, where the method is applied to a core network device side, and the method specifically includes:
receiving, by a core network device, a call establishment request that is from a calling terminal and is sent by a radio access network device, and establishing a voice-dedicated domain based second signaling connection between the core network device and the radio access network device, where the call establishment request carries identifier information of a called terminal, and the identifier information of the called terminal is used by the radio access network device or the core network device to identify the called terminal;
initiating, by the core network, a call establishment request to the called terminal, and establishing a voice-dedicated domain based third signaling connection between the core network device and the called terminal; and
after receiving a call response returned by the called terminal, sending, by the core network device, the call response to the radio access network device.

In an optional implementation, before the establishing a voice-dedicated domain based third signaling connection between the core network device and the called terminal, the method further includes:
determining, by the core network device, a home location of the called terminal, and sending information about the home location of the called terminal to the radio access network device; and
the core network device may perform any one of the following:
   if the called terminal is in a service range of another radio access network device in a service range of the core network device, establishing the third signaling connection between the core network device and the called terminal through the another radio access network device; or
   if the called terminal is beyond a service range of the core network device, establishing the third signaling connection between the core network device and the called terminal through a radio access network device and a core network device to which the called terminal belongs.

In an optional implementation, after the receiving, by the core network device, a call response returned by the called terminal, the method further includes:
establishing, by the core network device, a PS domain based second data connection dedicated to carrying voice data, between the core network device and the radio access network device, and establishing a third data connection between the core network device and the called terminal through a radio access network device and a core network device to which the called terminal belongs; and
sending, by the core network device, second configuration information to the radio access network device, where the second configuration information carries a parameter required for establishing a voice-dedicated domain based first data connection between the radio access network device and the calling terminal; or if the called terminal and the calling terminal belong to different radio access network devices, establishing a voice-dedicated domain based data connection between the core network device and the radio access network device, and sending third configuration information to the radio access network device to which the called terminal belongs, where the second configuration information carries a parameter required for establishing a voice-dedicated domain based third data connection between the radio access network device to which the called terminal belongs and the called terminal.

In an optional implementation, the method further includes:
receiving, by the core network device, the voice data by using the second data connection, where the voice data includes a voice payload; and sending the voice payload to the called terminal by using the third data connection.

Alternatively, in an optional implementation, the method further includes:
receiving, by the core network device, the voice data by using the second data connection, where the voice data includes a voice payload and configuration information of the voice payload; and
restoring, by the core network device, a protocol header of the voice payload to obtain a voice data packet carrying the protocol header, and sending the voice data packet carrying the protocol header to the called terminal by using the third data connection; or sending the configuration information and the voice payload to the called terminal by using the third data connection.

Alternatively, in an optional implementation, the method further includes:
receiving, by the core network device, the voice data by using the second data connection, where the voice data includes a first voice data packet, and the first voice data packet includes a voice payload and a data link layer L2 protocol header; and sending, by the core network device, the first voice data packet to the called terminal by using the third data connection.

Alternatively, in an optional implementation, the method further includes:
receiving, by the core network device, the voice data by using the second data connection, where the voice data includes a second voice data packet, and the second voice data packet includes a voice payload and carries identifier information used to indicate a sequence of the second voice data packet; and sending, by the core network device, the second voice data packet to the called terminal by using the third data connection.

Alternatively, in an optional implementation, the method further includes:
receiving, by the core network device, the voice data by using the second data connection, where the voice data includes a third voice data packet, and the third voice data packet includes a voice payload and a voice over Internet Protocol VoIP protocol header and carries identifier information used to indicate a sequence of the third voice data packet; and sending, by the core network device, the third voice data packet to the called terminal by using the third data connection.

In an optional implementation, the method further includes:
receiving, by the core network device, the voice data from the called terminal by using the third data connection, where the voice data includes a voice payload; and
sending, by the core network device, the voice payload to the radio access network device by using the second data connection.

Alternatively, in an optional implementation, the method further includes:
receiving, by the core network device, the voice data by using the third data connection, where the voice data includes a voice payload and configuration information of the voice payload; and
restoring, by the radio access network device, a protocol header of the voice payload based on the configuration information to obtain a voice data packet carrying the protocol header, and sending the voice data packet carrying the protocol header to the radio access network device by using the second data connection; or sending the configuration information and the voice payload to the radio access network device by using the second data connection.

Alternatively, in an optional implementation, the method further includes:
receiving, by the core network device, the voice data from the called terminal by using the third data connection, where the voice data includes a fourth voice data packet, and the fourth voice data packet includes a voice payload and an L2 protocol header; and sending, by the core network device, the fourth voice data packet to the radio access network device by using the second data connection.

Alternatively, in an optional implementation, the method further includes:
receiving, by the core network device, the voice data from the called terminal by using the third data connection, where the voice data includes a fifth voice data packet, and the fifth voice data packet includes a voice payload and carries identifier information used to indicate a sequence of the fifth voice data packet; and sending, by the core network device, the fifth voice data packet to the radio access network device by using the second data connection.

Alternatively, in an optional implementation, the method further includes: receiving, by the core network device, the voice data by using the third data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and sending, by the core network device, the sixth voice data packet to the radio access network device by using the second data connection. In an optional implementation, the protocol header obtained through restoration is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

In an optional implementation, the method further includes:
before sending the voice data packet, reading, by the core network device, indication information carried in the voice data, and increasing a priority of the voice data based on the indication information; or before sending the voice data packet, adding, by the radio access network device to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

According to a fourth aspect, an embodiment of the present invention further provides a voice data transmission control method, where the method is applied to a called terminal side, and the method specifically includes:
sending, by a called terminal, a connection request to a called-side radio access network device to which the called terminal belongs, and accessing the called-side radio access network device;
receiving, by the called terminal, fourth configuration information sent by the called-side radio access network device, and establishing a voice-dedicated domain based third signaling connection between the called terminal and the called-side radio access network device based on the fourth configuration information;
receiving, by the called terminal, a call establishment request from a calling terminal by using the third signaling connection, and sending a call response to the called-side radio access network device; and
receiving, by the called terminal, third configuration information sent by the called-side radio access network device, and establishing a voice-dedicated domain based seventh data connection between the called terminal and the called-side radio access network device based on the third configuration information.

In an optional implementation, the voice-dedicated domain is a circuit switched CS domain or an Internet Protocol multimedia subsystem IMS domain.

In an optional implementation, the call establishment request sent by the calling terminal is transmitted by using any one of the following signaling connections: non-access stratum NAS signaling, Session Initiation Protocol SIP signaling, and SIP signaling carried in NAS signaling. In an optional implementation, the seventh data connection is a PS domain based seventh data connection dedicated to carrying voice data, and a PS domain based connection dedicated to carrying the voice data also exists between the called-side radio access network device and a called-side core network device; and
the method further includes: receiving, by the called terminal, a voice payload by using the seventh data connection; or
the method further includes: receiving, by the called terminal, a voice payload and configuration information of the voice payload by using the seventh data connection; or
the method further includes: receiving, by the called terminal, the voice data by using the seventh data connection, where the voice data includes a first voice data packet, and the first voice data packet includes a voice payload and a data link layer L2 protocol header; and sending, by the called terminal, the first voice data packet to the core network device by using the seventh data connection; or
the method further includes: receiving, by the called terminal, a second voice data packet by using the seventh data connection, where the second voice data packet includes a voice payload and carries identifier information used to indicate a sequence of the second voice data packet; and sending, by the called terminal, the second voice data packet to the radio access network device by using the seventh data connection; or
the method further includes: receiving, by the called terminal, a third voice data packet by using the seventh data connection, where the third voice data packet includes a voice payload and a voice over Internet Protocol VoIP protocol header and carries identifier information used to indicate a sequence of the third voice data packet; and sending, by the called terminal, the third voice data packet to the radio access network device by using the seventh data connection; or
the method further includes: sending, by the called terminal, a voice payload to the called-side radio access network device by using the seventh data connection; or the method further includes: sending, by the called terminal, a voice payload and configuration information of the voice payload to the called-side radio access network device by using the seventh data connection; or
the method further includes: sending, by the called terminal, a fourth voice data packet to the called-side radio access network device by using the seventh data connection, where the fourth voice data packet includes a voice payload and an L2 protocol header; or
the method further includes: sending, by the called terminal, a fifth voice data packet to the called-side radio access network device by using the seventh data connection, and the fifth voice data packet includes a voice payload and carries identifier information used to indicate a sequence of the fifth voice data packet; or
the method further includes: sending, by the called terminal, a sixth voice data packet to the called-side radio access network device by using the seventh data connection, where the sixth voice data packet includes a voice payload and a voice over Internet Protocol VoIP protocol header and carries, in L2, identifier information used to indicate a sequence of the sixth voice data packet.

In an optional implementation, the seventh data connection is a CS domain based seventh data connection dedicated to carrying voice data, and a CS domain based connection dedicated to carrying the voice data also exists between the called-side radio access network device and a called-side core network device; and the method further includes:
receiving, by the called terminal, a voice payload by using the seventh data connection; or
the method further includes: receiving, by the called terminal, a voice payload and configuration information of the voice payload by using the seventh data connection; or
the method further includes: sending, by the called terminal, a voice payload to the called-side radio access network device by using the seventh data connection; or the method further includes: sending, by the called terminal, a voice payload and configuration information of the voice payload to the called-side radio access network device by using the seventh data connection.

In an optional implementation, the seventh data connection is a PS domain based seventh data connection dedicated to carrying voice data, and a CS domain based connection dedicated to carrying voice data exists between the called-side radio access network device and a called-side core network device; and
the method further includes: receiving, by the called terminal, the voice data by using the seventh data connection, where the voice data includes a first voice data packet, and the first voice data packet includes a voice payload and a data link layer L2 protocol header; and sending, by the called terminal, the first voice data packet to the core network device by using the seventh data connection; or
the method further includes: receiving, by the called terminal, a second voice data packet by using the seventh data connection, where the second voice data packet includes a voice payload and carries identifier information used to indicate a sequence of the second voice data packet; and sending, by the called terminal, the second voice data packet to the radio access network device by using the seventh data connection; or
the method further includes: receiving, by the called terminal, a third voice data packet by using the seventh data connection, where the third voice data packet includes a voice payload and a voice over Internet Protocol VoIP protocol header and carries identifier information used to indicate a sequence of the third voice data packet; and sending, by the called terminal, the third voice data packet to the radio access network device by using the seventh data connection; or
the method further includes: sending, by the called terminal, a fourth voice data packet to the called-side radio access network device by using the seventh data connection, where the fourth voice data packet includes a voice payload and an L2 protocol header; or
the method further includes: sending, by the called terminal, a fifth voice data packet to the called-side radio access network device by using the seventh data connection, and the fifth voice data packet includes a voice payload and carries identifier information used to indicate a sequence of the fifth voice data packet; or
the method further includes: sending, by the called terminal, a sixth voice data packet to the called-side radio access network device by using the seventh data connection, where the sixth voice data packet includes a voice payload and a voice over Internet Protocol VoIP protocol header and carries, in L2, identifier information used to indicate a sequence of the sixth voice data packet.

In an optional implementation, the protocol header obtained through restoration is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

In an optional implementation, the method further includes:
before sending the voice data packet, adding, by the called terminal to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

In an optional implementation, the method further includes:
receiving or sending, by the called terminal, the voice data by using the seventh data connection; where
a mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

In an optional implementation, the sending the voice data in frequency division multiplexing FDM mode on at least one subcarrier includes:
sending the voice data in frequency hopping mode on the at least one subcarrier.

In an optional implementation, the sending the voice data in frequency hopping mode on the at least one subcarrier includes:
mapping, on the at least one subcarrier based on a predetermined frequency hopping mechanism, the voice data to the at least one subcarrier for sending; or
when signal strength of a voice-dedicated subcarrier is higher than a second threshold, sending the voice data by using the voice-dedicated subcarrier, and when the signal strength of the voice-dedicated subcarrier is lower than a first threshold, sending the voice data by using a common reserved subcarrier.

In an optional implementation, a single timeslot resource block on an air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

According to a fifth aspect, an embodiment of the present invention further provides a voice data transmission control method, including:
after receiving a connection establishment request from a called terminal, allowing, by a radio access network device, the called terminal to access the radio access network device;
receiving, by the radio access network device, fourth configuration information from a core network device;
establishing a voice-dedicated domain based third signaling connection between the radio access network device and the called terminal based on the fourth configuration information;
sending, by the radio access network device, the call establishment request to the called terminal by using the third signaling, receiving a call response sent by the called terminal, and sending the call response to the core network device; and sending, by the radio access network device, third configuration information to the called terminal, and establishing a voice-dedicated domain based seventh data connection between the radio access network device and the called terminal based on the third configuration information.

In an optional implementation, the voice-dedicated domain is a circuit switched CS domain or an Internet Protocol multimedia subsystem IMS domain.

In an optional implementation, the call establishment request sent by the calling terminal is transmitted by using any one of the following signaling connections: non-access stratum NAS signaling, Session Initiation Protocol SIP signaling, and SIP signaling carried in NAS signaling. In an optional implementation, the voice-dedicated domain based data connection between the radio access network device and the called terminal is a PS domain based seventh data connection dedicated to carrying voice data; and a PS domain based sixth data connection dedicated to carrying the voice data exists between the radio access network device and the core network device; or
the voice-dedicated domain based data connection between the radio access network device and the called terminal is a CS domain based seventh data connection dedicated to carrying voice data; and a CS domain based sixth data connection dedicated to carrying the voice data exists between the radio access network device and the core network device; or
the voice-dedicated domain based data connection between the radio access network device and the called terminal is a PS domain based seventh data connection dedicated to carrying voice data; and a CS domain based sixth data connection dedicated to carrying the voice data exists between the radio access network device and the core network device.

According to a sixth aspect, an embodiment of the present invention further provides a voice data transmission control method, including:
establishing, by a radio access network device, a packet switched PS domain based first signaling connection between the radio access network device and a calling terminal;
establishing, by the radio access network device, a PS domain based second signaling connection between the radio access network device and a core network device; and establishing, by the radio access network device, a PS domain based second data connection dedicated to carrying voice data, between the radio access network device and the core network device; and establishing a circuit switched CS domain based first data connection dedicated to carrying the voice data, between the radio access network device and the calling terminal.

In an optional implementation, the method further includes:
receiving, by the radio access network device, the voice data by using the first data connection, where the voice data includes a voice payload; and sending, by the radio access network device, the voice payload to the core network device by using the second data connection.

Alternatively, in an optional implementation, the method further includes:
receiving, by the radio access network device, the voice data by using the first data connection, where the voice data includes a voice payload and configuration information of the voice payload; and
restoring, by the radio access network device, a protocol header of the voice payload based on the configuration information to obtain a voice data packet carrying the protocol header, and sending the voice data packet carrying the protocol header to the core network device by using the second data connection; or sending the configuration information and the voice payload to the core network device by using the second data connection.

Alternatively, in an optional implementation, the method further includes:
receiving, by the radio access network device, the voice data by using the first data connection, where the voice data includes a first voice data packet, and the first voice data packet includes a voice payload and a data link layer L2 protocol header; and
sending, by the radio access network device, the first voice data packet to the core network device by using the second data connection.

Alternatively, in an optional implementation, the method further includes:
receiving, by the radio access network device, the voice data by using the first data connection, where the voice data includes a second voice data packet, and the second voice data packet includes a voice payload and carries identifier information used to indicate a sequence of the second voice data packet; and sending, by the radio access network device, the second voice data packet to the core network device by using the second data connection.

Alternatively, in an optional implementation, the method further includes: receiving, by the radio access network device, the voice data by using the first data connection, where the voice data includes a third voice data packet, and the third voice data packet includes a voice payload and a voice over Internet Protocol VoIP protocol header and carries identifier information used to indicate a sequence of the third voice data packet; and sending, by the radio access network device, the third voice data packet to the core network device by using the second data connection.

In an optional implementation, the method further includes:
receiving, by the radio access network device, the voice data from a called terminal by using the second data connection, where the voice data includes a voice payload;
and sending, by the radio access network device, the voice payload to the calling terminal by using the first data connection.

Alternatively, in an optional implementation, the method further includes:
receiving, by the radio access network device, the voice data by using the second data connection, where the voice data includes a voice payload and configuration information of the voice payload; and
restoring, by the radio access network device, a protocol header of the voice payload based on the configuration information to obtain a voice data packet carrying the protocol header, and sending the voice data packet carrying the protocol header to the calling terminal by using the first data connection; or sending the configuration information and the voice payload to the calling terminal by using the first data connection.

Alternatively, in an optional implementation, the method further includes:
receiving, by the radio access network device, the voice data from the called terminal by using the second data connection, where the voice data includes a fourth voice data packet, and the fourth voice data packet includes a voice payload and an L2 protocol header; and sending, by the radio access network device, the fourth voice data packet to the calling terminal by using the first data connection.

Alternatively, in an optional implementation, the method further includes:
receiving, by the radio access network device, the voice data from the called terminal by using the second data connection, where the voice data includes a fifth voice data packet, and the fifth voice data packet includes a voice payload and carries identifier information used to indicate a sequence of the fifth voice data packet; and sending, by the radio access network device, the fifth voice data packet to the calling terminal by using the first data connection.

Alternatively, in an optional implementation, the method further includes: receiving, by the radio access network device, the voice data by using the second data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and sending, by the radio access network device, the sixth voice data packet to the calling terminal by using the first data connection.

In an optional implementation, the protocol header obtained through restoration is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

In an optional implementation, the method further includes:
before sending the voice data packet, reading, by the radio access network device, indication information carried in the voice data, and increasing a priority of the voice data based on the indication information; or before sending the voice data packet, adding, by the radio access network device to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

In an optional implementation, the method further includes:
receiving or sending, by the radio access network device, the voice data by using the first data connection; where
a mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

In an optional implementation, the sending the voice data in frequency division multiplexing FDM mode on at least one subcarrier includes:
sending the voice data in frequency hopping mode on the at least one subcarrier.

In an optional implementation, the sending the voice data in frequency hopping mode on the at least one subcarrier includes:
mapping, on the at least one subcarrier based on a predetermined frequency hopping mechanism, the voice data to the at least one subcarrier for sending; or
when signal strength of a voice-dedicated subcarrier is higher than a second threshold, sending the voice data by using the voice-dedicated subcarrier, and when the signal strength of the voice-dedicated subcarrier is lower than a first threshold, sending the voice data by using a common reserved subcarrier.

In an optional implementation, a single timeslot resource block on an air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

According to a seventh aspect, an embodiment of the present invention further provides a radio access network device, where the radio access network device is used as a radio access network device on a calling terminal side and includes a receiving device, a sending device, a processor, and a memory, where the processor is configured to control execution of the method according to any one of the first aspect or the the possible implementations thereof.

According to an eighth aspect, an embodiment of the present invention provides a terminal device, where the terminal device is used as a calling terminal and includes a receiving device, a sending device, a processor, and a memory, where the processor is configured to control execution of the method according to any one of the second aspect.

According to a ninth aspect, an embodiment of the present invention further provides a core network device, including a receiving device, a sending device, a processor, and a memory, where the processor is configured to control execution of the method according to any one of the third aspect.

According to a tenth aspect, an embodiment of the present invention further provides a terminal device, where the terminal device is used as a called terminal and includes a receiving device, a sending device, a processor, and a memory, where the processor is configured to control execution of the method according to any one of the fourth aspect.

According to an eleventh aspect, an embodiment of the present invention further provides a radio access network device, where the radio access network device is used as a radio access network device on a called terminal side and includes a receiving device, a sending device, a processor, and a memory, where the processor is configured to control execution of the method according to any one of the fifth aspect.

According to a twelfth aspect, an embodiment of the present invention further provides a system on chip, including an input/output interface, at least one processor, a memory, and a bus, where the processor is configured to control execution of the method according to any one of the first aspect, or configured to control execution of the method according to any one of the second aspect, or configured to control execution of the method according to any one of the third aspect, or configured to control execution of the method according to any one of the fourth aspect, or configured to control execution of the method according to any one of the fifth aspect. According to a thirteenth aspect, an embodiment of the present invention further provides a communications system, including the radio access network device on the calling terminal side, the radio access network device on the called terminal side, and the core network device according to any one of the embodiments of the present invention.

According to a fourteenth aspect, an embodiment of the present invention further provides an electronic device, including a receiving device, a sending device, a processor, and a memory, where the memory stores a computer instruction sequence; and during execution of the instruction sequence, the processor performs the method according to any one of the first aspect or the seventh aspect, or performs the method according to any one of the second aspect, or performs the method according to any one of the third aspect, or performs the method according to any one of the fourth aspect, or performs the method according to any one of the fifth aspect, or performs the method according to any one of the sixth aspect.

As can be learned from the foregoing technical solutions, the embodiments of the present invention have the following advantages: A voice service is established by using a voice-dedicated domain based signaling connection, and an IMS does not need to be superposed on a core network. Therefore, a functional network element for voice transmission control can be simplified, a delay in a service establishment procedure is reduced, and efficiency of service establishment is improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.
FIG. 1 is a schematic diagram of a network architecture in the prior art;
FIG. 2 is a schematic diagram of a system architecture according to an embodiment of the present invention;
FIG. 3A is a schematic diagram of a system architecture according to an embodiment of the present invention;
FIG. 3B is a schematic diagram of a system architecture according to an embodiment of the present invention;
FIG. 3C is a schematic diagram of a system architecture according to an embodiment of the present invention;
FIG. 3D is a schematic diagram of a system architecture according to an embodiment of the present invention;
FIG. 4 is a schematic diagram of frequency hopping according to an embodiment of the present invention;
FIG. 5 is a schematic flowchart of a method according to an embodiment of the present invention;
FIG. 6 is a schematic flowchart of a method according to an embodiment of the present invention;
FIG. 7 is a schematic structural diagram of a radio access network device according to an embodiment of the present invention;
FIG. 8 is a schematic structural diagram of a radio access network device according to an embodiment of the present invention;
FIG. 9 is a schematic structural diagram of a radio access network device according to an embodiment of the present invention;
FIG. 10 is a schematic structural diagram of a terminal device according to an embodiment of the present invention;
FIG. 11 is a schematic structural diagram of a core network device according to an embodiment of the present invention;
FIG. 12 is a schematic structural diagram of a terminal device according to an embodiment of the present invention;
FIG. 13 is a schematic structural diagram of a radio access network device according to an embodiment of the present invention;
FIG. 14 is a schematic structural diagram of a radio access network device according to an embodiment of the present invention;
FIG. 15 is a schematic structural diagram of a radio access network device according to an embodiment of the present invention;
FIG. 16 is a schematic structural diagram of a terminal device according to an embodiment of the present invention;
FIG. 17 is a schematic structural diagram of a core network device according to an embodiment of the present invention;
FIG. 18 is a schematic structural diagram of a system on chip according to an embodiment of the present invention;
FIG. 19 is a schematic structural diagram of a system according to an embodiment of the present invention; and
FIG. 20 is a schematic structural diagram of an electronic device according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely some but not all of the embodiments of the present invention. All other embodiments obtained by a person of ordinary skill in the art based on the embodiments of the present invention without creative efforts shall fall within the protection scope of the present invention.

In addition, in a system architecture shown in FIG. 1, a voice flow is carried on a resource block (RB, Radio Block) whose quality of service class identifier (Quality of Service Class Identifier, QCI) is 1, and the voice flow is based on the Real-time Transport Protocol (Real-time Transport Protocol, RTP) or the User Datagram Protocol (User Datagram Protocol, UDP) or the IP protocol; SIP signaling is carried on an RB whose QCI is 5, and the SIP signaling is based on the UDP or the Transmission Control Protocol (Transmission Control Protocol, TCP) or the IP protocol. Typically, for transmission of a VoIP packet including a 32-byte payload, overheads of 60 bytes are added for an IPv6 packet header, and overheads of 40 bytes are added for an IPv4 packet header, that is, overheads increase by 188% and 125%.

In addition, on an air interface of an LTE system, a minimum scheduling unit of a physical resource block (Physical Resource Block, PRB) or a resource block (Resource Block, RB) is a subframe whose duration is 1 ms, including 14 symbols (symbol) * 12 subcarriers (subcarrier) in time domain and frequency domain, where a bandwidth of each subcarrier is 15 kHz. For some services, for example, even if maximum allowed transmit power is used for a VoIP service of user equipment (User Equipment, UE) located at a cell edge, data sent in a 1 ms subframe cannot be correctly received on a base station side due to excessively low signal strength and an excessively low signal-to-noise ratio. Therefore, transmission time interval (Transmission Time Interval, TTI) bundling (bundling) is introduced in LTE to improve uplink VoIP coverage of the UE at the cell edge. TTI bundling is a technology for sending one transport block (Transport Block, TB) in a plurality of consecutive uplink subframes for a plurality of times without waiting for an ACK or a NACK. For example, one TB is sent in each of TTIs 0, 1,2, and 3; and after the UE receives the TBs in the four TTIs and performs soft combining processing, the UE returns one ACK or NACK in a unified manner. Details are as follows:
In the TTI bundling technology, for some services, for example, the VoIP service of the UE located at the cell edge, an acceptable error rate of data sent in a 1 ms subframe may not be obtained. A purpose of TTI bundling is to improve VoIP coverage of the UE at the cell edge. TTI bundling is a technology for sending one TB (Transport Block, TB) in a plurality of consecutive uplink subframes for a plurality of times without waiting for an ACK or a NACK.

In TTI bundling, different redundancy versions (Redundancy Version, RV) corresponding to one TB may be sent in consecutive subframes, and there is no need to wait for an ACK or a NACK that is returned. After all transmissions corresponding to the TB are received and processed, a joint ACK or NACK is sent. To be specific, after a plurality of transmissions (different RVs) of one TB are received in consecutive subframes, and soft combining processing is performed, one ACK or NACK is returned in a unified manner.

Usually, in a last TTI corresponding to a TTI bundle, a hybrid automatic repeat request (Hybrid Automatic Repeat Request, HARQ) ACK or NACK that is fed back is received, regardless of whether data is sent in the TTI (a case in which no data is sent is, for example, a measurement gap (measurement gap)). In other words, transmissions in all TTIs in the TTI bundle are used as a whole, and one HARQ ACK or NACK is fed back in a unified manner. Retransmission in the TTI bundle also uses a transmission mode of the TTI bundle. In FDD, if TTI bundling is configured for the UE, there are four uplink HARQ processes (process). If TTI bundling is configured for the UE, uplink resources allocated to the UE are usually not more than three PRBs, that is, *N*_{PRB} ≤ 3, where N with a subscript PRB indicates that a quantity of uplink resources is a variable. In addition, a modulation order (modulation order) of the UE is configured as *Qₘ* = 2, where Q with a subscript m indicates that the modulation order is a variable, and m is a letter selected from "modulation".

Based on the foregoing further descriptions, it can be learned that, in the system architecture shown in FIG. 1, the solution in which all IP is superposed on an IMS core network still has the following technical problems:
For VoIP, relatively high overheads are caused in voice transmission. More specifically, an overhead-to-payload ratio is greater than 200%, that is, Overhead/Payload > 200%.

A voice capacity is limited. To be specific, every 20 MHz may carry about 400 voices.

When a VoIP packet is transmitted in TDM mode, power cannot be superposed in time domain because radio resources are used in time division mode in time domain, and therefore system overheads may be increased for TTI bundling.

For a minimum scheduling unit of a PRB, radio resources are frequently reused in frequency domain, and a carrier spacing is at least one PRB. Consequently, power cannot be more centralized in frequency domain, and therefore coverage is limited.

Because an eNB cannot parse SIP signaling (due to high parsing costs or SIP encryption), a radio access network (Radio Access Network, RAN) side cannot perform effective scheduling.

Based on the descriptions about the foregoing technical problems, in evolution of a future mobile communications system, voice communication is still one of most basic and main functions. Embodiments of the present invention provide a new design idea that breaks away from a limitation of VoLTE and designs a lightweight and personalized service slice for a voice service. For example, a voice-dedicated core is created on a core network side, and a main function of the voice-dedicated core is to establish a voice-dedicated control plane bearer. The voice-dedicated core may be disposed in a mobile switching center (Mobile Switching Center, MSC), a mobility management entity (Mobile Management Entity, MME), an MSC plus a mobile media gateway (Mobile Media Gateway, MGW), or another core network device, and used as a component thereof. A relatively simple architecture is used to support a voice service and simplify a procedure related to a VoLTE voice service.

In the embodiments of the present invention, a network device on a RAN side may identify and parse control plane signaling and/or a user plane signaling of the voice service. On an air interface, a mode similar to a CS-like voice payload transmission may be used. In the voice data transmission mode, in comparison with conventional VoLTE, when same voice data is transmitted, fewer network resources are occupied. This can resolve a coverage problem to some extent, and further expand the voice capacity.

In the embodiments of the present invention, a voice service in a new network architecture is used as an example for description, and an air interface technology is described in detail. However, the air interface technology in the present invention is not limited to the network architecture in the embodiments.

Based on the foregoing network architecture, in the embodiments of the present invention, a device having the voice-dedicated core may be created in the core network, or a function of the voice-dedicated core is configured in an existing network element of the core network. The voice-dedicated core is a voice-dedicated domain core network (CN) device, and may include a voice-dedicated domain control plane and/or a user plane gateway.

The voice-dedicated domain control plane is mainly used for control plane management of a voice call. When a voice service is initiated, the voice-dedicated core (Core) is used to establish a control plane signaling connection, that is, a signaling packet in a voice service process. For example, a voice service establishment request, a response, ring, off-hook, and on-hook, may all be processed by the voice-dedicated core. The signaling packet may be carried in an RRC message in a form of a NAS packet and sent to the voice-dedicated core, or may be sent to the voice-dedicated core in a form of a SIP signaling packet.

The user plane gateway may be voice-dedicated, for example, an MGW, or may be a reused existing data gateway, for example, an S-GW or a P-GW, or may be a newly introduced data gateway. The user plane gateway mainly has functions for receiving and forwarding a voice data packet in a voice call process.

Optionally, content that needs to be exchanged between the voice-dedicated domain control plane and the user plane gateway may include at least one of the following: a type of a data packet such as a voice data packet, a priority identifier, a source address of the data packet, a destination address of the data packet, location information of a calling terminal, location information of a called terminal, and the like.

In the embodiments of the present invention, the NAS is a non-access stratum. NAS signaling may be encapsulated in an RRC message at an access stratum in a form of a NAS data packet, transparently transmitted to the RAN side, and forwarded by the RAN to a corresponding CN. The NAS signaling has a relatively high priority.

SIP is a signaling form used during establishment of a VoIP voice call connection, and sent to the RAN in a form of an ordinary IP data packet, then sent to the MME, and then forwarded by the MME to an IMS.

In the embodiments, to ensure establishment of a voice call connection and shorten a delay, the following three manners may be used:
(1) A signaling packet is sent in a form of a NAS packet in a voice call connection establishment process, sent to the RAN by using a dedicated air interface voice resource, and then forwarded to the voice-dedicated domain control plane, that is, a CS core network.
(2) A tag is added to a SIP data packet to increase a priority, and an IMS server (server) function is introduced in the voice-dedicated domain control plane. This ensures a higher priority for the SIP voice packet sent on the RAN side and shortens a delay because the SIP voice packet is sent to the CN (IMS server) by using a dedicated bearer.
(3) A SIP packet is encapsulated in a form of a NAS packet, and sent to the RAN by using a dedicated air interface voice resource, where the core network is the voice-dedicated domain. In this manner, the core network needs to be capable of identifying NAS signaling and SIP signaling, and if the core network cannot identify SIP signaling, the core network can decapsulate the NAS packet and then forward the SIP signaling to the IMS domain.

In the embodiments of the present invention, three technical terms are used: voice service, RAN, and voice payload, and descriptions of the terms are as follows:
The voice service may be a 2G or 3G pure voice service, or may be a VoIP service, or may be an OTT (Over The Top) voice service. This is not limited in the embodiments of the present invention.

The RAN in the system architecture in the embodiments of the present invention may be a physical network device, or may be a virtual network device, or may be a RAN controller (controller), or may be any one of an evolved NodeB (EUTRAN NodeB, eNB), an RNC, a NodeB, a traffic gateway (Traffic Gateway), and a local switch (Local Switch), or a combination thereof. Control plane signaling and user plane data in the RAN may be carried in a same entity, or may be respectively carried in different entities. For example, when the RAN includes the RAN controller, both the control plane signaling and the user plane data are carried in the entity; or when the RAN includes the RAN controller and the traffic gateway, the control plane signaling is carried in the RAN controller, but the user plane data is carried in the traffic gateway. The voice payload, as a voice service data packet, neither includes an IPv4 or IPv6 packet header, nor includes an air interface L2 protocol packet header.

FIG. 2 is a schematic diagram of a system architecture according to an embodiment of the present invention. In FIG. 2, UE 1 to UE 4 are terminal devices; a RAN 1 to a RAN 3 are radio access network devices; a voice-dedicated core is a core network device; and an IP bearer network is an IP-based bearer network device. For a physical network device corresponding to each device, refer to the descriptions in the foregoing embodiments. Details are not described again herein. The UE 1 and the UE 2 are UEs that are within coverage of a same radio access network RAN 1. The UE 1 and UE 2 and the UE 3 are UEs within coverage of different RANs (RAN 1 and RAN 2) of a same core network device X. The UE 4 and UE 5 and the UE 1 to UE 3 are UEs that are in different core networks. An arrow direction in FIG. 2 is a transmission direction of voice data. This is described in detail in different application scenarios in subsequent embodiments.

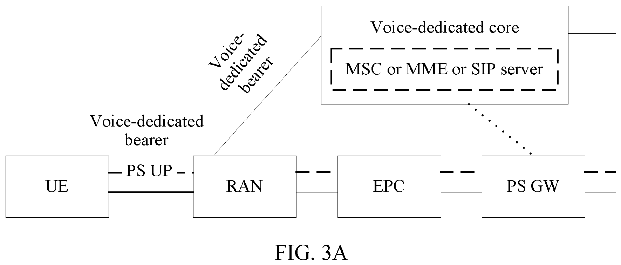

With reference to the system architecture shown in FIG. 2, in this embodiment of the present invention, there may be at least four optional CPs and UPs and corresponding optional network devices, respectively shown in FIG. 3A to FIG. 3D. Structures shown in FIG. 3A to FIG. 3D are all schematic structures on one terminal side, and structures on the other side are symmetric thereto, referring to FIG. 2. Details are not described again. The four application scenarios are described separately by using examples in the following embodiments.
I. As shown in FIG. 3A, a system architecture in this embodiment relates to UE, a RAN, an EPC, a packet switched (Packet Switching, PS) gateway (GateWay, GW), and a voice-dedicated core, where the voice-dedicated core may be an MSC or an MME or a SIP server. FIG. 3A further shows a packet switched user plane data bearer (PS User Plane) and a voice signaling dedicated bearer.
   Based on FIG. 3A, a control plane signaling connection of a voice service is established by using the voice-dedicated core, and the control plane signaling connection uses a voice signaling dedicated bearer. A signaling packet (for example, a voice service establishment request, a response, ring, off-hook, or on-hook) in a voice service execution process is transmitted by the voice signaling dedicated bearer to the voice-dedicated core for processing. The signaling packet may be carried in a radio resource control (Radio Resource Control, RRC) message in a form of a NAS packet, or may be a SIP signaling packet. For details, refer to three manners used during voice call connection establishment in the foregoing embodiments.
   In this embodiment, the voice-dedicated core may implement a plurality of control functions. For example, the voice-dedicated core may allocate a quality identifier (the RAN may determine a priority or a service type of the voice service based on the quality identifier, and further perform a corresponding air interface configuration) to the voice service, for example, quality of service (Quality of Service, QoS), a QoS class identifier (QoS Class Identifier, QCI), or another identifier that may indicate a connection priority or an identifier for describing a transmission requirement. The quality identifier may be given based on the type of the voice service, or may be further given based on at least one of subscription information of the voice service, an application (APP) that initiates the service (for example, WeChat, QQ, or Skype), and a sub type of the voice service (for example, a video call or voice call in the APP). Generally, a mapping relationship exists between the quality identifier and the service type or service priority. For example, if the quality identifier of the voice service is Q, after receiving the quality identifier Q, the RAN may identify the service as the voice service, and may further identify the subscription information of the service, the application (APP) that initiates the service (for example, WeChat, QQ, or Skype), the sub type of the voice service (for example, a video call or voice call in the APP), and the like, and therefore configure a signaling bearer and a data bearer of high priorities for the voice service, to ensure a success rate of sending the voice service and a delay.
   After a control plane connection of the voice service is established successfully, a conversation is started between UEs, that is, voice data transmission of a data plane is started.
   Voice data may be transmitted in a packet switched form. A data packet of the voice data may be a PS data packet including only an IP/TCP packet header, or may be a VoIP data packet. In comparison with the PS data packet, the VoIP data packet has a different packet header, and the packet header of the VoIP data packet may be IP/UDP or may be IP/UDP/RTP. For the PS data packet and the VoIP data packet, a protocol header may be further removed and only a voice payload is reserved, or an L2 header is removed, or only an identifier used to indicate a sequence of the data packet may be added to an L2 header.
   During transmission of the voice data, if quality management needs to be performed for the voice data, which data packets are voice data packets needs to be identified. For example, the RAN or a data gateway (data GW) needs to identify a voice data packet to manage quality of service. A service tag may be added to the packet header of the voice data, and the service identifier may be marked by any layer in a protocol stack processing the voice data packet, or may be added by a RAN entity. For example, after identifying a voice data packet (or identifying that a connection carries a voice service), a RAN controller (controller) or a base station adds the service tag before forwarding the voice data packet to the data GW. It may be understood that, if the data GW can identify the voice data packet, a local GW may also add a service tag. Based on the service identifier, a network device can identify the voice data packet. With reference to the quality identifier allocated by the voice-dedicated core, a priority of sending the voice data packet may be increased, and therefore, a packet loss and a delay can be reduced, thereby ensuring voice quality. Based on the foregoing descriptions, there are at least the following four possibilities of voice data transmitted on an air interface between the UE and the RAN:
   1. PS data packet and VoIP data packet.
   2. Improvement based on a PS data packet:
      2.1. Direct transparent transmission in L2, that is, no packet header is added in L2.
      2.2. Similar to an L2 unacknowledged mode (Unacknowledged Mode, UM), when a voice data packet arrives at each L2 sub layer, a corresponding header (header) is added, so that a receive end can identify a sequence of the voice data packet and further correctly decode the voice data packet, where the header is used to identify the sequence of the voice data packet. The whole L2 may not include other information.

      In this embodiment, if the UE supports only a VoIP data packet, in a downlink direction, after receiving a PS data packet sent by the RAN, the UE first converts the received PS data packet into a VoIP data packet; in an uplink direction, the UE may first convert a VoIP data packet into a PS data packet, and then send, by using the air interface, voice data carried in the PS data packet to the RAN.
   3. Improvement based on a VoIP data packet:
      3.1. Direct transparent transmission in L2, that is, no packet header is added in L2;
      3.2. Similar to an L2 unacknowledged mode (Unacknowledged Mode, UM), when a voice data packet arrives at each L2 sub layer, a corresponding header (header) is added, so that a receive end can identify a sequence of the voice data packet and further correctly decode the voice data packet, where the header is used to identify the sequence of the voice data packet. The whole L2 may not include other information.
   4. Voice payload. In this case, a packet header may be removed from a voice data packet based on any format, or no packet header is originally added at a source of the voice data.

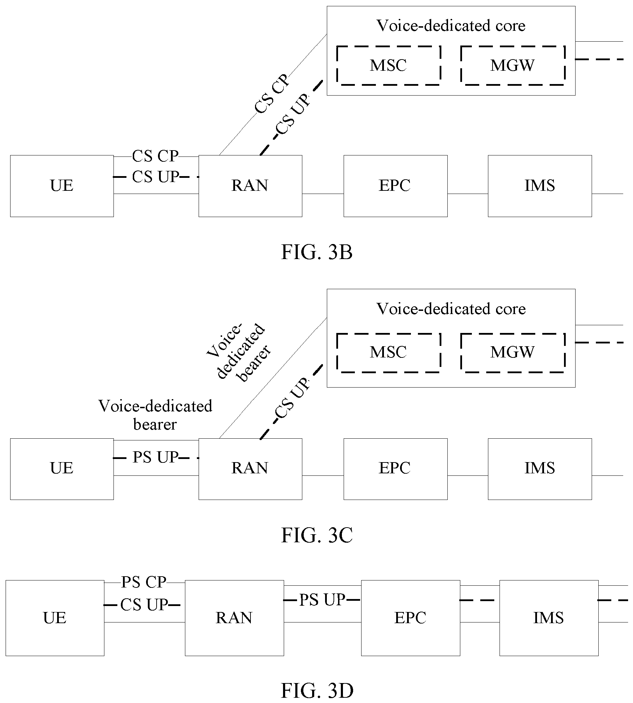

   When a voice payload is transmitted on the air interface, configuration information of the voice payload, for example, context information, may be first exchanged between the UE and the RAN, so that a receive end of the voice data packet can restore the original voice data packet. For example, the UE and the RAN exchange a context for transmitting a VoIP data packet, so that the receive end of the air interface restores the VoIP data packet based on the context.
   Based on the foregoing descriptions, it can be learned that, in this embodiment of the present invention, the voice data may include at least the following representation forms: 1. voice data packet, that is, the voice data is carried in a data packet, for example, a PS data packet, a VoIP data packet, a PS data packet or VoIP data packet without L2, or a PS data packet or VoIP data packet with L2 including only information indicating a sequence between voice data packets; and 2. voice payload, that is, in network transmission, there is only a voice data payload, and no packet header of a data packet is included.
II. As shown in FIG. 3B, a system architecture in this embodiment relates to UE, a RAN, an EPC, an IMS, and a voice-dedicated core, where the voice-dedicated core may be an MSC or an MGW. FIG. 3B further shows a circuit switched user plane data bearer (CS User Plane) and a circuit switched control plane signaling bearer CS Control Plane. In this embodiment, a control plane and a user plane between a core network and the RAN and those between the RAN and the UE are all based on CS.
   In this embodiment, a voice service core network side uses a CS CN-like mechanism, to be specific, introduces the voice-dedicated core dedicated to establishing a control plane signaling connection of a voice service and/or carrying a user plane data service. The voice-dedicated core has a function similar to that of the MSC or the MSC plus the MGW, and is configured to transmit the voice service with reference to a 5G slice (slice) mechanism, for example, allocating a dedicated voice slice resource in a 5G network. In this case, a dedicated voice core unit may need to be configured to manage a voice slice (voice slice), for example, allocate a subcarrier-level resource and configure a specific TTI duration. A main control plane procedure of the voice service in the network architecture shown in FIG. 3B is as follows:
   (1) The UE initiates a voice service, and establishes a voice-dedicated bearer between the UE and the RAN.
      Specifically, the UE may add, to an RRC connection establishment request, an indication used to notify that the RRC connection request is a voice service. After identifying the indication of the voice service, the RAN side establishes an RRC connection of the voice service, and configures a corresponding dedicated signaling bearer, where the bearer may be a CS-based dedicated signaling bearer in FIG. 3B.
   (2) The UE initiates, on the dedicated bearer, a voice call signaling flow for establishing a connection between the UE and the voice-dedicated core.
      Specifically, information required for a voice call, for example, information such as authentication, a service request, connection establishment, mobility management (Mobility Management, MM), or voice control (Call Control, CC), may be carried in a NAS message or SIP signaling in an RRC message, and sent to the voice-dedicated core. The information may be transmitted in the RAN in transparent mode, or may be parsed by the RAN side.
   (3) The voice-dedicated core establishes a connection between the voice-dedicated core and called UE, similar to the calling-side UE, completes an end-to-end connection between the calling UE and the called UE, and establishes a voice call service.

   In this embodiment, voice data is carried on a CS-based voice-dedicated connection. Therefore, the voice data may be a voice payload, or a voice payload and configuration information of the voice payload.
III. As shown in FIG. 3C, a system architecture in this embodiment relates to UE, a RAN, an EPC, an IMS, and a voice-dedicated core, where the voice-dedicated core may be deployed in an MSC or an MGW. FIG. 3C further shows a circuit switched user plane data bearer (CS User Plane), a packet switched user plane data bearer (PS User Plane), and a circuit switched control plane signaling bearer CS (Control Plane). In this embodiment, both a control plane between a core network and the RAN and a control plane between the RAN and the UE are based on CS domain, a user plane between the core network and the RAN is based on CS domain , and a user plane between the RAN and the UE is based on PS domain.

A difference from the application scenario shown in FIG. 3B lies in that an air interface data plane bearer between the RAN and the UE in this embodiment is modified from a CS-based bearer to a PS-based bearer, and therefore the difference lies in air interface processing. In the application scenario shown in FIG. 3B, the user plane data is sent on the air interface by using a CS voice packet. User plane data in this embodiment may be sent on an air interface by using a CS voice packet in a form of a PS-domain based data packet. Specifically, a plurality of voice packets of one user or voice packets of a plurality of users may be sent on one transport block TB of the air interface. Because data transmitted on a single TB becomes larger, to ensure coverage, with reference to a TTI bundling technology, content on one TB may be transmitted in several consecutive timeslots for a plurality of times, where a quantity of TTIs during each bundling may be configured by a network side or may be a default value.

In this embodiment, whichever encoding mode is used by the core network, a quantity of voice service flows finally output is 1. A plurality of sub flows may be combined on the core network, or may be sent by the core network to the RAN side and the RAN side performs processing, or after voice sub flows output by the RAN arrive at an L2 layer, L2 processing may be performed and only one voice service flow is output.

In this embodiment, for a data packet transmitted on the air interface between the UE and the RAN, refer to the embodiment corresponding to FIG. 3A. A difference lies in that a fourth type of voice data packet (a voice payload, or a voice payload and configuration information) is not used in this embodiment.

In addition, the voice data packet may directly arrive at a physical layer without L2 processing, or L2 is not required in a design of the whole architecture. That the voice data packet directly arrives at a physical layer may accelerate transmission efficiency of the voice data packet, reduce an amount of data processing, and therefore enhance transmission efficiency of the voice data packet.

In addition, L2 processing may also be performed. In this process, an L2 packet header, for example, a Packet Data Convergence Protocol (Packet Data Convergence Protocol, PDCP) header (header), a radio link control (Radio Link Control, RLC) header, or a Medium Access Control (Medium Access Control, MAC) header, may be added to the voice data packet, where the packet header may include content such as a type of the data packet, a sequence number (sequence number, SN) of the data packet, a multiplexing flag, an identifier of a logical channel, a size of the data packet, and a quantity of data packets. Generally, during L2 processing, a voice packet needs to be sent as soon as possible, to ensure that the voice packet arrives at the physical layer in order. To ensure that an error rate of the voice data packet meets a requirement, a hybrid automatic repeat request (Hybrid Automatic Repeat Request, HARQ) may need to be configured. In this embodiment, assuming that the UE does not support CS voice data, in a downlink direction, after receiving a voice payload transmitted by the RAN, the UE first restores the voice payload into a VoIP data packet; in an uplink direction, the UE converts a VoIP data packet into a voice payload, and then sends the voice payload to the RAN by using the air interface. To facilitate conversion between a VoIP packet and a voice payload on two sides, the RAN and the UE may exchange a related context beforehand, for example, VoIP packet header information. IV. As shown in FIG. 3D, a system architecture in this embodiment relates to UE, a RAN, an EPC, and an IMS. FIG. 3D further shows a circuit switched user plane (CS UP), a packet switched uplink (PS UP), and a PS CP. In this embodiment, both a control plane between a core network and the RAN and a control plane between the RAN and the UE are based on PS, a user plane between the core network and the RAN is based on PS, and a user plane between the RAN and the UE is based on CS.

This embodiment is improved based on a VoIP solution. Specifically, control plane signaling is based on IMS SIP signaling, and a difference between a PS-based voice VoIP data packet of a voice service and an ordinary PS data packet lies in that a packet header of the ordinary PS data packet is IP/TCP, but the PS data packet of the voice VoIP includes an IP/UDP packet header or includes an IP/UDP/RTP packet header.

In this embodiment, for the data packet transmitted on the air interface between the UE and the RAN, refer to the embodiment corresponding to FIG. 3A. In view of a problem that a percentage of packet headers in VoLTE voice transmission is excessively high, the voice data packet transmitted on the air interface between the RAN and the UE may be optimized in this embodiment. Details are as follows:
In a downlink direction, the RAN side removes an IP packet header (including an IP/UDP/RTP header) of a voice packet, and sends only a voice payload, or a voice payload and configuration information of a voice payload on an air interface resource. Optionally, to ensure that a receive end can learn a sequence of the voice data packet, necessary indication information may be introduced. Further, after receiving the voice payload, the receive end may add a corresponding packet header based on configuration information (for example, a context), and therefore restore the voice payload into a VoIP data packet, so that a voice decoder of the UE parses voice information. In addition, for L2 processing of the voice data packet and mapping on the air interface, refer to the embodiment corresponding to FIG. 3A.

In the embodiments corresponding to FIG. 3A to FIG. 3D, both the control plane signaling and the user plane data of the UE need to be transmitted on the air interface between the UE and the RAN. Based on a 5G slice mechanism, considering management of a voice slice on the air interface, for example, allocation of subcarrier-level resources, and configurations of TTI durations, a specific solution is as follows:
A. Frequency division multiplexing (Frequency Division Multiplexing, FDM): A voice payload is mapped to one or several subcarriers, and frequency selective fading is resolved by using frequency hopping. A specific frequency hopping mechanism is as follows:
   (1) Based on a pre-agreed frequency hopping mechanism (pattern), the voice payload is carried on one or several subcarriers, and frequency hopping between subcarriers (or subcarrier groups) is performed based on the pre-agreed frequency hopping mechanism to obtain a frequency selective gain.
   (2) Air interface resources are classified into a voice-dedicated subcarrier and a common reserved subcarrier. In normal mode, the voice payload is transmitted on one or several fixed subcarriers. When it is detected that signal strength of a subcarrier in normal mode is lower than a threshold, a subcarrier of better quality may be selected on a common reserved subcarrier resource, for transmitting the voice payload by frequency hopping. If the frequency hopping transmission is used, a frequency hopping rule needs to be indicated on a control channel to the receive end, so that the receive end can receive the voice data on a correct subcarrier.

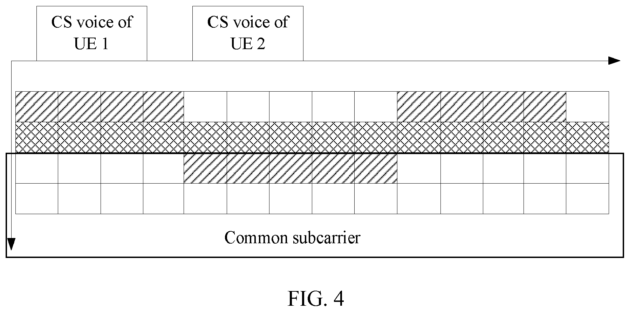

   For example, in FIG. 4, a CS voice service of the UE always occupies a subcarrier 1; at T4, signal quality of the subcarrier 1 becomes poor, and the CS voice service of the UE 1 occupies a common subcarrier 3 for performing the voice service; and after it is detected that quality of the subcarrier 1 becomes good, the CS voice service of the UE 1 reoccupies the subcarrier 1. A CS voice service of the UE 2 always occupies a subcarrier 2.
   It should be noted that, a granularity of a radio resource carrying a voice is not limited in this embodiment. A time granularity in an embodiment may be a radio frame level, or may be a subframe level, or may be a timeslot level, or may be a symbol level. A frequency granularity may be at least a minimum subcarrier of an air interface resource. Using LTE as an example, each subcarrier is 15 kHz.
B. Code division multiplexing (Code Division Multiplexing, CDM): A voice-dedicated frequency band is configured, and code division multiplexing is performed on different voice data.
   This is similar to processing of 3G voice data. A dedicated frequency band, for example, 5 MHz, is allocated from an air interface spectrum resource. Voice services of different UEs use the whole dedicated frequency band, and different UEs are distinguished by using different orthogonal codes. An orthogonal code resource may be allocated during establishment of a voice service connection.
C. Time division multiplexing (Time Division Multiplexing, TDM): A voice-dedicated frequency band is configured, and time division multiplexing is performed on different voices.

This is similar to a CDM mechanism. A difference lies in that different UEs use different time segments to implement voice services. A time segment of transmitting voice data by each UE may be allocated during establishment of a voice service connection.

Both the control plane signaling and the user plane data in the foregoing TDM, CDM, and TDM mechanisms may be voice payloads. Therefore, the voice payload may be directly delivered to the physical layer for processing. To be specific, if L2 (PDCP/RLC/MAC) exists, no processing is required either, or it may be understood that L2 is not required in the solution of this embodiment of the present invention.

Depending on a voice coding technology of the core network, voice coding may be performed on the voice data based on an adaptive multi rate (Adaptive Multi Rate, AMR), or voice coding may be performed based on enhanced voice service (Enhanced Voice Service, EVS) coding or another voice coding technology. For AMR voice coding, because the voice service includes three sub flows, performance of the voice service can be ensured. Therefore, HARQ retransmission may not need to be performed. For EVS voice coding, the voice service sent by the core network includes only one sub flow, and HARQ retransmission may be configured based on a requirement to ensure quality of the voice service. In other voice coding technologies, whether HARQ retransmission needs to be configured may also be determined based on a quantity of sub flows.

To reduce complexity of signaling processing, a complex IMS system including a plurality of functional entities may also be simplified properly. For example, a simple SIP processing procedure commonly used in a current OTT (Over The Top) voice solution is used. In a current VoLTE system, IMS systems of different operators may use different signaling codes for a same function, for example, an ACK message. Consequently, a problem of VoLTE interconnection between different operators is caused. To resolve the problem of VoLTE interconnection between the operators, SIP signaling may be further defined based on a standard, so that one function has only one signaling code.

The UE-RAN-CN architectures and available solutions of the air interface are described in the foregoing embodiments. In the following embodiments, complete end-to-end service procedures based on the foregoing architectures are described in detail. Details are as follows:
As shown in FIG. 2, a solid-line connection indicates a communications connection, which may be a user data plane bearer or a control plane bearer. A line with an arrow indicates a transmission direction of voice data. A control plane bearer of a voice service of UE is established on the RAN side, and is connected by the RAN and the voice-dedicated core. In an application scenario that spans the voice-dedicated core, signaling needs to be exchanged by using the voice-dedicated core. The control plane bearer of the voice service may also be based on a dedicated bearer on the air interface. In the architecture shown in FIG. 2, the voice-dedicated core is mainly used for functions such as security, authentication, and encryption during establishment of an initial signaling connection. The RAN allocates a bearer required for establishing the control plane bearer, for example, configures parameters such as an RB, a radio access bearer (Radio Access Bearer, RAB), a QCI, and QoS. When the architecture shown in FIG. 2 is used, control plane signaling and user plane data in the RAN may be processed by a same entity (or example, the RAN controller), or may be separately processed by different entities, for example, the RAN controller and the data gateway.

A bearer path for the user plane data of the voice service of the UE may be determined based on a location relationship of the UE in the network. For example, the line with the arrow shown in FIG. 2 may also be used to indicate a control plane signaling bearer, and one type of line indicates one path. Specifically, the following types are included:
1. Both the UE 1 and the UE 2 are in the RAN 1, and related parameters, for example, an RB, a RAB, a QCI, and QoS, may be allocated by the RAN 1 to control plane signaling of the UE 1 and the UE 2. The RAN 1 is connected to the voice-dedicated core X, and is mainly configured to transmit parameters such as security, authentication, and encryption between the UE and the voice-dedicated core X. Voice data of the UE 1 and the UE 2 may be transmitted in the RAN 1 without passing through the core network, and this reduces an unnecessary voice call delay. Optionally, the core network may also collect necessary statistics about the voice service. In this application scenario, the RAN 1 may also send the voice data to the voice-dedicated core X, and then the voice-dedicated core X forwards the voice data back to the RAN 1, and the voice data arrives at the UE 2.
2. The UE 1 and the UE 3 are respectively in the RAN 1 and the RAN 2. Because the RAN 1 and the RAN 2 belong to the same voice-dedicated core X, control plane signaling between the UE 3 and the voice-dedicated core X may be directly configured by the voice-dedicated core X, or may be configured by the voice-dedicated core X to the RAN 1, and then forwarded by the RAN 1 to the RAN 2 of the UE 3. Voice data may also be transmitted in two modes. In mode 1, voice data of the UE 1 is sent to the RAN 1, forwarded by the RAN 1 to the voice-dedicated core X, then forwarded by the voice-dedicated core X to the RAN 2, and then forwarded by the RAN 2 to the UE 3. In mode 2, an interface is established between the RAN 1 and the RAN 2, and voice data of the UE 1 is sent to the RAN 1, forwarded by the RAN 1 to the RAN 2, and then forwarded by the RAN 2 to the UE 3.
3. The UE 1 and the UE 4 belong to the voice-dedicated core X and a voice-dedicated core Y respectively, and voice control plane signaling and a user plane data service of the UE 1 and the UE 4 may be forwarded by the voice-dedicated core X and the voice-dedicated core Y.
   In this case, voice data of the UE 1 is sent to the RAN 1, then forwarded by the RAN 1 to the voice-dedicated core X, then forwarded by the voice-dedicated core X to the voice-dedicated core Y, then forwarded by the voice-dedicated core Y to the RAN 3, and then forwarded by the RAN 3 to the UE 4.
4. The UE 1 and the UE 5 belong to the voice-dedicated core X and a voice-dedicated core Y respectively. In this case, an end-to-end VoIP call may exist. Control plane signaling of the UE 1 and the UE 5 is connected by using the voice-dedicated core X and the voice-dedicated core Y, and user plane data services of the UE 1 and the UE 5 are transmitted by using the IP bearer network. In this process, voice data may be forwarded by the data gateway (Gateway, GW) to the IP bearer network, or voice data may be processed by the voice-dedicated core and then forwarded to the IP bearer network. Specifically, configurations may be performed based on the network-side architecture and functions of the core network.

In the foregoing descriptions about FIG. 2, different user data plane and control plane connection modes are used based on different locations of end-to-end UEs. Whichever architecture is used, transmission needs to be performed by using the air interface between the RAN and the UE finally. For a technology for transmitting the voice data on the air interface, refer to the descriptions in the foregoing embodiments. The voice data may be a pure voice payload, or may be a PS data packet including an IP/TCP packet header, or may be a VoIP data packet. The transmission technology may be a TDM, CDM, or FDM mode, or the like. L2 processing and a HARQ may also be selected based on a requirement.

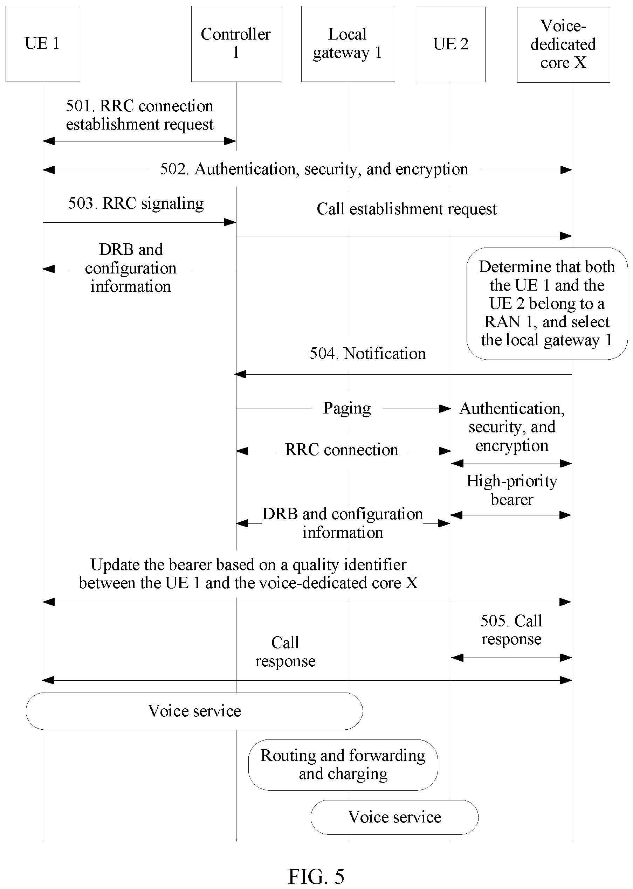

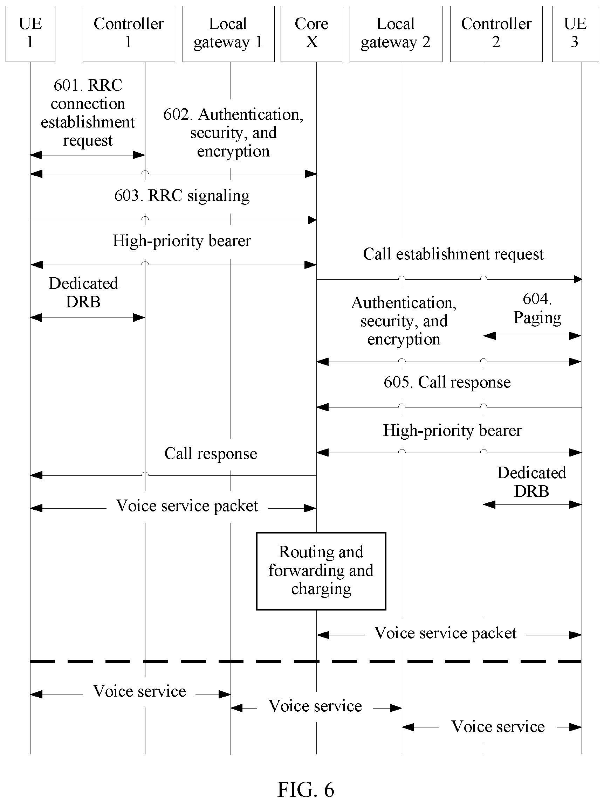

In the following embodiments, call establishment procedures in the two application scenarios in the foregoing embodiments are described by using examples.
I. UE 1 serves as a caller, and calls UE 2. As shown in FIG. 5, and referring to FIG. 2, a controller 1 and a local gateway 1 correspond to a RAN 1. Details are as follows:
   501. UE 1 initiates establishment of an RRC connection between the UE 1 and a RAN 1.
   Specifically this step may be as follows: The UE 1 sends an RRC connection establishment request message to a controller 1, where the RRC connection establishment request message carries another service type, for example, a conventional voice service or an APP voice service; and if the service type is the APP voice service, a specific APP category (category) may be further indicated.
   502. The UE 1 performs procedures such as authentication, security, and encryption with a CN side by using the RAN 1.
   503. The UE 1 initiates a call establishment request in RRC signaling, where the call establishment request includes call information such as number information of the UE 1, number information of UE 2, a bearer capability required by a call, and a media type supported by the UE 1.
   The call information may be carried in RRC signaling in transparent mode. The RAN 1 does not process the call information, but only forwards the call information to a voice-dedicated core X. The RAN 1 may allocate an air interface data radio bearer (Data Radio Bearer, DRB), configuration information of the UE 1 and the voice-dedicated core X, and the like to the UE 1. The controller 1 establishes a corresponding SRB radio bearer between the controller 1 and the UE 1 based on the service type of the UE.
   Optionally, whether the RAN processes the call information may be determined based on an indication carried in the RRC signaling. In this case, the RRC signaling may carry indication information, where the indication information is used to indicate home location information of the UE 2. For example, the UE 2 is in the same RAN, or the same voice-dedicated core, or different voice-dedicated cores. In this embodiment, the UE 2 should be in the same RAN. Optionally, the RRC signaling of the call establishment request may further carry a corresponding information element indicating call information. In this case, the RAN may directly identify a paging range of the call based on the information in the information element.
   504. After receiving the call establishment request, the voice-dedicated core X determines that both the UE 1 and the UE 2 belong to the RAN 1. The voice-dedicated core X selects a corresponding local gateway 1, and sends, to the RAN 1, information notifying that both the UE 1 and the UE 2 belong to the RAN 1, and assigns a local gateway (Local GW 1) for the call.
   The RAN 1 pages the called UE 2 in a control range of the RAN 1, establishes an RRC connection and an SRB radio bearer between the UE 2 and the RAN 1 for the UE 2, and a high-priority bearer based on a quality identifier between the UE 2 and the voice-dedicated core X, and allocates a corresponding DRB and configuration information to the UE 2. The RAN 1 also establishes a high-priority bearer between the UE 1 and the voice-dedicated core X for the UE 1. If required, the RAN 1 updates, based on the high-priority bearer and/or subscription information of the APP category and/or the service type, the bearer based on the quality identifier between the UE 1 and the voice-dedicated core X (updates a dedicated DRB corresponding to the UE 1). The foregoing first DRB may be a temporary data radio bearer, and its priority may be relatively low.
   In the foregoing procedure, the UE 2 may also perform procedures such as authentication, security, and encryption with the CN side by using the RAN 1.
   505. The voice-dedicated core X receives a call response after the UE 2 is called successfully, and forwards the call response to the UE 1. Then a voice service may be started. The local gateway 1 may perform functions such as routing and forwarding and charging for voice data between the UE 1 and the UE 2 based on an instruction of the controller 1.
   Because the calling UE 1 and the called UE 2 both belong to the RAN 1, after the voice service of the calling UE 1 and the called UE 2 arrives at a routing local switch (switch) or a GW on the RAN 1 side during a call process, based on information obtained from the controller 1 on the RAN 1 side, it is determined, after routing processing only, that the voice service packet does not need to be forwarded to the core X, and the voice service packet may be transmitted only in the RAN 1.
II. UE 1 serves as a caller, and calls UE 3. As shown in FIG. 6, and referring to FIG. 2, a controller 1 and a local gateway 1 correspond to a RAN 1, and a controller 2 and a local gateway 2 correspond to a RAN 2. Details are as follows:
   601. UE 1 initiates establishment of an RRC connection between the UE 1 and a RAN 1.

Specifically this step may be as follows: The UE 1 sends an RRC connection establishment request message to a controller 1, where the RRC connection establishment request message carries another service type, for example, a conventional voice service or an APP voice service; and if the service type is the APP voice service, a specific APP category (category) may be further indicated.

602. The UE 1 performs procedures such as authentication, security, and encryption with a CN side by using the RAN 1.

603. The UE 1 initiates a call establishment request in RRC signaling, where the call establishment request includes call information such as number information of the UE 1, number information of UE 3, a bearer capability required by a call, and a media type supported by the UE 1.

604. The RAN 1 cannot identify a location of the UE 3 in the call establishment request, or identifies that the UE 3 does not belong to a control range of the RAN 1. The RAN 1 forwards the received call information to a voice-dedicated core X, and the voice-dedicated core X pages the UE 3. Based on a high-priority bearer based on a quality identifier between the UE 1 and the voice-dedicated core X, and/or subscription information of the APP category and/or the service type, the RAN 1 establishes a corresponding dedicated DRB. Correspondingly, based on a high-priority bearer based on a quality identifier between the UE 2 and the voice-dedicated core X, and/or the subscription information of the APP category and/or the service type, the RAN 2 establishes a corresponding dedicated DRB.

605. The voice-dedicated core X receives a call response after the UE 3 is called successfully, and forwards the call response to the UE 1. Then a voice service may be started. The local gateway 1 may perform functions such as routing and forwarding and charging for voice data between the UE 1 and the UE 2 based on an instruction of the voice-dedicated core X.

Voice data forwarding may be specifically as follows:
Solution 1: A voice service is indicated above a dotted line: The voice-dedicated core X notifies the RAN 1 that the UE 3 belongs to a RAN 2 having a direct interface with the RAN 1. After the voice service of the calling UE 1 arrives at the local switch or the GW on the RAN 1 side, the voice service may not be forwarded to the core X based on information obtained from the controller 1 (controller 1) on the RAN 1 side, but the voice data is forwarded to the RAN 2 directly by using the direct interface between the RAN 1 and the RAN 2.
Solution 2: A voice service is indicated below a dotted line: If a direct interface exists between the RAN 1 and the RAN 2, a voice service packet may be forwarded to the RAN 2 without using the voice-dedicated core X. If there is no interface between the RAN 1 and the RAN 2, voice data is forwarded by using the voice-dedicated core X.

A difference between the procedure shown in FIG. 6 and the procedure shown in FIG. 5 lies in RAN spanning, and the procedures are similar. For other application scenarios, refer to the descriptions about the foregoing two procedures. Details are not described again herein.

Based on the foregoing descriptions, an embodiment of the present invention provides a voice data transmission control solution, including a method and an apparatus. The following explains all terms used in the solution:
first data connection: between a RAN on a calling terminal side and a calling terminal;
second data connection: between a RAN on a calling terminal side and a core network;
third data connection: between a core network and a called terminal, through a RAN on a called terminal side;
fourth data connection: between a RAN on a calling terminal side and a called terminal;
fifth data connection: between a RAN on a calling terminal side and a RAN on a called terminal side;
sixth data connection: between a RAN on a called terminal side and a core network;
seventh data connection: between a called terminal and a RAN on a called terminal side;
first voice data packet: sent by a calling terminal, and including a payload and L2;
second voice data packet: voice data packet sent by a calling terminal, including a voice payload, and carrying, in L2, identifier information used to indicate a sequence of the second voice data packet;
third voice data packet: voice data packet sent by a calling terminal, including a voice payload and a VoIP header, and carrying, in L2, identifier information used to indicate a sequence of the third voice data packet;
fourth voice data packet: voice data packet sent by a called terminal, and including a voice payload and L2;
fifth voice data packet: voice data packet sent by a called terminal, including a voice payload, and carrying, in L2, identifier information used to indicate a sequence of the fifth voice data packet; and
sixth voice data packet: voice data packet sent by a called terminal, including a voice payload and a VoIP header, and carrying, in L2, identifier information used to indicate a sequence of the sixth voice data packet.

It may be understood that, if the calling terminal and the called terminal belong to a same RAN, that is, if the RAN on the calling terminal side and the RAN on the called terminal side are the same RAN, the third data connection includes the fourth data connection. The fifth data connection may be understood as transmission of data in the RAN.

In subsequent embodiments, there are also expressions such as "first" to "third" for distinguishing configuration information, "first" to "sixth" for distinguishing voice data packets, and "first" to "third" for distinguishing signaling connections. The foregoing numbers are merely intended for distinguishing a same technical term, but do not have other technical meanings, for example, should not be understood as a sequence of data connections and therefore should not be understood as having other technical limitations.

Based on the foregoing descriptions, an embodiment of the present invention provides a voice data transmission control method. The method is applied to a radio access network device on a calling terminal side, and includes the following steps.

701. After receiving a connection establishment request from a calling terminal, a radio access network device sends first configuration information to the calling terminal, and establishes a voice-dedicated domain based first signaling connection between the radio access network device and the calling terminal based on the first configuration information.

Optionally, the voice-dedicated domain is a CS domain or an Internet Protocol multimedia subsystem IMS domain.

702. The radio access network device receives, by using the first signaling connection, a call establishment request sent by the calling terminal.

Optionally, the call establishment request sent by the calling terminal is transmitted by using any one of the following signaling connections: non-access stratum NAS signaling, Session Initiation Protocol SIP signaling, and SIP signaling carried in NAS signaling.

703. The radio access network device sends the call establishment request to the core network device, and establishes a voice-dedicated domain based second signaling connection between the radio access network device and the core network device.

In this embodiment of the present invention, a voice service is established by using a voice-dedicated domain based signaling connection, and an IMS does not need to be superposed on a core network. Therefore, a functional network element for voice transmission control can be simplified, a delay in a service establishment procedure is reduced, and efficiency of service establishment is improved.

Further, this embodiment of the present invention further provides a specific data connection establishment procedure. There are mainly the following three possibilities:
Solution 1: The call establishment request carries identifier information of a called terminal; the identifier information of the called terminal is used by the radio access network device or the core network device to identify the called terminal; and after the radio access network device sends the call establishment request to the core network device, the method further includes: the radio access network device receives a call response from the core network device, sends the call response to the calling terminal, and establishes a PS domain based second data connection dedicated to carrying voice data, between the radio access network device and the core network device; and the radio access network device receives second configuration information from the core network device, and establishes a PS domain based first data connection dedicated to carrying the voice data, between the radio access network device and the calling terminal based on the second configuration information.
Solution 2: The call establishment request carries identifier information of a called terminal; the identifier information of the called terminal is used by the radio access network device or the core network device to identify the called terminal; and after the radio access network device sends the call establishment request to the core network device, the method further includes: the radio access network device receives a call response from the core network device, sends the call response to the calling terminal, and establishes a CS domain based second data connection dedicated to carrying voice data, between the radio access network device and the core network device; and the radio access network device receives second configuration information from the core network device, and establishes a CS domain based first data connection dedicated to carrying the voice data, between the radio access network device and the calling terminal based on the second configuration information.
Solution 3: The call establishment request carries identifier information of a called terminal; the identifier information of the called terminal is used by the radio access network device or the core network device to identify the called terminal; and after the radio access network device sends the call establishment request to the core network device, the method further includes: the radio access network device receives a call response from the core network device, sends the call response to the calling terminal, and establishes a CS domain based second data connection dedicated to carrying voice data, between the radio access network device and the core network device; and the radio access network device receives second configuration information from the core network device, and establishes a PS domain based first data connection dedicated to carrying the voice data, between the radio access network device and the calling terminal based on the second configuration information.

Because the calling terminal and the called terminal may have a plurality of relative position relationships, based on different relative position relationships, the data connection may be established in different modes. For ease of understanding, refer to FIG. 2. Details are as follows: Before the second data connection is established, the method further includes:
the radio access network device obtains a home location of the called terminal; and
the radio access network device may perform any one of the following:
   if both the called terminal and the calling terminal are in a service range of the radio access network device, the radio access network device establishes a fourth data connection between the radio access network device and the called terminal; or
   if the called terminal is in a service range of another radio access network device in a service range of the core network device, the radio access network device establishes a second data connection between the radio access network device and the core network device, or establishes a fifth data connection between the radio access network device and the another radio access network device; or
   if the called terminal is beyond a service range of the core network device, the radio access network device establishes a second data connection between the radio access network device and the core network device.

Further, this embodiment of the present invention further provides a specific implementation solution for transmitting voice data, and mainly relates to voice data transmitted on an air interface. Details are as follows:
Corresponding to the data connection mode of the solution 1, this embodiment of the present invention provides a caller uplink voice data transmission solution, and the method further includes:
the radio access network device receives the voice data by using the first data connection, where the voice data includes a voice payload; and the radio access network device sends the voice payload to the core network device by using the second data connection; or
the method further includes:
   the radio access network device receives the voice data by using the first data connection, where the voice data includes a voice payload and configuration information of the voice payload; and
   the radio access network device restores a protocol header of the voice payload based on the configuration information to obtain a voice data packet carrying the protocol header, and sends the voice data packet carrying the protocol header to the core network device by using the second data connection; or sends the configuration information and the voice payload to the core network device by using the second data connection; or
   the method further includes:
      the radio access network device receives the voice data by using the first data connection, where the voice data includes a first voice data packet, and the first voice data packet includes a voice payload and a data link layer L2 protocol header; and the radio access network device sends the first voice data packet to the core network device by using the second data connection; or
      the method further includes:
         the radio access network device receives the voice data by using the first data connection, where the voice data includes a second voice data packet, and the second voice data packet includes a voice payload and carries identifier information used to indicate a sequence of the second voice data packet; and the radio access network device sends the second voice data packet to the core network device by using the second data connection; or
      the method further includes:
         the radio access network device receives the voice data by using the first data connection, where the voice data includes a third voice data packet, and the third voice data packet includes a voice payload and a voice over Internet Protocol VoIP protocol header and carries identifier information used to indicate a sequence of the third voice data packet; and the radio access network device sends the third voice data packet to the core network device by using the second data connection.

In this embodiment of the present invention, the transmitted voice data may be further in a form of VoIP data packet + L2 protocol header, that is, the voice data packet includes a VoIP data packet and carries a data link layer L2 protocol header.

It should be noted that, in this embodiment of the present invention, the configuration information of the voice payload may be transmitted by using a signaling connection. Therefore, in this embodiment of the present invention, the first signaling connection may be used to receive the configuration information of the voice payload, and the second signaling connection is used to send the configuration information of the voice payload.

Corresponding to the data connection mode of the solution 1, this embodiment of the present invention provides a caller downlink voice data transmission solution, and the method further includes:
the radio access network device receives the voice data from the called terminal by using the second data connection, where the voice data includes a voice payload; and
the radio access network device sends the voice payload to the calling terminal by using the first data connection; or
the method further includes:
   the radio access network device receives the voice data by using the second data connection, where the voice data includes a voice payload and configuration information of the voice payload; and
   the radio access network device restores a protocol header of the voice payload based on the configuration information to obtain a voice data packet carrying the protocol header, and sends the voice data packet carrying the protocol header to the calling terminal by using the first data connection; or sends the configuration information and the voice payload to the calling terminal by using the first data connection; or the method further includes:
      the radio access network device receives the voice data from the called terminal by using the second data connection, where the voice data includes a fourth voice data packet, and the fourth voice data packet includes a voice payload and an L2 protocol header; and the radio access network device sends the fourth voice data packet to the calling terminal by using the first data connection; or
      the method further includes:
         the radio access network device receives the voice data from the called terminal by using the second data connection, where the voice data includes a fifth voice data packet, and the fifth voice data packet includes a voice payload and carries identifier information used to indicate a sequence of the fifth voice data packet; and the radio access network device sends the fifth voice data packet to the calling terminal by using the first data connection; or
         the method further includes: the radio access network device receives the voice data by using the second data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and the radio access network device sends the sixth voice data packet to the calling terminal by using the first data connection.

In this embodiment of the present invention, the transmitted voice data may be further in a form of VoIP data packet + L2 protocol header, that is, the voice data packet includes a VoIP data packet and carries a data link layer L2 protocol header.

It should be noted that, in this embodiment of the present invention, the configuration information of the voice payload may be transmitted by using a signaling connection. Therefore, in this embodiment of the present invention, the second signaling connection may be used to receive the configuration information of the voice payload, and the first signaling connection is used to send the configuration information of the voice payload.

Corresponding to the data connection mode of the solution 2, the method further includes:
the radio access network device receives the voice data by using the first data connection, where the voice data includes a voice payload; and the radio access network device sends the voice payload to the core network device by using the second data connection; or
the method further includes:
   the radio access network device receives the voice data by using the first data connection, where the voice data includes a voice payload and configuration information of the voice payload; and
   the radio access network device restores a protocol header of the voice payload based on the configuration information to obtain a voice data packet carrying the protocol header, and sends the voice data packet carrying the protocol header to the core network device by using the second data connection; or sends the configuration information and the voice payload to the core network device by using the second data connection.

It should be noted that, in this embodiment of the present invention, the configuration information of the voice payload may be transmitted by using a signaling connection. Therefore, in this embodiment of the present invention, the first signaling connection may be used to receive the configuration information of the voice payload, and the second signaling connection is used to send the configuration information of the voice payload.

Corresponding to the data connection mode of the solution 2, this embodiment of the present invention provides a caller downlink voice data transmission solution: the radio access network device receives the voice data from the called terminal by using the second data connection, where the voice data includes a voice payload; and the radio access network device sends the voice payload to the calling terminal by using the first data connection; or
the method further includes:
the radio access network device receives the voice data by using the second data connection, where the voice data includes a voice payload and configuration information of the voice payload; and
the radio access network device restores a protocol header of the voice payload based on the configuration information to obtain a voice data packet carrying the protocol header, and sends the voice data packet carrying the protocol header to the calling terminal by using the first data connection; or sends the configuration information and the voice payload to the calling terminal by using the first data connection.

It should be noted that, in this embodiment of the present invention, the configuration information of the voice payload may be transmitted by using a signaling connection. Therefore, in this embodiment of the present invention, the second signaling connection may be used to receive the configuration information of the voice payload, and the first signaling connection is used to send the configuration information of the voice payload.

Corresponding to the data connection mode of the solution 3, this embodiment of the present invention provides a caller uplink voice data transmission solution, and the method further includes:
the radio access network device receives the voice data by using the first data connection, where the voice data includes a first voice data packet, and the first voice data packet includes a voice payload and a data link layer L2 protocol header; and the radio access network device sends the first voice data packet to the core network device by using the second data connection; or
the method further includes:
   the radio access network device receives the voice data by using the first data connection, where the voice data includes a second voice data packet, and the second voice data packet includes a voice payload and carries identifier information used to indicate a sequence of the second voice data packet; and the radio access network device sends the second voice data packet to the core network device by using the second data connection; or
   the method further includes: the radio access network device receives the voice data by using the first data connection, where the voice data includes a third voice data packet, and the third voice data packet includes a voice payload and a voice over Internet Protocol VoIP protocol header and carries identifier information used to indicate a sequence of the third voice data packet; and the radio access network device sends the third voice data packet to the core network device by using the second data connection.

In this embodiment of the present invention, the transmitted voice data may be further in a form of VoIP data packet + L2 protocol header, that is, the voice data packet includes a VoIP data packet and carries a data link layer L2 protocol header.

Corresponding to the data connection mode of the solution 3, this embodiment of the present invention provides a caller downlink voice data transmission solution, and the method further includes:
the radio access network device receives the voice data from the called terminal by using the second data connection, where the voice data includes a fourth voice data packet, and the fourth voice data packet includes a voice payload and an L2 protocol header; and the radio access network device sends the fourth voice data packet to the calling terminal by using the first data connection; or
the method further includes:
   the radio access network device receives the voice data from the called terminal by using the fourth data connection, where the voice data includes a fifth voice data packet, and the fifth voice data packet includes a voice payload and carries identifier information used to indicate a sequence of the fifth voice data packet; and the radio access network device sends the fifth voice data packet to the calling terminal by using the first data connection; or
   the method further includes: the radio access network device receives the voice data from the core network device by using the second data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and the radio access network device sends the sixth voice data packet to the calling terminal by using the first data connection.

In this embodiment of the present invention, the transmitted voice data may be further in a form of VoIP data packet + L2 protocol header, that is, the voice data packet includes a VoIP data packet and carries a data link layer L2 protocol header.

This embodiment of the present invention further provides an implementation solution for performing format conversion in a radio access network in an application scenario in which the first data connection and the second data connection are based on different technologies. Details are as follows: The method further includes:
before sending the voice data, the radio access network device converts received CS domain voice data into PS domain voice data, or converts received PS domain voice data into CS domain voice data, where the PS domain voice data includes at least one of the voice data packet carrying the protocol header, the first voice data packet, the second voice data packet, the third voice data packet, the fourth voice data packet, the fifth voice data packet, and the sixth voice data packet, and the CS domain voice data includes the voice payload.

The transmitted voice data may be further in a form of VoIP data packet + L2 protocol header.

Therefore, in this embodiment, the PS domain voice data may further include a voice data packet in this form.

Further, voice data transmission is implemented by using a VoIP or SIP data packet, and the restored protocol header is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

Further, in this embodiment of the present invention, the voice data may be distinguished, and a priority of sending the voice data is increased. Details are as follows: The method further includes:
before sending the voice data packet, the radio access network device reads indication information carried in the voice data, and increases a priority of the voice data based on the indication information; or before sending the voice data packet, the radio access network device adds, to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

The transmitted voice data may be further in a form of VoIP data packet + L2 protocol header. Therefore, in this embodiment, the voice data may further include a voice data packet in this form.

The indication information may be explicit, or may be implicit. For example, if the voice data is at least one of the voice data packet carrying the protocol header, the first voice data packet, the second voice data packet, the third voice data packet, the fourth voice data packet, the fifth voice data packet, and the sixth voice data packet, the protocol header may carry the indication information in an explicit manner; or if the voice data is the voice payload, a receiver may identify that the voice data is a voice payload without a protocol header and therefore needs to be sent preferentially.

This embodiment of the present invention further provides a specific implementation solution for transmitting the voice data on the air interface as follows: The method further includes:
the radio access network device receives or sends the voice data by using the first data connection; where
a mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

Optionally, the sending the voice data in frequency division multiplexing FDM mode on at least one subcarrier includes:
sending the voice data in frequency hopping mode on the at least one subcarrier.

In this embodiment of the present invention, the at least one subcarrier indicates that a bandwidth occupied by a terminal device is at least one subcarrier; and frequency hopping indicates that the terminal device skips from occupying subcarriers 1, 2, and 3 (N = 3) to occupying subcarriers 4 and 5 (M = 2). It should be noted that, N and M in the foregoing example of the subcarrier sequence numbers are variable, and frequency hopping does not need to be performed based on the sequence numbers either. The foregoing example should not be understood as a limitation to a specific implementation process of frequency hopping. This is not described again in subsequent embodiments.

Optionally, the sending the voice data in frequency hopping mode on the at least one subcarrier includes:
mapping, on the at least one subcarrier based on a predetermined frequency hopping mechanism, the voice data to the at least one subcarrier for sending; or
when signal strength of a voice-dedicated subcarrier is higher than a second threshold, sending the voice data by using the voice-dedicated subcarrier, and when the signal strength of the voice-dedicated subcarrier is lower than a first threshold, sending the voice data by using a common reserved subcarrier.

In the foregoing embodiment, an improvement of transmitting the voice data on the air interface at a resource layer may be as follows:
A single timeslot resource block on the air interface includes voice data of at least one terminal; and
if the single timeslot resource block includes voice data of at least two terminal devices, time division multiplexing or frequency division multiplexing is performed between the terminal devices on the single timeslot resource block; or
voice data of the calling terminal or the called terminal is carried in consecutive timeslot resource blocks on the air interface. In this embodiment of the present invention, the consecutive timeslot resource blocks may carry same voice data. For example, in time domain, a minimum scheduled TTI is n timeslots, N is a quantity of configured consecutive TTIs, n = 1, 2, ..., and N = 1, 2^. A main difference between this embodiment of the present invention and TTI bundling lies in: (1) a duration of a TTI is configurable, and may be at least one timeslot; (2) one TB may include data of at least one terminal; and (3) in frequency domain, a minimum resource block may be at least one RB, that is, 12 subcarriers, or further, may be one subcarrier.

It may be understood that a minimum granularity of the TTI in time domain may also be an OFDM symbol.

An embodiment of the present invention further provides another voice data transmission control method. The method is applied to a calling terminal side, and includes the following steps.

801. A calling terminal sends a connection establishment request to a radio access network device.

In this embodiment of the present invention, if a network side needs to perform priority scheduling or the like, a type of a connection established currently may need to be learned. Therefore, the following solution may be used: A voice service type is indicated in the connection establishment request.

802. The calling terminal receives first configuration information sent by the radio access network device.

803. The calling terminal establishes a voice-dedicated domain based first signaling connection between the calling terminal and the radio access network device based on the first configuration information.

Optionally, the voice-dedicated domain is a CS domain or an Internet Protocol multimedia subsystem IMS domain.

804. The calling terminal sends a call establishment request to the radio access network device by using the first signaling connection, where the call establishment request carries identifier information of a called terminal, and the identifier information of the called terminal is used by the radio access network device or the core network device to identify the called terminal.

Optionally, the call establishment request sent by the calling terminal is transmitted by using any one of the following signaling connections: non-access stratum NAS signaling, Session Initiation Protocol SIP signaling, and SIP signaling carried in NAS signaling.

805. After receiving a call response sent by the radio access network device, the calling terminal determines that a call is successful.

806. The calling terminal receives second configuration information sent by the radio access network device, and establishes a voice-dedicated domain based first data connection between the calling terminal and the radio access network device.

It should be noted that, in this embodiment of the present invention, steps of the call response and the second configuration information are flexible, and do not necessarily have a strict time sequence relationship.

Further, this embodiment of the present invention further provides a specific implementation solution for transmitting voice data, and mainly relates to voice data transmitted on an air interface, and a correspondence between the voice data and a data connection. There are mainly the following three possibilities:
Solution 1: Uplink voice data of the calling terminal and uplink voice data of the called terminal are transmitted. Details are as follows:
   A. Uplink voice data of the calling terminal is transmitted; the voice-dedicated domain based first data connection includes a PS domain based first data connection dedicated to carrying voice data; and
      the method further includes: the calling terminal sends a voice payload to the radio access network device by using the first data connection; or
      the method further includes: the calling terminal sends the voice data to the radio access network device by using the first data connection, where the voice data includes a voice payload and configuration information of the voice payload; or the method further includes: the calling terminal sends the voice data to the radio access network device by using the first data connection, where the voice data includes a first voice data packet, and the first voice data packet includes a voice payload and a data link layer L2 protocol header; or
      the method further includes: the calling terminal sends the voice data to the radio access network device by using the first data connection, where the voice data includes a second voice data packet, and the second voice data packet includes a voice payload and carries identifier information used to indicate a sequence of the second voice data packet; or
      the method further includes: the calling terminal sends the voice data to the radio access network device by using the first data connection, where the voice data includes a third voice data packet, and the third voice data packet includes a voice payload and a voice over Internet Protocol VoIP protocol header and carries identifier information used to indicate a sequence of the third voice data packet.

      In this embodiment of the present invention, the transmitted voice data may be further in a form of VoIP data packet + L2 protocol header, that is, the voice data packet includes a VoIP data packet and carries a data link layer L2 protocol header.
      It should be noted that, in this embodiment of the present invention, the configuration information of the voice payload may be transmitted by using a signaling connection. Therefore, in this embodiment of the present invention, the configuration information of the voice payload is sent by using the first signaling connection.
   B. Uplink voice data of the called terminal (that is, downlink voice data of the calling terminal) is transmitted; the voice-dedicated domain based first data connection includes a PS domain based first data connection dedicated to carrying voice data; and
      the method further includes: the calling terminal receives the voice data that is from the called terminal and is sent by the radio access network device, where the voice data includes a voice payload; or
      the method further includes: the calling terminal receives the voice data that is from the called terminal and is sent by the radio access network device, where the voice data includes a voice payload and configuration information of the voice payload; or the method further includes: the calling terminal receives the voice data that is from the called terminal and is sent by the radio access network device, where the voice data includes a fourth voice data packet, and the fourth voice data packet includes a voice payload and an L2 protocol header; and the called terminal sends the fourth voice data packet to the calling terminal by using the first data connection; or
      the method further includes: the calling terminal receives the voice data that is from the called terminal and is sent by the radio access network device, where the voice data includes a fifth voice data packet, and the fifth voice data packet includes a voice payload and carries identifier information used to indicate a sequence of the fifth voice data packet; or
      the method further includes: the calling terminal receives the voice data that is from the called terminal and is sent by the radio access network device, where the voice data includes a sixth voice data packet, and the sixth voice data packet includes a voice payload and a voice over Internet Protocol VoIP protocol header and carries, in L2, identifier information used to indicate a sequence of the sixth voice data packet.

      In this embodiment of the present invention, the transmitted voice data may be further in a form of VoIP data packet + L2 protocol header, that is, the voice data packet includes a VoIP data packet and carries a data link layer L2 protocol header.
      It should be noted that, in this embodiment of the present invention, the configuration information of the voice payload may be transmitted by using a signaling connection. Therefore, in this embodiment of the present invention, the configuration information of the voice payload may be received by using the first signaling connection.
Solution 2: Uplink voice data of the called terminal (that is, downlink voice data of the calling terminal) and uplink voice data of the calling terminal are transmitted; the voice-dedicated domain based first data connection includes a CS domain based first data connection dedicated to carrying voice data; and
   a CS domain based second data connection exists between the radio access network device and the core network device, and the method further includes: the calling terminal receives the voice data that is from the called terminal and is sent by the radio access network device, where the voice data includes a voice payload; or the calling terminal receives a voice payload and configuration information of the voice payload that are from the called terminal and are sent by the radio access network device; or
   a CS domain based second data connection exists between the radio access network device and the core network device, and the method further includes:
      the calling terminal sends the voice data to the radio access network device by using the first data connection, where the voice data includes a first voice data packet, and the first voice data packet includes a voice payload and a data link layer L2 protocol header; or the calling terminal sends the voice data to the radio access network device by using the first data connection, where the voice data includes a second voice data packet, and the second voice data packet includes a voice payload and carries identifier information used to indicate a sequence of the second voice data packet; or the calling terminal sends the voice data to the radio access network device by using the first data connection, where the voice data includes a third voice data packet, and the third voice data packet includes a voice payload and a voice over Internet Protocol VoIP protocol header and carries identifier information used to indicate a sequence of the third voice data packet.

   It should be noted that, in this embodiment of the present invention, the configuration information of the voice payload may be transmitted by using a signaling connection. Therefore, in this embodiment of the present invention, the first signaling connection may be used to receive the configuration information of the voice payload, or the first signaling connection is used to send the configuration information of the voice payload.
Solution 3: Uplink voice data of the called terminal (that is, downlink voice data of the calling terminal) and uplink voice data of the calling terminal are transmitted; the voice-dedicated domain based first data connection includes a PS domain based first data connection dedicated to carrying voice data; and
   a CS domain based second data connection exists between the radio access network device and the core network device, and the method further includes: the calling terminal receives the voice data that is from the called terminal and is sent by the radio access network device, where the voice data includes a voice payload; or the calling terminal receives the voice data that is from the called terminal and is sent by the radio access network device, where the voice data includes a voice payload and configuration information of the voice payload; or
   a CS domain based second data connection exists between the radio access network device and the core network device, and the method further includes:
      the calling terminal receives the voice data that is from the called terminal and is sent by the radio access network device, where the voice data includes a fourth voice data packet, and the fourth voice data packet includes a voice payload and an L2 protocol header; or the calling terminal receives the voice data that is from the called terminal and is sent by the radio access network device, where the voice data includes a fifth voice data packet, and the fifth voice data packet includes a voice payload and carries identifier information used to indicate a sequence of the fifth voice data packet; or the calling terminal receives the voice data that is from the called terminal and is sent by the radio access network device, where the voice data includes a sixth voice data packet, and the sixth voice data packet includes a voice payload and a voice over Internet Protocol VoIP protocol header and carries, in L2, identifier information used to indicate a sequence of the sixth voice data packet.

It should be noted that, in this embodiment of the present invention, the configuration information of the voice payload may be transmitted by using a signaling connection. Therefore, in this embodiment of the present invention, the first signaling connection may be used to receive the configuration information of the voice payload, or the first signaling connection is used to send the configuration information of the voice payload.

Further, in this embodiment of the present invention, the voice data may be distinguished, and a priority of sending the voice data is increased. Details are as follows: The method further includes:
before sending the voice data packet, the calling terminal adds, to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

The transmitted voice data may be further in a form of VoIP data packet + L2 protocol header. Therefore, in this embodiment, the PS domain voice data may further include a voice data packet in this form.

The indication information may be explicit, or may be implicit. For example, if the voice data is at least one of the voice data packet carrying the protocol header, the first voice data packet, the second voice data packet, the third voice data packet, the fourth voice data packet, the fifth voice data packet, and the sixth voice data packet, the protocol header may carry the indication information in an explicit manner; or if the voice data is the voice payload, a receiver may identify that the voice data is a voice payload without a protocol header and therefore needs to be sent preferentially.

This embodiment of the present invention further provides a specific implementation solution for transmitting the voice data on the air interface as follows: The method further includes:
the calling terminal receives or sends the voice data by using the first data connection; where
a mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

This embodiment of the present invention further provides a specific implementation solution for transmitting the voice data on the air interface as follows: The sending the voice data in frequency division multiplexing FDM mode on at least one subcarrier includes:
sending the voice data in frequency hopping mode on the at least one subcarrier.

Optionally, the sending the voice data in frequency hopping mode on the at least one subcarrier includes:
mapping, on the at least one subcarrier based on a predetermined frequency hopping mechanism, the voice data to the at least one subcarrier for sending; or
when signal strength of a voice-dedicated subcarrier is higher than a second threshold, sending the voice data by using the voice-dedicated subcarrier, and when the signal strength of the voice-dedicated subcarrier is lower than a first threshold, sending the voice data by using a common reserved subcarrier.

In the foregoing embodiment, an improvement of transmitting the voice data on the air interface at a resource layer may be as follows: A single timeslot resource block on the air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

In subsequent embodiments, the configuration information of the voice payload in this embodiment of the present invention may be transmitted by using a signaling connection. A specific used signaling connection varies with different destinations to which the configuration information needs to be transmitted. Details are not described again in the subsequent embodiments.

An embodiment of the present invention further provides another voice data transmission control method. This embodiment is implemented on a core network side, and includes the following steps.

901. A core network device receives a call establishment request that is from a calling terminal and is sent by a radio access network device, and establishes a voice-dedicated domain based second signaling connection between the core network device and the radio access network device, where the call establishment request carries identifier information of a called terminal, and the identifier information of the called terminal is used by the radio access network device or the core network device to identify the called terminal.

902. The core network initiates a call establishment request to the called terminal, and establishes a voice-dedicated domain based third signaling connection between the core network device and the called terminal.

In this embodiment of the present invention, there are several possibilities of distribution of relative positions of the called terminal and the calling terminal in a network. For different distribution manners, establishment of signaling connections may vary. This embodiment of the present invention provides a specific solution as follows: Before establishing the voice-dedicated domain based third signaling connection between the core network device and the called terminal, the method further includes:
the core network device determines a home location of the called terminal, and sends information about the home location of the called terminal to the radio access network device; and
the core network device may perform any one of the following:
   if the called terminal is in a service range of another radio access network device in a service range of the core network device, establishing the third signaling connection between the core network device and the called terminal through the another radio access network device; or
   if the called terminal is beyond a service range of the core network device, establishing the third signaling connection between the core network device and the called terminal through a radio access network device and a core network device to which the called terminal belongs.

903. After receiving a call response returned by the called terminal, the core network device sends the call response to the radio access network device.

After a signaling plane connection is established, this embodiment of the present invention further provides an implementation solution for establishing a data connection as follows: After the core network device receives the call response returned by the called terminal, the method further includes:
the core network device establishes a CS domain based second data connection dedicated to carrying voice data, between the core network device and the radio access network device, and establishes a third data connection between the core network device and the called terminal through a radio access network device and a core network device to which the called terminal belongs; and
the core network device sends second configuration information to the radio access network device, where the second configuration information carries a parameter required for establishing a voice-dedicated domain based first data connection between the radio access network device and the calling terminal; or
if the called terminal and the calling terminal belong to different radio access network devices, the core network device establishes a voice-dedicated domain based data connection between the core network device and the radio access network device, and sends third configuration information to the radio access network device to which the called terminal belongs, where the third configuration information carries a parameter required for establishing a voice-dedicated domain based third data connection between the radio access network device to which the called terminal belongs and the called terminal.

After the data plane connection is established, the voice data can be transmitted in the network. In this embodiment, because the second connection is a CS domain data connection dedicated to carrying the voice data, in an uplink direction of the calling terminal, the voice data in this embodiment of the present invention may be as follows: The method further includes:
the core network device receives the voice data by using the second data connection, where the voice data includes a voice payload, and sends the voice payload to the called terminal by using the third data connection; or
the method further includes:
   the core network device receives the voice data by using the second data connection, where the voice data includes a voice payload and configuration information of the voice payload; and
   the core network device restores a protocol header of the voice payload based on the configuration information to obtain a voice data packet carrying the protocol header, and sends the voice data packet carrying the protocol header to the called terminal by using the third data connection; or sends the configuration information and the voice payload to the called terminal by using the third data connection; or
   the method further includes:
      the core network device receives the voice data by using the second data connection, where the voice data includes a first voice data packet, and the first voice data packet includes a voice payload and a data link layer L2 protocol header; and the core network device sends the first voice data packet to the called terminal by using the third data connection; or
      the method further includes:
         the core network device receives the voice data by using the second data connection, where the voice data includes a second voice data packet, and the second voice data packet includes a voice payload and carries identifier information used to indicate a sequence of the second voice data packet; and the core network device sends the second voice data packet to the called terminal by using the third data connection; or
         the method further includes:
            the core network device receives the voice data by using the second data connection, where the voice data includes a third voice data packet, and the third voice data packet includes a voice payload and a voice over Internet Protocol VoIP protocol header and carries identifier information used to indicate a sequence of the third voice data packet; and the core network device sends the third voice data packet to the called terminal by using the third data connection.

In this embodiment, because the second connection is a CS domain data connection dedicated to carrying the voice data, in an uplink direction of the called terminal, the voice data in this embodiment of the present invention may be as follows: The method further includes:
the core network device receives a voice payload from the called terminal by using the third data connection; and the core network device sends the voice payload to the radio access network device by using the second data connection; or
the method further includes:
   the core network device receives the voice data by using the third data connection, where the voice data includes a voice payload and configuration information of the voice payload; and
   the radio access network device restores a protocol header of the voice payload based on the configuration information to obtain a voice data packet carrying the protocol header, and sends the voice data packet carrying the protocol header to the radio access network device by using the second data connection; or sends the configuration information and the voice payload to the radio access network device by using the second data connection; or
   the method further includes:
      the core network device receives the voice data from the called terminal by using the third data connection, where the voice data includes a fourth voice data packet, and the fourth voice data packet includes a voice payload and an L2 protocol header; and
      the core network device sends the fourth voice data packet to the radio access network device by using the second data connection; or
      the method further includes:
         the core network device receives the voice data from the called terminal by using the third data connection, where the voice data includes a fifth voice data packet, and the fifth voice data packet includes a voice payload and carries identifier information used to indicate a sequence of the fifth voice data packet; and the core network device sends the fifth voice data packet to the radio access network device by using the second data connection; or
         the method further includes: the core network device receives the voice data by using the third data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and the core network device sends the sixth voice data packet to the radio access network device by using the second data connection.

Further, voice data transmission is implemented by using a VoIP or SIP data packet, and the restored protocol header is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

Further, in this embodiment of the present invention, the voice data may be distinguished, and a priority of sending the voice data is increased. Details are as follows: The method further includes:
before sending the voice data packet, the core network device reads indication information carried in the voice data, and increases a priority of the voice data based on the indication information; or before sending the voice data packet, the radio access network device adds, to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

The transmitted voice data may be further in a form of VoIP data packet + L2 protocol header. Therefore, in this embodiment, the PS domain voice data may further include a voice data packet in this form.

Corresponding to the calling terminal, the radio access network device on the calling terminal side, and the core network device in the foregoing embodiments, an embodiment of the present invention further provides another voice data transmission control method, applied to a called terminal side. It may be understood that a caller and a callee are merely roles used in a specific application scenario. In an actual application, a terminal may have functions of both the calling terminal and the called terminal. The method includes the following steps.

1001. A called terminal sends a connection request to a called-side radio access network device to which the called terminal belongs, and accesses the called-side radio access network device. 1002. The called terminal receives fourth configuration information sent by the called-side radio access network device, and establishes a voice-dedicated domain based third signaling connection between the called terminal and the called-side radio access network device based on the fourth configuration information.

Optionally, the voice-dedicated domain is a CS domain or an Internet Protocol multimedia subsystem IMS domain.

1003. The called terminal receives a call establishment request from a calling terminal by using the third signaling connection, and sends a call response to the called-side radio access network device.

Optionally, the call establishment request sent by the calling terminal is transmitted by using any one of the following signaling connections: non-access stratum NAS signaling, Session Initiation Protocol SIP signaling, and SIP signaling carried in NAS signaling.

1004. The called terminal receives third configuration information sent by the called-side radio access network device, and establishes a voice-dedicated domain based seventh data connection between the called terminal and the called-side radio access network device based on the third configuration information.

Further, this embodiment of the present invention further provides a specific data connection establishment procedure and a specific form corresponding to the data connection. There are at least the following three possibilities of voice data transmitted on an air interface:
I. The seventh data connection is a PS domain based seventh data connection dedicated to carrying voice data, and a PS domain based connection dedicated to carrying the voice data also exists between the called-side radio access network device and a called-side core network device; and
   the method further includes: the called terminal receives the voice data by using the seventh data connection, where the voice data includes a voice payload; or the method further includes: the called terminal receives the voice data by using the seventh data connection, where the voice data includes a voice payload and configuration information of the voice payload; or
   the method further includes: the called terminal receives the voice data by using the seventh data connection, where the voice data includes a first voice data packet, and the first voice data packet includes a voice payload and a data link layer L2 protocol header; and the called terminal sends the first voice data packet to the core network device by using the seventh data connection; or
   the method further includes: the called terminal receives the voice data by using the seventh data connection, where the voice data includes a second voice data packet, and the second voice data packet includes a voice payload and carries identifier information used to indicate a sequence of the second voice data packet; and the called terminal sends the second voice data packet to the radio access network device by using the seventh data connection; or
   the method further includes: the called terminal receives the voice data by using the seventh data connection, where the voice data includes a third voice data packet, and the third voice data packet includes a voice payload and a voice over Internet Protocol VoIP protocol header and carries identifier information used to indicate a sequence of the third voice data packet; and the called terminal sends the third voice data packet to the radio access network device by using the seventh data connection; or
   the method further includes: the called terminal sends the voice data to the called-side radio access network device by using the seventh data connection, where the voice data includes a voice payload; or
   the method further includes: the called terminal sends the voice data to the called-side radio access network device by using the seventh data connection, where the voice data includes a voice payload and configuration information of the voice payload; or the method further includes: the called terminal sends the voice data to the called-side radio access network device by using the seventh data connection, where the voice data includes a fourth voice data packet, and the fourth voice data packet includes a voice payload and an L2 protocol header; or
   the method further includes: the called terminal sends the voice data to the called-side radio access network device by using the seventh data connection, where the voice data includes a fifth voice data packet, and the fifth voice data packet includes a voice payload and carries identifier information used to indicate a sequence of the fifth voice data packet; or
   the method further includes: the called terminal sends the voice data to the called-side radio access network device by using the seventh data connection, where the voice data includes a sixth voice data packet, and the sixth voice data packet includes a voice payload and a voice over Internet Protocol VoIP protocol header and carries, in L2, identifier information used to indicate a sequence of the sixth voice data packet.
II. The seventh data connection is a CS domain based seventh data connection dedicated to carrying voice data, and a CS domain based connection dedicated to carrying the voice data exists between the called-side radio access network device and a called-side core network device; and the method further includes:
   the called terminal receives the voice data by using the seventh data connection, where the voice data includes a voice payload; or
   the method further includes: the called terminal receives the voice data by using the seventh data connection, where the voice data includes a voice payload and configuration information of the voice payload; or
   the method further includes: the called terminal sends the voice data to the called-side radio access network device by using the seventh data connection, where the voice data includes a voice payload; or
   the method further includes: the called terminal sends the voice data to the called-side radio access network device by using the seventh data connection, where the voice data includes a voice payload and configuration information of the voice payload.
III. The seventh data connection is a PS domain based seventh data connection dedicated to carrying voice data, and a CS domain based connection dedicated to carrying the voice data exists between the called-side radio access network device and a called-side core network device; and
   the method further includes: the called terminal receives the voice data by using the seventh data connection, where the voice data includes a first voice data packet, and the first voice data packet includes a voice payload and a data link layer L2 protocol header; and the called terminal sends the first voice data packet to the core network device by using the seventh data connection; or
   the method further includes: the called terminal receives the voice data by using the seventh data connection, where the voice data includes a second voice data packet, and the second voice data packet includes a voice payload and carries identifier information used to indicate a sequence of the second voice data packet; and the called terminal sends the second voice data packet to the radio access network device by using the seventh data connection; or
   the method further includes: the called terminal receives the voice data by using the seventh data connection, where the voice data includes a third voice data packet, and the third voice data packet includes a voice payload and a voice over Internet Protocol VoIP protocol header and carries identifier information used to indicate a sequence of the third voice data packet; and the called terminal sends the third voice data packet to the radio access network device by using the seventh data connection; or
   the method further includes: the called terminal sends the voice data to the called-side radio access network device by using the seventh data connection, where the voice data includes a fourth voice data packet, and the fourth voice data packet includes a voice payload and an L2 protocol header; or
   the method further includes: the called terminal sends the voice data to the called-side radio access network device by using the seventh data connection, where the voice data includes a fifth voice data packet, and the fifth voice data packet includes a voice payload and carries identifier information used to indicate a sequence of the fifth voice data packet; or
   the method further includes: the called terminal sends the voice data to the called-side radio access network device by using the seventh data connection, where the voice data includes a sixth voice data packet, and the sixth voice data packet includes a voice payload and a voice over Internet Protocol VoIP protocol header and carries, in L2, identifier information used to indicate a sequence of the sixth voice data packet.

In this embodiment of the present invention, the transmitted voice data may be further in a form of VoIP data packet + L2 protocol header, that is, the voice data packet includes a VoIP data packet and carries a data link layer L2 protocol header.

Further, voice data transmission is implemented by using a VoIP or SIP data packet, and the restored protocol header is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

Further, in this embodiment of the present invention, the voice data may be distinguished, and a priority of sending the voice data is increased. Details are as follows: The method further includes:
before sending the voice data packet, the called terminal adds, to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

The transmitted voice data may be further in a form of VoIP data packet + L2 protocol header.

Therefore, in this embodiment, the PS domain voice data may further include a voice data packet in this form.

This embodiment of the present invention further provides a specific implementation solution for transmitting the voice data on the air interface as follows: The method further includes:
the called terminal receives or sends the voice data by using the seventh data connection; where
a mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

Optionally, the sending the voice data in frequency division multiplexing FDM mode on at least one subcarrier includes:
sending the voice data in frequency hopping mode on the at least one subcarrier.

Optionally, the sending the voice data in frequency hopping mode on the at least one subcarrier includes:
mapping, on the at least one subcarrier based on a predetermined frequency hopping mechanism, the voice data to the at least one subcarrier for sending; or
when signal strength of a voice-dedicated subcarrier is higher than a second threshold, sending the voice data by using the voice-dedicated subcarrier, and when the signal strength of the voice-dedicated subcarrier is lower than a first threshold, sending the voice data by using a common reserved subcarrier.

In the foregoing embodiment, an improvement of transmitting the voice data on the air interface at a resource layer may be as follows:
a single timeslot resource block on the air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

Corresponding to the calling terminal, the radio access network device on the calling terminal side, and the core network device in the foregoing embodiments, an embodiment of the present invention further provides another voice data transmission control method, applied to a radio access network device on a called terminal side. It may be understood that the radio access network devices on the calling side and the called side are merely roles used in a specific application scenario. In an actual application, an access network device may have functions of both the access network devices on the calling side and the called side to support all networking modes. The method includes the following steps.

1101. After receiving a connection establishment request from a called terminal, a radio access network device allows the called terminal to access the radio access network device.

1102. The radio access network device receives fourth configuration information from the core network device.

1103. Establish a voice-dedicated domain based third signaling connection between the radio access network device and the called terminal based on the fourth configuration information. Optionally, the voice-dedicated domain is a CS domain or an Internet Protocol multimedia subsystem IMS domain.

1104. The radio access network device sends the call establishment request to the called terminal by using the third signaling, receives a call response sent by the called terminal, and sends the call response to the core network device.

Optionally, the call establishment request sent by the calling terminal is transmitted by using any one of the following signaling connections: non-access stratum NAS signaling, Session Initiation Protocol SIP signaling, and SIP signaling carried in NAS signaling.

1105. The radio access network device sends third configuration information to the called terminal, and establishes a voice-dedicated domain based seventh data connection between the radio access network device and the called terminal based on the third configuration information. Further, this embodiment of the present invention further provides a specific data connection establishment procedure and a specific form corresponding to the data connection. Possibilities of voice data transmitted on an air interface may be mainly as follows:
The voice-dedicated domain based data connection between the radio access network device and the called terminal is a PS domain based seventh data connection dedicated to carrying voice data; and a PS domain based sixth data connection dedicated to carrying the voice data exists between the radio access network device and the core network device; or
the voice-dedicated domain based data connection between the radio access network device and the called terminal is a CS domain based seventh data connection dedicated to carrying voice data; and a CS domain based sixth data connection dedicated to carrying the voice data exists between the radio access network device and the core network device; or
the voice-dedicated domain based data connection between the radio access network device and the called terminal is a PS domain based seventh data connection dedicated to carrying voice data; and a CS domain based sixth data connection dedicated to carrying the voice data exists between the radio access network device and the core network device.

For the voice data specifically transmitted by the radio access network device on the called terminal side, refer to the foregoing embodiment. Details are not described again herein.

An embodiment of the present invention further provides another voice data transmission control method. The method in this embodiment is applied to a calling-side radio access network device. A difference between the calling-side radio access network device and the device in this embodiment lies in that a signaling connection and a data connection are based on different communications technologies. The method includes the following steps.

1201. A radio access network device establishes a PS domain based first signaling connection between the radio access network device and a calling terminal.

Optionally, a specific process of establishing the first signaling connection may be as follows: After receiving a connection establishment request from the calling terminal, the radio access network device sends first configuration information to the calling terminal, and establishes the PS domain based first signaling connection between the radio access network device and the calling terminal based on the first configuration information.

1202. The radio access network device establishes a PS domain based second signaling connection between the radio access network device and a core network device.

Optionally, a specific process of establishing the second signaling connection may be as follows: The radio access network device receives, by using the first signaling connection, a call establishment request sent by the calling terminal; and the radio access network device sends the call establishment request to the core network device, and establishes the PS domain based second signaling connection between the radio access network device and the core network device.

1203. The radio access network device establishes a PS domain based second data connection dedicated to carrying voice data, between the radio access network device and the core network device; and establishes a CS domain based first data connection dedicated to carrying the voice data, between the radio access network device and the calling terminal.

A specific process of establishing the first data connection may be as follows: The call establishment request carries identifier information of a called terminal, and the identifier information of the called terminal is used by the radio access network device or the core network device to identify the called terminal; and after the radio access network device sends the call establishment request to the core network device, the method further includes:
the radio access network device receives a call response from the core network device, sends the call response to the calling terminal, and establishes the PS domain based second data connection dedicated to carrying the voice data, between the radio access network device and the core network device; and the radio access network device receives second configuration information from the core network device, and establishes the CS domain based first data connection dedicated to carrying the voice data, between the radio access network device and the calling terminal based on the second configuration information.

Further, this embodiment of the present invention further provides a specific data connection establishment procedure and a specific form corresponding to the data connection. There are at least the following three possibilities of voice data transmitted on an air interface:
I. In an uplink direction of the calling terminal, voice data transmission is as follows: The method further includes:
   the radio access network device receives the voice data by using the first data connection, where the voice data includes a voice payload; and the radio access network device sends the voice payload to the core network device by using the second data connection; or
   the method further includes:
      the radio access network device receives the voice data by using the first data connection, where the voice data includes a voice payload and configuration information of the voice payload; and
      the radio access network device restores a protocol header of the voice payload based on the configuration information to obtain a voice data packet carrying the protocol header, and sends the voice data packet carrying the protocol header to the core network device by using the second data connection; or sends the configuration information and the voice payload to the core network device by using the second data connection; or
      the method further includes:
         the radio access network device receives the voice data by using the first data connection, where the voice data includes a first voice data packet, and the first voice data packet includes a voice payload and a data link layer L2 protocol header; and the radio access network device sends the first voice data packet to the core network device by using the second data connection; or
         the method further includes:
            the radio access network device receives the voice data by using the first data connection, where the voice data includes a second voice data packet, and the second voice data packet includes a voice payload and carries identifier information used to indicate a sequence of the second voice data packet; and the radio access network device sends the second voice data packet to the core network device by using the second data connection; or
            the method further includes: the radio access network device receives the voice data by using the first data connection, where the voice data includes a third voice data packet, and the third voice data packet includes a voice payload and a voice over Internet Protocol VoIP protocol header and carries identifier information used to indicate a sequence of the third voice data packet; and the radio access network device sends the third voice data packet to the core network device by using the second data connection.
II. In a downlink direction of the calling terminal, that is, an uplink direction of the called terminal, voice data transmission is as follows: The method further includes:
   the radio access network device receives the voice data from the called terminal by using the second data connection, where the voice data includes a voice payload; and
   the radio access network device sends the voice payload to the calling terminal by using the first data connection; or
   the method further includes:
      the radio access network device receives the voice data by using the second data connection, where the voice data includes a voice payload and configuration information of the voice payload; and
      the radio access network device restores a protocol header of the voice payload based on the configuration information to obtain a voice data packet carrying the protocol header, and sends the voice data packet carrying the protocol header to the calling terminal by using the first data connection; or sends the configuration information and the voice payload to the calling terminal by using the first data connection; or
      the method further includes:
         the radio access network device receives the voice data from the called terminal by using the second data connection, where the voice data includes a fourth voice data packet, and the fourth voice data packet includes a voice payload and an L2 protocol header; and the radio access network device sends the fourth voice data packet to the calling terminal by using the first data connection; or
         the method further includes:
            the radio access network device receives the voice data from the called terminal by using the second data connection, where the voice data includes a fifth voice data packet, and the fifth voice data packet includes a voice payload and carries identifier information used to indicate a sequence of the fifth voice data packet; and the radio access network device sends the fifth voice data packet to the calling terminal by using the first data connection; or
            the method further includes: the radio access network device receives the voice data by using the second data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and the radio access network device sends the sixth voice data packet to the calling terminal by using the first data connection.

In this embodiment of the present invention, the transmitted voice data may be further in a form of VoIP data packet + L2 protocol header, that is, the voice data packet includes a VoIP data packet and carries a data link layer L2 protocol header.

Further, voice data transmission is implemented by using a VoIP or SIP data packet, and the restored protocol header is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

Further, in this embodiment of the present invention, the voice data may be distinguished, and a priority of sending the voice data is increased. Details are as follows: The method further includes:
before sending the voice data packet, the radio access network device reads indication information carried in the voice data, and increases a priority of the voice data based on the indication information; or before sending the voice data packet, the radio access network device adds, to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

The transmitted voice data may be further in a form of VoIP data packet + L2 protocol header. Therefore, in this embodiment, the PS domain voice data may further include a voice data packet in this form.

This embodiment of the present invention further provides a specific implementation solution for transmitting the voice data on the air interface as follows: The method further includes:
the radio access network device receives or sends the voice data by using the first data connection; where
a mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

Optionally, the sending the voice data in frequency division multiplexing FDM mode on at least one subcarrier includes:
sending the voice data in frequency hopping mode on the at least one subcarrier.

Optionally, the sending the voice data in frequency hopping mode on the at least one subcarrier includes:
mapping, on the at least one subcarrier based on a predetermined frequency hopping mechanism, the voice data to the at least one subcarrier for sending; or
when signal strength of a voice-dedicated subcarrier is higher than a second threshold, sending the voice data by using the voice-dedicated subcarrier, and when the signal strength of the voice-dedicated subcarrier is lower than a first threshold, sending the voice data by using a common reserved subcarrier.

In the foregoing embodiment, an improvement of transmitting the voice data on the air interface at a resource layer may be as follows:
a single timeslot resource block on the air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

Before apparatus embodiments provided by the embodiments of the present invention are described in detail, it should be noted that, in the following embodiments, each unit of an apparatus uses a functional name. When same functional names are used in the embodiments, unless otherwise specified in the embodiments, it should not be understood that a correspondence exists between the two names; and the functional names of the units are only intended to correspond to accompanying drawings for technical understanding.

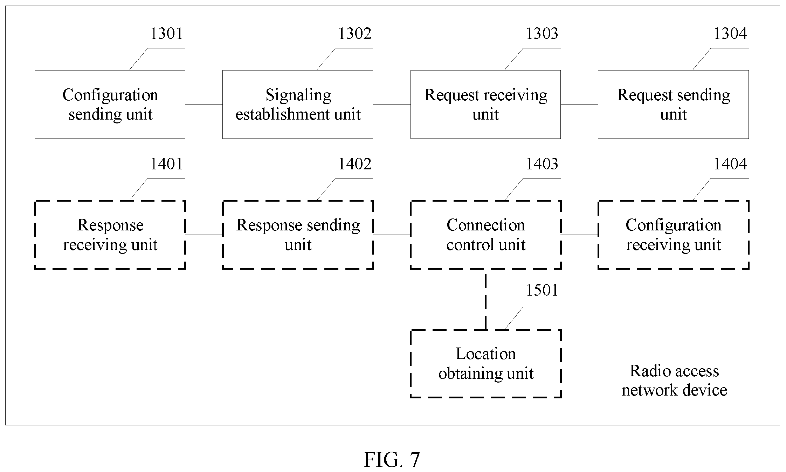

An embodiment of the present invention further provides a radio access network device. The radio access network device is used as a radio access network device on a calling terminal side, and as shown in FIG. 7, includes:
a configuration sending unit 1301, configured to send first configuration information to a calling terminal after the radio access network device receives a connection establishment request from the calling terminal;
a signaling establishment unit 1302, configured to establish a voice-dedicated domain based first signaling connection between the radio access network device and the calling terminal based on the first configuration information;
a request receiving unit 1303, configured to receive, by using the first signaling connection, a call establishment request sent by the calling terminal; and
a request sending unit 1304, configured to send the call establishment request to the core network device, and establish a voice-dedicated domain based second signaling connection between the radio access network device and the core network device.

Optionally, the voice-dedicated domain is a circuit switched CS domain or an Internet Protocol multimedia subsystem IMS domain.

Optionally, the request receiving unit 1303 is specifically configured to receive the call establishment request that is transmitted by the calling terminal by using any one of the following signaling connections: non-access stratum NAS signaling, Session Initiation Protocol SIP signaling, and SIP signaling carried in NAS signaling.

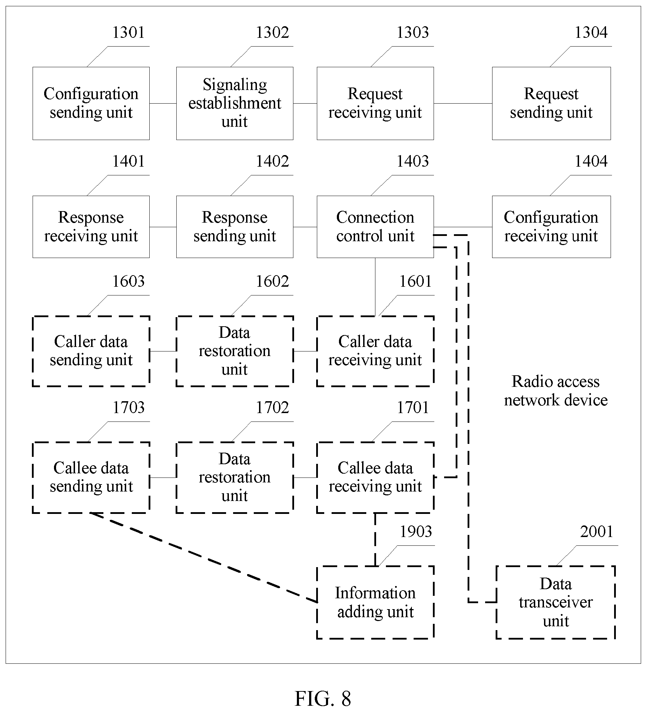

Further, as shown in FIG. 8, the call establishment request carries identifier information of a called terminal, and the identifier information of the called terminal is used by the radio access network device or the core network device to identify the called terminal; and
the radio access network device further includes:
a response receiving unit 1401, configured to receive a call response from the core network device after the request sending unit 1304 sends the call establishment request to the core network device;
a response sending unit 1402, configured to send the call response to the calling terminal;
a connection control unit 1403, configured to establish a packet switched PS domain based second data connection dedicated to carrying voice data, between the radio access network device and the core network device; and
a configuration receiving unit 1404, configured to receive second configuration information from the core network device; where
the connection control unit 1403 is further configured to establish a PS domain based first data connection dedicated to carrying the voice data, between the radio access network device and the calling terminal based on the second configuration information.

Further, still referring to FIG. 8, the call establishment request carries identifier information of a called terminal, and the identifier information of the called terminal is used by the radio access network device or the core network device to identify the called terminal; and
the radio access network device further includes:
a response receiving unit 1401, configured to receive, a call response from the core network device after the request sending unit 1304 sends the call establishment request to the core network device;
a response sending unit 1402, configured to send the call response to the calling terminal;
a connection control unit 1403, configured to establish a CS domain based second data connection dedicated to carrying voice data, between the radio access network device and the core network device; and
a configuration receiving unit 1404, configured to receive second configuration information from the core network device; where
the connection control unit 1403 is further configured to establish a CS domain based first data connection dedicated to carrying the voice data, between the radio access network device and the calling terminal based on the second configuration information.

Further, still referring to FIG. 8, the call establishment request carries identifier information of a called terminal, and the identifier information of the called terminal is used by the radio access network device or the core network device to uniquely identify the called terminal; and
the radio access network device further includes:
a response receiving unit 1401, configured to receive a call response from the core network device after the request sending unit 1304 sends the call establishment request to the core network device;
a response sending unit 1402, configured to send the call response to the calling terminal;
a connection control unit 1403, configured to establish a CS domain based second data connection dedicated to carrying voice data, between the radio access network device and the core network device; and
a configuration receiving unit 1404, configured to receive second configuration information from the core network device; where
the connection control unit 1403 is further configured to establish a PS domain based first data connection dedicated to carrying the voice data, between the radio access network device and the calling terminal based on the second configuration information.

Further, as shown in FIG. 7, the radio access network device further includes:
a location obtaining unit 1501, configured to obtain a home location of the called terminal before the connection control unit establishes the second data connection; and
the connection control unit 1403 may further perform any one of the following:
   if both the called terminal and the calling terminal are in a service range of the radio access network device, establishing a fourth data connection between the radio access network device and the called terminal; or
   if the called terminal is in a service range of another radio access network device in a service range of the core network device, establishing a second data connection between the radio access network device and the core network device, or establishing a fifth data connection between the radio access network device and the another radio access network device; or
   if the called terminal is beyond a service range of the core network device, establishing a second data connection between the radio access network device and the core network device.

Further, this embodiment of the present invention further provides related functional units having a data transmission function. As shown in FIG. 8, details are as follows: A data restoration unit 1602 is indicated by using a dashed line, and the unit is required only when a protocol header of voice data needs to be restored, and the data restoration unit 1602 is not required in other cases. Details are as follows: The radio access network device further includes a caller data receiving unit 1601 and a caller data sending unit 1603, where
the caller data receiving unit 1601 is configured to receive the voice data by using the first data connection, where the voice data includes a voice payload; and
the caller data sending unit 1603 is configured to send the voice payload to the core network device by using the second data connection.

Alternatively, the radio access network device further includes a caller data receiving unit 1601, a caller data sending unit 1603, and a data restoration unit 1602, where
the caller data receiving unit 1601 is configured to receive the voice data by using the first data connection, where the voice data includes a voice payload and configuration information of the voice payload;
the data restoration unit 1602 is configured to restore a protocol header of the voice payload based on the configuration information to obtain a voice data packet carrying the protocol header; and
the caller data sending unit 1603 is configured to send the voice data packet carrying the protocol header to the core network device by using the second data connection.

Alternatively, the radio access network device further includes a caller data receiving unit 1601 and a caller data sending unit 1603, where
the caller data receiving unit 1601 is configured to receive the voice data by using the first data connection, where the voice data includes a voice payload and configuration information of the voice payload; and
the caller data sending unit 1603 is configured to send the configuration information and the voice payload to the core network device by using the second data connection.

Alternatively, the radio access network device further includes a caller data receiving unit 1601 and a caller data sending unit 1603, where
the caller data receiving unit 1601 is configured to receive the voice data by using the first data connection, where the voice data includes a first voice data packet, and the first voice data packet includes a voice payload and a data link layer L2 protocol header; and
the caller data sending unit 1603 is configured to send the first voice data packet to the core network device by using the second data connection.

Alternatively, the radio access network device further includes a caller data receiving unit 1601 and a caller data sending unit 1603, where
the caller data receiving unit 1601 is configured to receive the voice data by using the first data connection, where the voice data includes a second voice data packet, and the second voice data packet includes a voice payload and carries identifier information used to indicate a sequence of the second voice data packet; and
the caller data sending unit 1603 is configured to send the second voice data packet to the core network device by using the second data connection.

Alternatively, the radio access network device further includes a caller data receiving unit 1601 and a caller data sending unit 1603, where
the caller data receiving unit 1601 is configured to receive the voice data by using the first data connection, where the voice data includes a third voice data packet, and the third voice data packet includes a voice payload and a voice over Internet Protocol VoIP protocol header and carries identifier information used to indicate a sequence of the third voice data packet; and
the caller data sending unit 1603 is configured to send the third voice data packet to the core network device by using the second data connection.

Further, this embodiment of the present invention further provides related functional units having a data transmission function. As shown in FIG. 8, details are as follows: A data restoration unit 1702 is indicated by using a dashed line, and the unit is required only when a protocol header of voice data needs to be restored, and the data restoration unit 1702 is not required in other cases. Details are as follows: The radio access network device further includes a callee data receiving unit 1701 and a callee data sending unit 1703, where
the callee data receiving unit 1701 is configured to receive the voice data from the called terminal by using the second data connection, where the voice data includes a voice payload; and
the callee data sending unit 1703 is configured to send the voice payload to the calling terminal by using the first data connection.

Alternatively, the radio access network device further includes a callee data receiving unit 1701 and a callee data sending unit 1703, where
the callee data receiving unit 1701 is configured to receive the voice data from the called terminal by using the second data connection, where the voice data includes a voice payload and configuration of the voice payload; and
the callee data sending unit 1703 is configured to send the configuration information and the voice payload to the calling terminal by using the first data connection.

Alternatively, the radio access network device further includes a callee data receiving unit 1701, a data restoration unit 1702, and a callee data sending unit 1703, where
the callee data receiving unit 1701 is configured to receive the voice data from the called terminal by using the second data connection, where the voice data includes a voice payload and configuration of the voice payload;
the data restoration unit 1702 is configured to restore a protocol header of the voice payload based on the configuration information to obtain a voice data packet carrying the protocol header; and
the callee data sending unit 1703 is configured to send the voice data packet carrying the protocol header to the calling terminal by using the first data connection.

Alternatively, the radio access network device further includes a callee data receiving unit 1701 and a callee data sending unit 1703, where
the callee data receiving unit 1701 is configured to receive the voice data from the called terminal by using the second data connection, where the voice data includes a fourth voice data packet, and the fourth voice data packet includes a voice payload and an L2 protocol header; and
the callee data sending unit 1703 is configured to send the fourth voice data packet to the calling terminal by using the first data connection.

Alternatively, the radio access network device further includes a callee data receiving unit 1701 and a callee data sending unit 1703, where
the callee data receiving unit 1701 is configured to receive the voice data from the called terminal by using the second data connection, where the voice data includes a fifth voice data packet, and the fifth voice data packet includes a voice payload and carries identifier information used to indicate a sequence of the fifth voice data packet; and
the callee data sending unit 1703 is configured to send the fifth voice data packet to the calling terminal by using the first data connection.

Alternatively, the radio access network device further includes a callee data receiving unit 1701 and a callee data sending unit 1703, where
the callee data receiving unit 1701 is configured to receive the voice data by using the second data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and
the callee data sending unit 1703 is configured to send the sixth voice data packet to the calling terminal by using the first data connection.

Still referring to FIG. 8, in this embodiment, the radio access network device further includes a caller data receiving unit 1601 and a caller data sending unit 1603, where
the caller data receiving unit 1601 is configured to receive the voice data by using the first data connection, where the voice data includes a voice payload; and the caller data sending unit 1603 is configured to send the voice payload to the core network device by using the second data connection.

Alternatively, the radio access network device further includes a caller data receiving unit 1601, a caller data sending unit 1603, and a data restoration unit 1602, where
the caller data receiving unit 1601 is configured to receive the voice data by using the first data connection, where the voice data includes a voice payload and configuration information of the voice payload;
the data restoration unit 1602 is configured to restore a protocol header of the voice payload based on the configuration information to obtain a voice data packet carrying the protocol header obtained through restoration; and
the caller data sending unit 1603 is configured to send, to the core network device by using the second data connection, the voice data packet carrying the protocol header obtained through restoration.

Alternatively, the radio access network device further includes a caller data receiving unit 1601 and a caller data sending unit 1603, where
the caller data receiving unit 1601 is configured to receive the voice data by using the first data connection, where the voice data includes a voice payload and configuration information of the voice payload; and
the caller data sending unit 1603 is configured to send the configuration information and the voice payload to the core network device by using the second data connection.

Still referring to FIG. 8, in this embodiment, the radio access network device further includes a callee data receiving unit 1701 and a callee data sending unit 1703, where
the callee data receiving unit 1701 is configured to receive the voice data from the called terminal by using the second data connection, where the voice data includes a voice payload; and
the callee data sending unit 1703 is configured to send the voice payload to the calling terminal by using the first data connection.

Alternatively, the radio access network device further includes a callee data receiving unit 1701 and a callee data sending unit 1703, where
the callee data receiving unit 1701 is configured to receive the voice data by using the second data connection, where the voice data includes a voice payload and configuration information of the voice payload; and
the callee data sending unit 1703 is configured to send the configuration information and the voice payload to the calling terminal by using the first data connection.

Alternatively, the radio access network device further includes a callee data receiving unit 1701, a data restoration unit 1702, and a callee data sending unit 1703, where
the callee data receiving unit 1701 is configured to receive the voice data by using the second data connection, where the voice data includes a voice payload and configuration information of the voice payload;
the data restoration unit 1702 is configured to restore a protocol header of the voice payload based on the configuration information to obtain a voice data packet carrying the protocol header obtained through restoration; and
the callee data sending unit 1703 is configured to send, to the calling terminal by using the first data connection, the voice data packet carrying the protocol header obtained through restoration.

Still referring to FIG. 8, in this embodiment, the radio access network device further includes a caller data receiving unit 1601 and a caller data sending unit 1603, where
the caller data receiving unit 1601 is configured to receive the voice data by using the first data connection, where the voice data includes a first voice data packet, and the first voice data packet includes a voice payload and a data link layer L2 protocol header; and
the caller data sending unit 1603 is configured to send the first voice data packet to the core network device by using the second data connection.

Alternatively, the radio access network device further includes a caller data receiving unit 1601 and a caller data sending unit 1603, where
the caller data receiving unit 1601 is configured to receive the voice data by using the first data connection, where the voice data includes a second voice data packet, and the second voice data packet includes a voice payload and carries identifier information used to indicate a sequence of the second voice data packet; and
the caller data sending unit 1603 is configured to send the second voice data packet to the core network device by using the second data connection.

Alternatively, the radio access network device further includes a caller data receiving unit 1601 and a caller data sending unit 1603, where
the caller data receiving unit 1601 is configured to receive the voice data by using the first data connection, where the voice data includes a third voice data packet, and the third voice data packet includes a voice payload and a voice over Internet Protocol VoIP protocol header and carries identifier information used to indicate a sequence of the third voice data packet; and
the caller data sending unit 1603 is configured to send the third voice data packet to the core network device by using the second data connection.

Still referring to FIG. 8, in this embodiment, the radio access network device further includes a callee data receiving unit 1701 and a callee data sending unit 1703, where
the callee data receiving unit 1701 is configured to receive the voice data from the called terminal by using the second data connection, where the voice data includes a fourth voice data packet, and the fourth voice data packet includes a voice payload and an L2 protocol header; and
the callee data sending unit 1703 is configured to send the fourth voice data packet to the calling terminal by using the first data connection.

Alternatively, the radio access network device further includes a callee data receiving unit 1701 and a callee data sending unit 1703, where
the callee data receiving unit 1701 is configured to receive the voice data from the called terminal by using the fourth data connection, where the voice data includes a fifth voice data packet, and the fifth voice data packet includes a voice payload and carries identifier information used to indicate a sequence of the fifth voice data packet; and
the callee data sending unit 1703 is configured to send the fifth voice data packet to the calling terminal by using the first data connection.

Alternatively, the radio access network device further includes a callee data receiving unit 1701 and a callee data sending unit 1703, where
the callee data receiving unit 1701 is configured to receive the voice data by using the second data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and
the callee data sending unit 1703 is configured to send the sixth voice data packet to the calling terminal by using the first data connection.

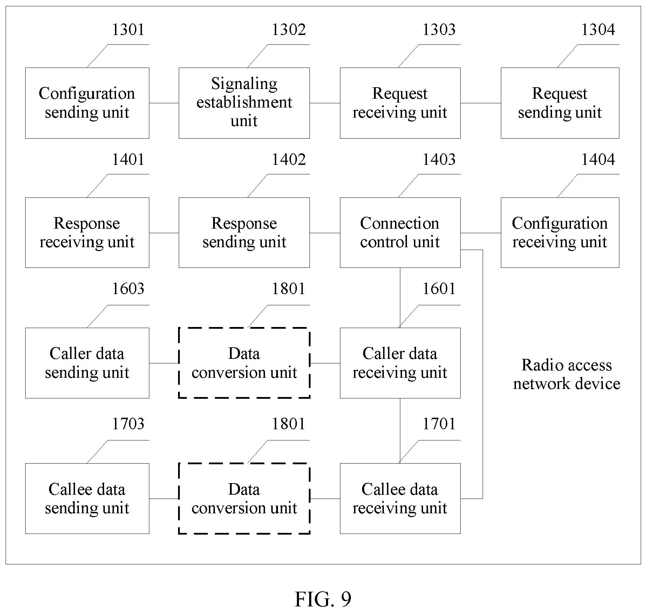

Further, if formats of data transmitted on the first data connection and the second data connection are different, and the first data connection and the second data connection are established based on different domains, data conversion may need to be performed. As shown in FIG. 9, the radio access network device further includes:
a data conversion unit 1801, configured to: before the callee data sending unit 1703 or the caller data sending unit 1603 sends the voice data, convert CS domain voice data received by the callee data receiving unit 1701 or the caller data receiving unit 1601 into PS domain voice data, or convert PS domain voice data received by the callee data receiving unit 1701 or the caller data receiving unit 1601 into CS domain voice data, where the PS domain voice data includes at least one of the voice data packet carrying the protocol header, the first voice data packet, the second voice data packet, the third voice data packet, the fourth voice data packet, the fifth voice data packet, and the sixth voice data packet, and the CS domain voice data includes the voice payload.

Optionally, the protocol header obtained through restoration is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

Further, as shown in FIG. 8, this embodiment of the present invention further provides a technical solution for performing priority control to control quality of service of the voice. Details are as follows: The radio access network device further includes an information reading unit 1901 and a priority control unit 1902.

The information reading unit 1901 is configured to read indication carried in the voice data.

The priority control unit 1902 is configured to increase a priority of the voice data based on the indication information.

Alternatively, as shown in FIG. 8, the radio access network device further includes an information adding unit 1903.

The information adding unit 1903 is configured to add, to the voice data, indication information used to increase a priority of sending in a network.

The voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

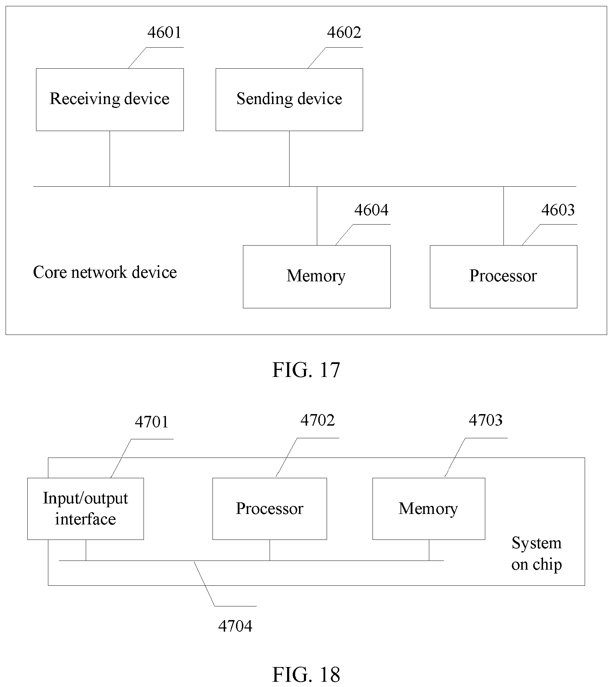

In the structure shown in FIG. 8, the information reading unit 1901 and the priority control unit 1902, and the information adding unit 1903 may replace each other to form a new structure. In addition, the information reading unit 1901 and the priority control unit 1902, and the information adding unit 1903 may be further combined with the structure in FIG. 18. A principle of the solution is not described again herein.

Further, as shown in FIG. 8, based on the technical solution for transmitting the voice data on an air interface according to this embodiment of the present invention, this embodiment further provides a schematic diagram of a specific structure as follows: The radio access network device further includes a data transceiver unit 2001.

The data transceiver unit 2001 is configured to receive or send the voice data by using the first data connection.

A mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

Optionally, the data transceiver unit 2001 is specifically configured to send the voice data in frequency hopping mode on the at least one subcarrier.

Optionally, the data transceiver unit 2001 is specifically configured to map, on the at least one subcarrier based on a predetermined frequency hopping mechanism, the voice data to the at least one subcarrier for sending; or
the data transceiver unit 2001 is specifically configured to: when signal strength of a voice-dedicated subcarrier is higher than a second threshold, send the voice data by using the voice-dedicated subcarrier, and when the signal strength of the voice-dedicated subcarrier is lower than a first threshold, send the voice data by using a common reserved subcarrier.

Optionally, a single timeslot resource block on the air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

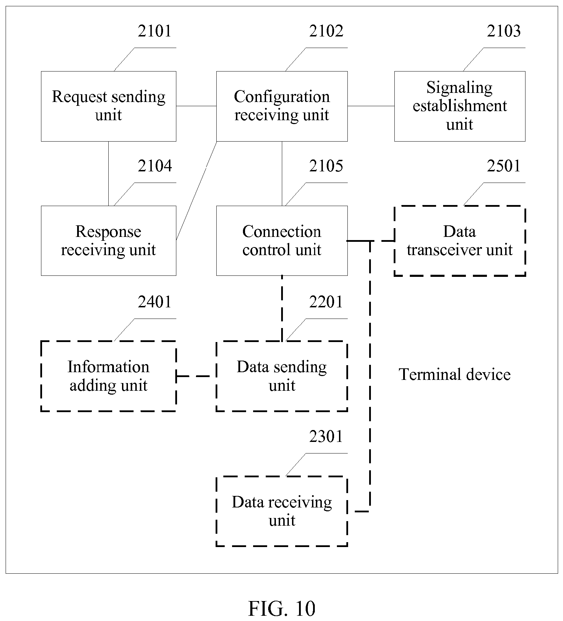

An embodiment of the present invention further provides a terminal device. As shown in FIG. 10, the terminal device is used as a calling terminal and includes:
a request sending unit 2101, configured to send a connection establishment request to a radio access network device;
a configuration receiving unit 2102, configured to receive first configuration information sent by the radio access network device;
a signaling establishment unit 2103, configured to establish a voice-dedicated domain based first signaling connection between the terminal device and the radio access network device based on the first configuration information; where the request sending unit 2101 is further configured to send a call establishment request to the radio access network device by using the first signaling connection, where the call establishment request carries identifier information of a called terminal, and the identifier information of the called terminal is used by the radio access network device or the core network device to identify the called terminal;
a response receiving unit 2104, configured to determine, after receiving a call response sent by the radio access network device, that a call is successful; where the configuration receiving unit 2102 is further configured to receive second configuration information sent by the radio access network device; and a connection control unit 2105, configured to establish a voice-dedicated domain based first data connection between the terminal device and the radio access network device based on the second configuration information.

Optionally, the voice-dedicated domain is a circuit switched CS domain or an Internet Protocol multimedia subsystem IMS domain.

Optionally, the request sending unit 2101 is specifically configured to transmit the call establishment request by using any one of the following signaling connections: non-access stratum NAS signaling, Session Initiation Protocol SIP signaling, and SIP signaling carried in NAS signaling.

Further, as shown in FIG. 10, the voice-dedicated domain based first data connection includes a packet switched PS domain based first data connection dedicated to carrying voice data; and
the terminal device further includes a data sending unit 2201, where the data sending unit 2201 is configured to send the voice data to the radio access network device by using the first data connection, where the voice data includes a voice payload.

Alternatively, the terminal device further includes a data sending unit 2201, where the data sending unit 2201 is configured to send the voice data to the radio access network device by using the first data connection, where the voice data includes a voice payload and configuration information of the voice payload.

Alternatively, the terminal device further includes a data sending unit 2201, where
the data sending unit 2201 is configured to send the voice data to the radio access network device by using the first data connection, where the voice data includes a first voice data packet, and the first voice data packet includes a voice payload and a data link layer L2 protocol header.

Alternatively, the terminal device further includes a data sending unit 2201, where
the data sending unit 2201 is configured to send the voice data to the radio access network device by using the first data connection, where the voice data includes a second voice data packet, and the second voice data packet includes a voice payload and carries identifier information used to indicate a sequence of the second voice data packet.

Alternatively, the terminal device further includes a data sending unit 2201, where
the data sending unit 2201 is configured to send the voice data to the radio access network device by using the first data connection, where the voice data includes a third voice data packet, and the third voice data packet includes a voice payload and a voice over Internet Protocol VoIP protocol header and carries identifier information used to indicate a sequence of the third voice data packet.

Further, as shown in FIG. 10, this embodiment further provides a voice data receiving function of the terminal device. The voice-dedicated domain based first data connection includes a PS domain based first data connection dedicated to carrying voice data; and
the terminal device further includes a data receiving unit 2301, where
the data receiving unit 2301 is configured to receive the voice data that is from the called terminal and is sent by the radio access network device, where the voice data includes a voice payload.

Alternatively, the terminal device further includes a data receiving unit 2301, where
the data receiving unit 2301 is configured to receive the voice data that is from the called terminal and is sent by the radio access network device, where the voice data includes a voice payload and configuration information of the voice payload.

Alternatively, the terminal device further includes a data receiving unit 2301, where
the data receiving unit 2301 is configured to receive the voice data that is from the called terminal and is sent by the radio access network device, where the voice data includes a fourth voice data packet, and the fourth voice data packet includes a voice payload and an L2 protocol header.

Alternatively, the terminal device further includes a data receiving unit 2301, where
the data receiving unit 2301 is configured to receive the voice data that is from the called terminal and is sent by the radio access network device, where the voice data includes a fifth voice data packet, and the fifth voice data packet includes a voice payload and carries identifier information used to indicate a sequence of the fifth voice data packet.

Alternatively, the terminal device further includes a data receiving unit 2301, where
the data receiving unit 2301 is configured to receive the voice data that is from the called terminal and is sent by the radio access network device, where the voice data includes a sixth voice data packet, and the sixth voice data packet includes a voice payload and a voice over Internet Protocol VoIP protocol header and carries, in L2, identifier information used to indicate a sequence of the sixth voice data packet.

Still referring to FIG. 10, the voice-dedicated domain based first data connection includes a CS domain based first data connection dedicated to carrying voice data; and
a CS domain based second data connection exists between the radio access network device and the core network device, and the terminal device further includes a data receiving unit 2301, where
the data receiving unit 2301 is configured to receive the voice data that is from the called terminal and is sent by the radio access network device, where the voice data includes a voice payload; or receive the voice data that is from the called terminal and is sent by the radio access network device, where the voice data includes a voice payload and configuration information of the voice payload.

Alternatively, a CS domain based second data connection exists between the radio access network device and the core network device, and the terminal device further includes a data sending unit 2201, where
the data sending unit 2201 is configured to: send the voice data to the radio access network device by using the first data connection, where the voice data includes a first voice data packet, and the first voice data packet includes a voice payload and a data link layer L2 protocol header; or send the voice data to the radio access network device by using the first data connection, where the voice data includes a second voice data packet, and the second voice data packet includes a voice payload and carries identifier information used to indicate a sequence of the second voice data packet; or send the voice data to the radio access network device by using the first data connection, where the voice data includes a third voice data packet, and the third voice data packet includes a voice payload and a voice over Internet Protocol VoIP protocol header and carries identifier information used to indicate a sequence of the third voice data packet.

Still referring to FIG. 10, the voice-dedicated domain based first data connection includes a PS domain based first data connection dedicated to carrying voice data; and
a CS domain based second data connection exists between the radio access network device and the core network device, and the terminal device further includes a data receiving unit 2301, where
the data receiving unit 2301 is configured to receive the voice data that is from the called terminal and is sent by the radio access network device, where the voice data includes a voice payload; or receive the voice data that is from the called terminal and is sent by the radio access network device, where the voice data includes a voice payload and configuration information of the voice payload.

Alternatively, a CS domain based second data connection exists between the radio access network device and the core network device, and the terminal device further includes a data receiving unit 2301, where
the data receiving unit 2301 is configured to: receive the voice data that is from the called terminal and is sent by the radio access network device, where the voice data includes a fourth voice data packet, and the fourth voice data packet includes a voice payload and an L2 protocol header; or receive the voice data that is from the called terminal and is sent by the radio access network device, where the voice data includes a fifth voice data packet, and the fifth voice data packet includes a voice payload and carries identifier information used to indicate a sequence of the fifth voice data packet;
or receive the voice data that is from the called terminal and is sent by the radio access network device, where the voice data includes a sixth voice data packet, and the sixth voice data packet includes a voice payload and a voice over Internet Protocol VoIP protocol header and carries, in L2, identifier information used to indicate a sequence of the sixth voice data packet.

Further, this embodiment of the present invention further provides a quality of service control function for performing a voice service on the terminal device. As shown in FIG. 10, details are as follows: The terminal device further includes an information adding unit 2401.

The information adding unit 2401 is configured to add, to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

Further, based on a transmission mode of the voice data on an air interface according to this embodiment of the present invention, this embodiment further provides an implementation example of a specific structure. As shown in FIG. 10, the terminal device further includes a data transceiver unit 2501.

The data transceiver unit 2501 is configured to receive or send the voice data by using the first data connection.

A mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

Optionally, the data transceiver unit 2501 is specifically configured to send the voice data in frequency hopping mode on the at least one subcarrier.

Optionally, the data transceiver unit 2501 is specifically configured to map, on the at least one subcarrier based on a predetermined frequency hopping mechanism, the voice data to the at least one subcarrier for sending; or
the data transceiver unit 2501 is specifically configured to: when signal strength of a voice-dedicated subcarrier is higher than a second threshold, send the voice data by using the voice-dedicated subcarrier, and when the signal strength of the voice-dedicated subcarrier is lower than a first threshold, send the voice data by using a common reserved subcarrier.

Optionally, a single timeslot resource block on the air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

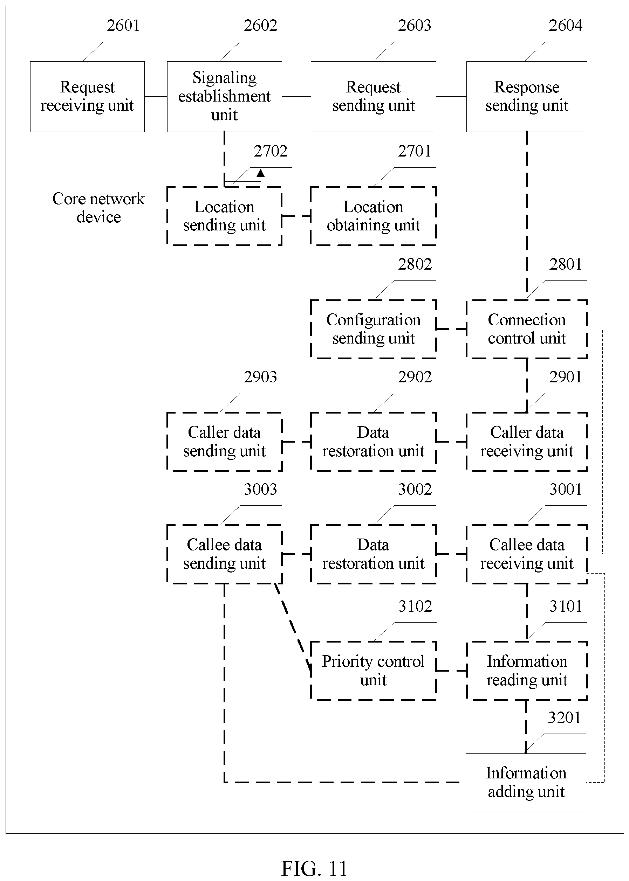

As shown in FIG. 11, an embodiment of the present invention further provides a core network device, including:
a request receiving unit 2601, configured to receive a call establishment request that is from a calling terminal and is sent by a radio access network device;
a signaling establishment unit 2602, configured to establish a voice-dedicated domain based second signaling connection between the core network device and the radio access network device, where the call establishment request carries identifier information of a called terminal, and the identifier information of the called terminal is used by the radio access network device or the core network device to identify the called terminal;
a request sending unit 2603, configured to initiate a call establishment request to the called terminal; where
the signaling establishment unit 2602 is further configured to establish a voice-dedicated domain based third signaling connection between the core network device and the called terminal; and
a response sending unit 2604, configured to send, after the core network device receives a call response returned by the called terminal, the call response to the radio access network device.

Further, because the called terminal and the calling terminal may be within coverage of different radio access network devices, this embodiment provides a location query function for the core network device. As shown in FIG. 11, details are as follows: the core network device further includes a location obtaining unit 2701 and a location sending unit 2702, where
the location obtaining unit 2701 is configured to determine a home location of the called terminal before the signaling establishment unit 2602 establishes the voice-dedicated domain based third signaling connection between the core network device and the called terminal; and
the location sending unit 2702 is configured to send information about the home location of the called terminal to the radio access network device.

The signaling establishment unit 2602 may be further configured to perform any one of the following:
if the called terminal is in a service range of another radio access network device in a service range of the core network device, establishing the third signaling connection between the core network device and the called terminal through the another radio access network device; or
if the called terminal is beyond a service range of the core network device, establishing the third signaling connection between the core network device and the called terminal through a radio access network device and a core network device to which the called terminal belongs.

Further, this embodiment of the present invention further provides an implementation solution in which the core network participates in voice data forwarding and corresponding signaling connection establishment. As shown in FIG. 11, the core network device further includes a connection control unit 2801 and a configuration sending unit 2802, where
the connection control unit 2801 is configured to: after the core network device receives the call response returned by the called terminal, establish a CS domain based second data connection dedicated to carrying voice data, between the core network device and the radio access network device, and establish a third data connection between the core network device and the called terminal through a radio access network device and a core network device to which the called terminal belongs;
the configuration sending unit 2802 is configured to send second configuration information to the radio access network device, where the second configuration information carries a parameter required for establishing a voice-dedicated domain based first data connection between the radio access network device and the calling terminal;
the connection control unit 2801 is further configured to establish a voice-dedicated domain based data connection between the core network device and the radio access network device if the called terminal and the calling terminal belong to different radio access network devices; and
the configuration sending unit 2802 is further configured to send third configuration information to the radio access network device to which the called terminal belongs, where the second configuration information carries a parameter required for establishing a voice-dedicated domain based third data connection between the radio access network device to which the called terminal belongs and the called terminal.

Further, as shown in FIG. 11, this embodiment further provides a specific implementation solution in which the core network participates in voice data forwarding. A data restoration unit 2902 is an optional unit, and exists when there is a request for requiring data restoration. A dashed line indicates that a unit is not mandatory. The core network device further includes a caller data receiving unit 2901 and a caller data sending unit 2903, where
the caller data receiving unit 2901 is configured to receive the voice data by using the second data connection, where the voice data includes a voice payload; and the caller data sending unit 2903 is configured to send the voice payload to the called terminal by using the third data connection.

Alternatively, the core network device further includes a caller data receiving unit 2901 and a caller data sending unit 2903, where
the caller data receiving unit 2901 is configured to receive the voice data by using the second data connection, where the voice data includes a voice payload and configuration information of the voice payload; and
the caller data sending unit 2903 is configured to send the configuration information and the voice payload to the called terminal by using the third data connection.

Alternatively, the core network device further includes a caller data receiving unit 2901, a data restoration unit 2902, and a caller data sending unit 2903, where
the caller data receiving unit 2901 is configured to receive the voice data by using the second data connection, where the voice data includes a voice payload and configuration information of the voice payload;
the data restoration unit 2902 is configured to restore a protocol header of the voice payload based on the configuration information to obtain a voice data packet carrying the protocol header; and
the caller data sending unit 2903 is configured to send the voice data packet carrying the protocol header to the called terminal by using the third data connection.

Alternatively, the core network device further includes a caller data receiving unit 2901 and a caller data sending unit 2903, where
the caller data receiving unit 2901 is configured to receive the voice data by using the second data connection, where the voice data includes a first voice data packet, and the first voice data packet includes a voice payload and a data link layer L2 protocol header; and
the caller data sending unit 2903 is configured to send the first voice data packet to the called terminal by using the third data connection.

Alternatively, the core network device further includes a caller data receiving unit 2901 and a caller data sending unit 2903, where
the caller data receiving unit 2901 is configured to receive the voice data by using the second data connection, where the voice data includes a second voice data packet, and the second voice data packet includes a voice payload and carries identifier information used to indicate a sequence of the second voice data packet; and
the caller data sending unit 2903 is configured to send the second voice data packet to the called terminal by using the third data connection.

Alternatively, the core network device further includes a caller data receiving unit 2901 and a caller data sending unit 2903, where
the caller data receiving unit 2901 is configured to receive the voice data by using the second data connection, where the voice data includes a third voice data packet, and the third voice data packet includes a voice payload and a voice over Internet Protocol VoIP protocol header and carries identifier information used to indicate a sequence of the third voice data packet; and
the caller data sending unit 2903 is configured to send the third voice data packet to the called terminal by using the third data connection.

Further, the core network device may further participate in voice data forwarding on a called terminal side. As shown in FIG. 11, a data restoration unit 3002 is an optional unit, and exists when there is a request for requiring data restoration. A dashed line indicates that a unit is not mandatory. Details are as follows: The core network device further includes a callee data receiving unit 3001 and a callee data sending unit 3003, where
the callee data receiving unit 3001 is configured to receive the voice data from the called terminal by using the third data connection, where the voice data includes a voice payload; and
the callee data sending unit 3003 is configured to send the voice payload to the radio access network device by using the second data connection.

Alternatively, the core network device further includes a callee data receiving unit 3001 and a callee data sending unit 3003, where
the callee data receiving unit 3001 is configured to receive the voice data by using the third data connection, where the voice data includes a voice payload and configuration information of the voice payload; and
the callee data sending unit 3003 is configured to send the configuration information and the voice payload to the radio access network device by using the second data connection.

Alternatively, the core network device further includes a callee data receiving unit 3001, a data restoration unit 3002, and a callee data sending unit 3003, where
the callee data receiving unit 3001 is configured to receive the voice data by using the third data connection, where the voice data includes a voice payload and configuration information of the voice payload;
the data restoration unit 3002 is configured to restore a protocol header of the voice payload based on the configuration information to obtain a voice data packet carrying the protocol header; and
the callee data sending unit 3003 is configured to send the voice data packet carrying the protocol header to the radio access network device by using the second data connection.

Alternatively, the core network device further includes a callee data receiving unit 3001 and a callee data sending unit 3003, where
the callee data receiving unit 3001 is configured to receive the voice data from the called terminal by using the third data connection, where the voice data includes a fourth voice data packet, and the fourth voice data packet includes a voice payload and an L2 protocol header; and
the callee data sending unit 3003 is configured to send the fourth voice data packet to the radio access network device by using the second data connection.

Alternatively, the core network device further includes a callee data receiving unit 3001 and a callee data sending unit 3003, where
the callee data receiving unit 3001 is configured to receive the voice data from the called terminal by using the third data connection, where the voice data includes a fifth voice data packet, and the fifth voice data packet includes a voice payload and carries identifier information used to indicate a sequence of the fifth voice data packet; and
the callee data sending unit 3003 is configured to send the fifth voice data packet to the radio access network device by using the second data connection.

Alternatively, the core network device further includes a callee data receiving unit 3001 and a callee data sending unit 3003, where
the callee data receiving unit 3001 is configured to receive the voice data by using the third data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and
the callee data sending unit 3003 is configured to send the sixth voice data packet to the radio access network device by using the second data connection.

Optionally, the protocol header obtained through restoration is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

Further, the core network device side may further provide a function for controlling quality of service of a voice service. Details are as follows: As shown in FIG. 11, units in this embodiment may be combined with any structure capable of voice data transmission. The structure shown in FIG. 11 is used as an example, and should not be understood as a uniqueness limitation to this embodiment. The core network device further includes an information reading unit 3101 and a priority control unit 3102.

The information reading unit 3101 is configured to read indication carried in the voice data.

The priority control unit 3102 is configured to increase a priority of the voice data based on the indication information. Alternatively, as shown in FIG. 11, the core network device further includes an information adding unit 3201.

The information adding unit 3201 is configured to add, to the voice data, indication information used to increase a priority of sending in a network.

The voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

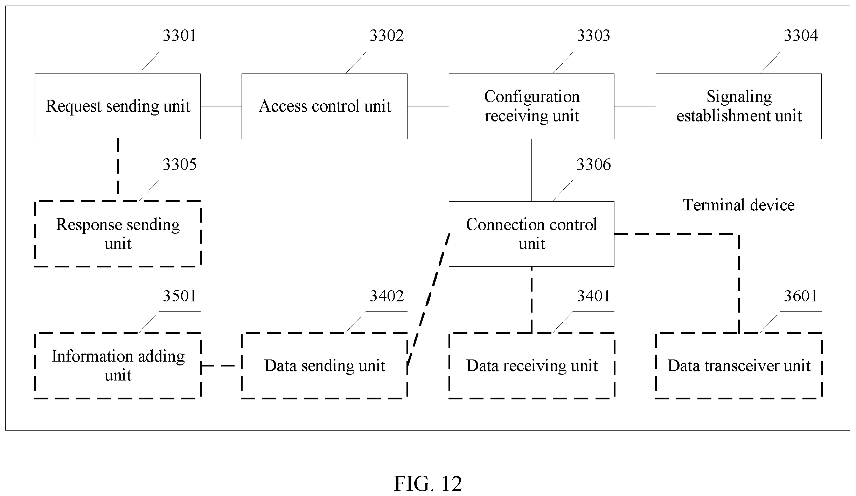

An embodiment of the present invention further provides a terminal device. As shown in FIG. 12, the terminal device is used as a called terminal and includes:
a request sending unit 3301, configured to send a connection request to a called-side radio access network device to which the called terminal belongs;
an access control unit 3302, configured to access the called-side radio access network device;
a configuration receiving unit 3303, configured to receive fourth configuration information sent by the called-side radio access network device;
a signaling establishment unit 3304, configured to establish a voice-dedicated domain based third signaling connection between the terminal device and the called-side radio access network device based on the fourth configuration information; where the request sending unit 3301 is further configured to receive a call establishment request from a calling terminal by using the third signaling connection;
a response sending unit 3305, configured to send a call response to the called-side radio access network device; where
the configuration receiving unit 3303 is further configured to receive third configuration information sent by the called-side radio access network device; and a connection control unit 3306, configured to establish a voice-dedicated domain based seventh data connection between the terminal device and the called-side radio access network device according to the third configuration information.

Optionally, the voice-dedicated domain is a circuit switched CS domain or an Internet Protocol multimedia subsystem IMS domain.

Optionally, the request sending unit 3301 is specifically configured to transmit the call establishment request by using any one of the following signaling connections: non-access stratum NAS signaling, Session Initiation Protocol SIP signaling, and SIP signaling carried in NAS signaling.

Further, as shown in FIG. 12, a data receiving unit 3401 and a data sending unit 3402 are not mandatory units. If the terminal device supports only a voice data sending function or supports only a voice data receiving function, only one of the data receiving unit 3401 and the data sending unit 3402 may be included. The seventh data connection is a PS domain based seventh data connection dedicated to carrying voice data, and a PS domain based connection dedicated to carrying the voice data also exists between the called-side radio access network device and a called-side core network device.

The terminal device further includes a data receiving unit 3401, where
the data receiving unit 3401 is configured to receive a voice payload by using the seventh data connection.

Alternatively, the terminal device further includes a data receiving unit 3401, where
the data receiving unit 3401 is configured to receive a voice payload and
configuration information of the voice payload by using the seventh data connection.

Alternatively, the terminal device further includes a data receiving unit 3401 and a data sending unit 3402, where
the data receiving unit 3401 is configured to receive the voice data by using the seventh data connection, where the voice data includes a first voice data packet, and the first voice data packet includes a voice payload and a data link layer L2 protocol header; and
the data sending unit 3402 is configured to send the first voice data packet to the core network device by using the seventh data connection.

Alternatively, the terminal device further includes a data receiving unit 3401 and a data sending unit 3402, where
the data receiving unit 3401 is configured to receive a second voice data packet by using the seventh data connection, where the second voice data packet includes a voice payload and carries identifier information used to indicate a sequence of the second voice data packet; and
the data sending unit 3402 is configured to send the second voice data packet to the radio access network device by using the seventh data connection.

Alternatively, the terminal device further includes a data receiving unit 3401 and a data sending unit 3402, where
the data receiving unit 3401 is configured to receive, by the called terminal, a third voice data packet by using the seventh data connection, where the third voice data packet includes a voice payload and a voice over Internet Protocol VoIP protocol header and carries identifier information used to indicate a sequence of the third voice data packet; and
the data sending unit 3402 is configured to send the third voice data packet to the radio access network device by using the seventh data connection.

Alternatively, the terminal device further includes a data sending unit 3402, where
the data sending unit 3402 is configured to send a voice payload to the called-side radio access network device by using the seventh data connection.

Alternatively, the terminal device further includes a data sending unit 3402, where
the data sending unit 3402 is configured to send a voice payload and configuration information of the voice payload to the called-side radio access network device by using the seventh data connection.

Alternatively, the terminal device further includes a data sending unit 3402, where
the data sending unit 3402 is configured to send a fourth voice data packet to the called-side radio access network device by using the seventh data connection, where the fourth voice data packet includes a voice payload and an L2 protocol header.

Alternatively, the terminal device further includes a data sending unit 3402, where
the data sending unit 3402 is configured to send a fifth voice data packet to the called-side radio access network device by using the seventh data connection, and the fifth voice data packet includes a voice payload and carries identifier information used to indicate a sequence of the fifth voice data packet.

Alternatively, the terminal device further includes a data sending unit 3402, where the data sending unit 3402 is configured to send a sixth voice data packet to the called-side radio access network device by using the seventh data connection, where the sixth voice data packet includes a voice payload and a voice over Internet Protocol VoIP protocol header and carries, in L2, identifier information used to indicate a sequence of the sixth voice data packet.

Optionally, still referring to FIG. 12, the seventh data connection is a CS domain based seventh data connection dedicated to carrying voice data, and a CS domain based connection dedicated to carrying the voice data exists between the called-side radio access network device and a called-side core network device; and the terminal device further includes a data receiving unit 3401, where
the data receiving unit 3401 is configured to receive a voice payload by using the seventh data connection.

Alternatively, the terminal device further includes a data receiving unit 3401, where
the data receiving unit 3401 is configured to receive a voice payload and configuration information of the voice payload by using the seventh data connection.

Alternatively, the terminal device further includes a data sending unit 3402, where
the data sending unit 3402 is configured to send a voice payload to the called-side radio access network device by using the seventh data connection.

Alternatively, the terminal device further includes a data sending unit 3402, where
the data sending unit 3402 is configured to send a voice payload and configuration information of the voice payload to the called-side radio access network device by using the seventh data connection.

Optionally, still referring to FIG. 12, the seventh data connection is a PS domain based seventh data connection dedicated to carrying voice data, and a CS domain based connection dedicated to carrying the voice data exists between the called-side radio access network device and a called-side core network device; and
the terminal device further includes a data receiving unit 3401 and a data sending unit 3402, where
the data receiving unit 3401 is configured to receive the voice data by using the seventh data connection, where the voice data includes a first voice data packet, and the first voice data packet includes a voice payload and a data link layer L2 protocol header; and
the data sending unit 3402 is configured to send the first voice data packet to the core network device by using the seventh data connection.

Alternatively, the terminal device further includes a data receiving unit 3401 and a data sending unit 3402, where
the data receiving unit 3401 is configured to receive a second voice data packet by using the seventh data connection, where the second voice data packet includes a voice payload and carries identifier information used to indicate a sequence of the second voice data packet; and
the data sending unit 3402 is configured to send the second voice data packet to the radio access network device by using the seventh data connection.

Alternatively, the terminal device further includes a data receiving unit 3401 and a data sending unit 3402, where
the data receiving unit 3401 is configured to receive a third voice data packet by using the seventh data connection, where the third voice data packet includes a voice payload and a voice over Internet Protocol VoIP protocol header and carries identifier information used to indicate a sequence of the third voice data packet; and
the data sending unit 3402 is configured to send the third voice data packet to the radio access network device by using the seventh data connection.

Alternatively, the terminal device further includes a data sending unit 3402, where
the data sending unit 3402 is configured to send a fourth voice data packet to the called-side radio access network device by using the seventh data connection, where the fourth voice data packet includes a voice payload and an L2 protocol header.

Alternatively, the terminal device further includes a data sending unit 3402, where
the data sending unit 3402 is configured to send a fifth voice data packet to the called-side radio access network device by using the seventh data connection, and the fifth voice data packet includes a voice payload and carries identifier information used to indicate a sequence of the fifth voice data packet.

Alternatively, the terminal device further includes a data sending unit 3402, where
the data sending unit 3402 is configured to send a sixth voice data packet to the called-side radio access network device by using the seventh data connection, where the sixth voice data packet includes a voice payload and a voice over Internet Protocol VoIP protocol header and carries, in L2, identifier information used to indicate a sequence of the sixth voice data packet.

Optionally, the protocol header obtained through restoration is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

Further, a terminal device side may further provide a function for controlling quality of service of voice data. Details are as follows: As shown in FIG. 12, the terminal device further includes an information adding unit 3501.

The information adding unit 3501 is configured to add, to the voice data, indication information used to increase a priority of sending in a network; where the voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

Further, based on a transmission mode of the voice data on an air interface in this embodiment of the present invention, this embodiment of the present invention further provides an implementation of a specific structure. As shown in FIG. 12, the terminal device further includes a data transceiver unit 3601.

The data transceiver unit 3601 is configured to receive or send the voice data by using the seventh data connection.

A mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

Optionally, the data transceiver unit 3601 is specifically configured to send the voice data in frequency hopping mode on the at least one subcarrier.

Optionally, the data transceiver unit 3601 is specifically configured to map, on the at least one subcarrier based on a predetermined frequency hopping mechanism, the voice data to the at least one subcarrier for sending; or
the data transceiver unit 3601 is specifically configured to: when signal strength of a voice-dedicated subcarrier is higher than a second threshold, send the voice data by using the voice-dedicated subcarrier, and when the signal strength of the voice-dedicated subcarrier is lower than a first threshold, send the voice data by using a common reserved subcarrier.

Optionally, a single timeslot resource block on the air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

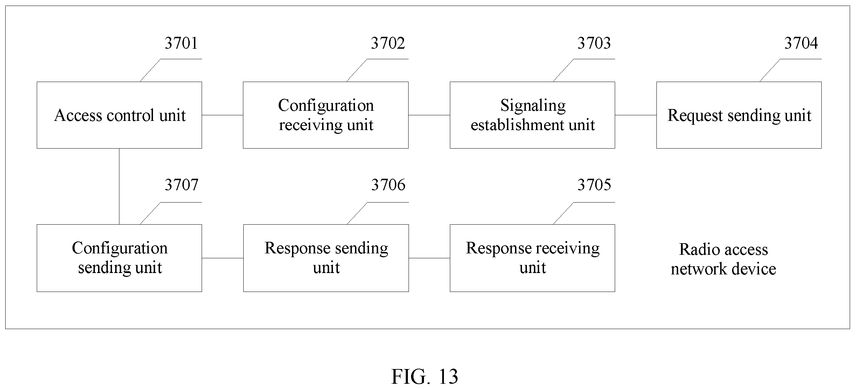

An embodiment of the present invention further provides another radio access network device. The radio access network device is used as a radio access network device on a called terminal side, and as shown in FIG. 13, includes:
an access control unit 3701, configured to: after the radio access network device receives a connection establishment request from a called terminal, allow the called terminal to access the radio access network device;
a configuration receiving unit 3702, configured to receive fourth configuration information from the core network device;
a signaling establishment unit 3703, configured to establish a voice-dedicated domain based third signaling connection between the radio access network device and the called terminal based on the fourth configuration information;
a request sending unit 3704, configured to send the call establishment request to the called terminal by using the third signaling;
a response receiving unit 3705, configured to receive a call response sent by the called terminal;
a response sending unit 3706, configured to send the call response to the core network device; and
a configuration sending unit 3707, configured to send third configuration information to the called terminal; where
the access control unit 3701 is further configured to establish a voice-dedicated domain based seventh data connection between the radio access network device and the called terminal based on the third configuration information.

Optionally, the voice-dedicated domain is a circuit switched CS domain or an Internet Protocol multimedia subsystem IMS domain.

Optionally, the call establishment request sent by the calling terminal is transmitted by using any one of the following signaling connections: non-access stratum NAS signaling, Session Initiation Protocol SIP signaling, and SIP signaling carried in NAS signaling.

Optionally, the voice-dedicated domain based data connection between the radio access network device and the called terminal is a PS domain based seventh data connection dedicated to carrying voice data; and a PS domain based sixth data connection dedicated to carrying the voice data exists between the radio access network device and the core network device; or
the voice-dedicated domain based data connection between the radio access network device and the called terminal is a CS domain based seventh data connection dedicated to carrying voice data; and a CS domain based sixth data connection dedicated to carrying the voice data exists between the radio access network device and the core network device; or
the voice-dedicated domain based data connection between the radio access network device and the called terminal is a PS domain based seventh data connection dedicated to carrying voice data; and a CS domain based sixth data connection dedicated to carrying the voice data exists between the radio access network device and the core network device.

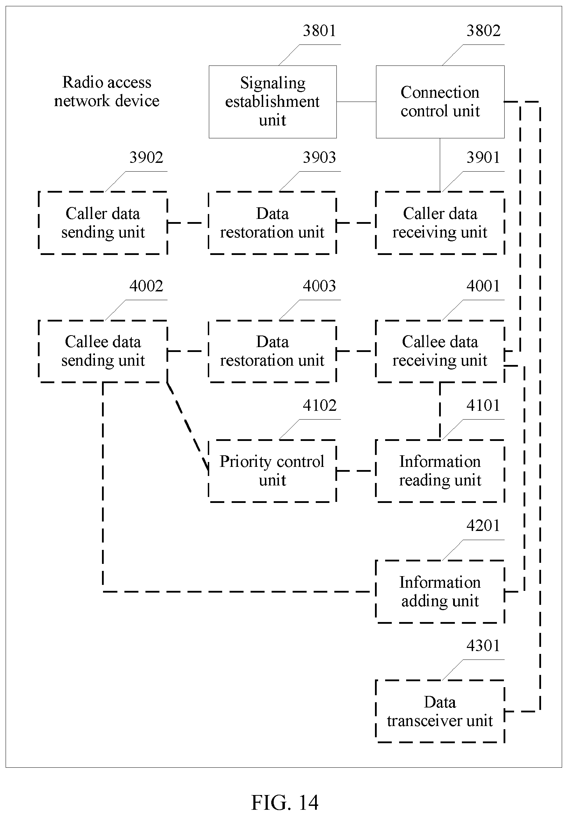

An embodiment of the present invention further provides another radio access network device. The radio access network device is used as a radio access network device on a calling terminal side, and as shown in FIG. 14, includes:
a signaling establishment unit 3801, configured to establish a packet switched PS domain based first signaling connection between the radio access network device and a calling terminal, and establish a PS domain based second signaling connection between the radio access network device and a core network device; and
a connection control unit 3802, configured to establish a PS domain based second data connection dedicated to carrying voice data, between the radio access network device and the core network device; and establish a circuit switched CS domain based first data connection dedicated to carrying the voice data, between the radio access network device and the calling terminal.

Further, based on the established data connection, this embodiment further provides a voice data forwarding function. As shown in FIG. 14, a data restoration unit 3903 is required only in an application scenario of data restoration, and a dashed line is used to indicate that the unit is an optional unit and not a mandatory functional unit. The radio access network device further includes a caller data receiving unit 3901 and a caller data sending unit 3902, where
the caller data receiving unit 3901 is configured to receive the voice data by using the first data connection, where the voice data includes a voice payload; and the caller data sending unit 3902 is configured to send the voice payload to the core network device by using the second data connection.

Alternatively, the radio access network device further includes a caller data receiving unit 3901 and a caller data sending unit 3902, where
the caller data receiving unit 3901 is configured to receive the voice data by using the first data connection, where the voice data includes a voice payload and configuration information of the voice payload; and
the caller data sending unit 3902 is configured to send the configuration information and the voice payload to the core network device by using the second data connection.

Alternatively, the radio access network device further includes a caller data receiving unit 3901, a data restoration unit 3903, and a caller data sending unit 3902, where
the caller data receiving unit 3901 is configured to receive the voice data by using the first data connection, where the voice data includes a voice payload and configuration information of the voice payload;
the data restoration unit 3903 is configured to restore a protocol header of the voice payload based on the configuration information to obtain a voice data packet carrying the protocol header; and
the caller data sending unit 3902 is configured to send the voice data packet carrying the protocol header to the core network device by using the second data connection.

Alternatively, the radio access network device further includes a caller data receiving unit 3901 and a caller data sending unit 3902, where
the caller data receiving unit 3901 is configured to receive the voice data by using the first data connection, where the voice data includes a first voice data packet, and the first voice data packet includes a voice payload and a data link layer L2 protocol header; and
the caller data sending unit 3902 is configured to send the first voice data packet to the core network device by using the second data connection.

Alternatively, the radio access network device further includes a caller data receiving unit 3901 and a caller data sending unit 3902, where
the caller data receiving unit 3901 is configured to receive the voice data by using the first data connection, where the voice data includes a second voice data packet, and the second voice data packet includes a voice payload and carries identifier information used to indicate a sequence of the second voice data packet; and
the caller data sending unit 3902 is configured to send the second voice data packet to the core network device by using the second data connection.

Alternatively, the radio access network device further includes a caller data receiving unit 3901 and a caller data sending unit 3902, where
the caller data receiving unit 3901 is configured to receive the voice data by using the first data connection, where the voice data includes a third voice data packet, and the third voice data packet includes a voice payload and a voice over Internet Protocol VoIP protocol header and carries identifier information used to indicate a sequence of the third voice data packet; and
the caller data sending unit 3902 is configured to send the third voice data packet to the core network device by using the second data connection.

Further, based on the established data connection, this embodiment further provides a voice data forwarding function. As shown in FIG. 14, a data restoration unit 4003 is required only in an application scenario of data restoration, and a dashed line is used to indicate that the unit is an optional unit and not a mandatory functional unit. The radio access network device further includes a callee data receiving unit 4001 and a callee data sending unit 4002, where
the callee data receiving unit 4001 is configured to receive the voice data from the called terminal by using the second data connection, where the voice data includes a voice payload; and
the callee data sending unit 4002 is configured to send the voice payload to the calling terminal by using the first data connection;

Alternatively, the radio access network device further includes a callee data receiving unit 4001 and a callee data sending unit 4002, where
the callee data receiving unit 4001 is configured to receive the voice data by using the second data connection, where the voice data includes a voice payload and configuration information of the voice payload; and
the callee data sending unit 4002 is configured to send the configuration information and the voice payload to the called terminal by using the first data connection.

Alternatively, the radio access network device further includes a callee data receiving unit 4001, a data restoration unit 4003, and a callee data sending unit 4002, where
the callee data receiving unit 4001 is configured to receive the voice data by using the second data connection, where the voice data includes a voice payload and configuration information of the voice payload;
the data restoration unit 4003 is configured to restore a protocol header of the voice payload based on the configuration information to obtain a voice data packet carrying the protocol header; and
the callee data sending unit 4002 is configured to send the voice data packet carrying the protocol header to the calling terminal by using the first data connection.

Alternatively, the radio access network device further includes a callee data receiving unit 4001 and a callee data sending unit 4002, where
the callee data receiving unit 4001 is configured to receive the voice data from the called terminal by using the second data connection, where the voice data includes a fourth voice data packet, and the fourth voice data packet includes a voice payload and an L2 protocol header; and
the callee data sending unit 4002 is configured to send the fourth voice data packet to the calling terminal by using the first data connection.

Alternatively, the radio access network device further includes a callee data receiving unit 4001 and a callee data sending unit 4002, where
the callee data receiving unit 4001 is configured to receive the voice data from the called terminal by using the second data connection, where the voice data includes a fifth voice data packet, and the fifth voice data packet includes a voice payload and carries identifier information used to indicate a sequence of the fifth voice data packet; and
the callee data sending unit 4002 is configured to send the fifth voice data packet to the calling terminal by using the first data connection.

Alternatively, the radio access network device further includes a callee data receiving unit 4001 and a callee data sending unit 4002, where
the callee data receiving unit 4001 is configured to receive the voice data by using the second data connection, where the voice data includes a sixth voice data packet, and the sixth voice data packet includes a voice payload and a voice over Internet Protocol VoIP protocol header and carries, in L2, identifier information used to indicate a sequence of the sixth voice data packet; and
the callee data sending unit 4002 is configured to send the sixth voice data packet to the calling terminal by using the first data connection.

Optionally, the protocol header obtained through restoration is any one of the following protocol headers:
an Internet Protocol header and a Transmission Control Protocol header; or an Internet Protocol header and a User Datagram Protocol header; or an Internet Protocol header, a User Datagram Protocol header, and a Real-time Transport Protocol header.

Optionally, as shown in FIG. 14, the radio access network device further includes an information reading unit 4101 and a priority control unit 4102.

The information reading unit 4101 is configured to read indication carried in the voice data.

The priority control unit 4102 is configured to increase a priority of the voice data based on the indication information. Alternatively, as shown in FIG. 14, the radio access network device further includes an information adding unit 4201, where the information adding unit 4201 may be combined with any functional module having a voice data sending function. The combination is similar to that in FIG. 14 and therefore is not described herein.

The information adding unit 4201 is configured to add, to the voice data, indication information used to increase a priority of sending in a network.

The voice data includes at least one of the voice payload, the voice data packet carrying the protocol header, the first voice data packet, the second voice data packet, the third voice data packet, the fourth voice data packet, the fifth voice data packet, and the sixth voice data packet, and the indication information includes at least one of a quality identifier, a service type, and priority information.

Based on a transmission mode of the voice data on an air interface according to this embodiment of the present invention, as shown in FIG. 14, this embodiment of the present invention further provides a solution of a structure on this basis. Details are as follows: The radio access network device further includes a data transceiver unit 4301.

The data transceiver unit 4301 is configured to receive or send the voice data by using the first data connection.

A mode used for transmitting the voice data on the first data connection includes at least one of: sending in frequency division multiplexing FDM mode on at least one subcarrier, where a minimum frequency spacing is one subcarrier; sending in code division multiplexing CDM mode in a frequency band dedicated to a voice data service; and sending in time division multiplexing TDM mode in a frequency band dedicated to a voice data service.

Optionally, the data transceiver unit 4301 is specifically configured to send the voice data in frequency hopping mode on the at least one subcarrier.

Optionally, the data transceiving u nit 4301 is specifically configured to map, on the at least one subcarrier based on a predetermined frequency hopping mechanism, the voice data to the at least one subcarrier for sending; or
the data transceiver unit 4301 is specifically configured to: when signal strength of a voice-dedicated subcarrier is higher than a second threshold, send the voice data by using the voice-dedicated subcarrier, and when the signal strength of the voice-dedicated subcarrier is lower than a first threshold, send the voice data by using a common reserved subcarrier.

Optionally, a single timeslot resource block on the air interface includes voice data of at least one terminal; and
if the single timeslot resource block includes voice data of at least two terminal devices, time division multiplexing or frequency division multiplexing is performed between the terminal devices on the single timeslot resource block; or voice data of the calling terminal or the called terminal is carried in consecutive timeslot resource blocks on the air interface.

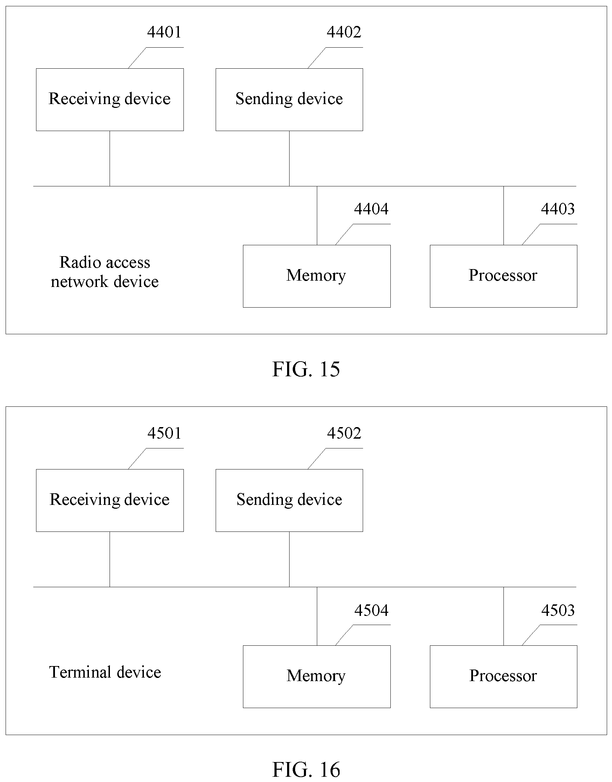

An embodiment of the present invention further provides a radio access network device. The radio access network device is used as a radio access network device on a calling terminal side or is used as a radio access network device on a called terminal side. As shown in FIG. 15, the radio access network device includes a receiving device 4401, a sending device 4402, a processor 4403, and a memory 4404. The receiving device 4401, the sending device 4402, the memory 4404, and the processor 4403 may be connected by an internal bus. The memory 4404 may be configured to perform buffering required for data processing performed by the processor 4403, or may be configured to store received voice data and/or to-be-sent voice data. In the method procedure of the foregoing embodiment, steps performed by the radio access network device on the calling terminal side or the radio access network device on the called terminal side may be based on the structure shown in FIG. 15. The processor 4403 is configured to perform a method procedure, where the method procedure may be stored in the memory 4404 in a form of a software program.

An embodiment of the present invention further provides a terminal device. The terminal device is used as a calling terminal or is used as a called terminal. As shown in FIG. 16, the terminal device includes a receiving device 4501, a sending device 4502, a processor 4503, and a memory 4504. The receiving device 4501, the sending device 4502, the memory 4504, and the processor 4503 may be connected by an internal bus. The memory 4404 may be configured to perform buffering required for data processing performed by the processor 4503, or may be configured to store received voice data and/or to-be-sent voice data. In the method procedure of the foregoing embodiment, steps performed by the calling terminal or the called terminal may be based on the structure shown in FIG. 16. The processor 4503 is configured to perform a method procedure, where the method procedure may be stored in the memory 4504 in a form of a software program. An embodiment of the present invention further provides a core network device. As shown in FIG. 17, the core network device includes a receiving device 4601, a sending device 4602, a processor 4603, and a memory 4604. The receiving device 4601, the sending device 4602, the memory 4604, and the processor 4603 may be connected by an internal bus. The memory 4404 may be configured to perform buffering required for data processing performed by the processor 4603, or may be configured to store received voice data and/or to-be-sent voice data. In the method procedure of the foregoing embodiment, steps performed by the core network device may be based on the structure shown in FIG. 17. The processor 4603 is configured to perform a method procedure, where the method procedure may be stored in the memory 4604 in a form of a software program.

An embodiment of the present invention further provides a system on chip. As shown in FIG. 18, the system on chip includes an input/output interface 4701, at least one processor 4702, a memory 4703, and a bus 4704. The system on chip may be a system on chip that exists in a form of hardware, or hardware with written embedded software, or another form. The system on chip shown in FIG. 18 may be located in a calling terminal, may be located in a called terminal, may be located in a radio access network device on a calling terminal side, may be located in a radio access network device on a called terminal side, or may be located in a core network device. Based on a specific device in which the system on chip is located, a specific function corresponding to the system on chip is a function reflected by the device in which the system on chip is located when the device performs a method procedure in an embodiment of the present invention. For detailed descriptions, refer to the foregoing embodiment. Details are not described again herein.

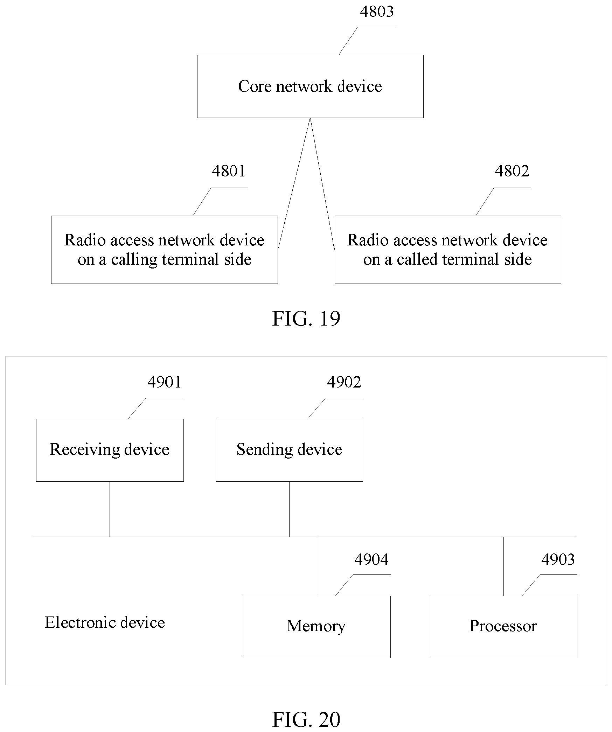

An embodiment of the present invention further provides a communications system. As shown in FIG. 19, the communications system includes a radio access network device 4801 on a calling terminal side, a radio access network device 4802 on a called terminal side, and a core network device 4803. Also referring to the structure of the communications system shown in FIG. 2, the radio access network device 4801 on the calling terminal side and the radio access network device 4802 on the called terminal side may be a same radio access network device. For functions and control procedures of the radio access network device 4801 on the calling terminal side and the radio access network device 4802 on the called terminal side in the system, refer to detailed descriptions of the radio access network device 4801 on the calling terminal side and the radio access network device 4802 on the called terminal side in the method embodiments. Details are not described again herein.

An embodiment of the present invention further provides an electronic device. As shown in FIG. 20, the electronic device includes a receiving device 4901, a sending device 4902, a processor 4903, and a memory 4904, where the memory 4904 stores a computer instruction sequence; and during execution of the instruction sequence, the processor 4903 performs the method procedure described in any embodiment provided by the embodiments of the present invention. Based on different method procedures performed by the processor, a function that the electronic device can implement and a function in the whole communications system may be determined. For details, refer to detailed descriptions about the method procedures in the foregoing embodiments. Details are not described again in this embodiment.

It should be noted that, the apparatus part is divided merely according to function logic, but is not limited to the foregoing division, so long as corresponding functions can be implemented. In addition, specific names of the functional units are merely used for mutual differentiation, and are not intended to limit the protection scope of the present invention.

In addition, a person of ordinary skill in the art should understand that all or some steps of the foregoing method embodiment can be implemented by related hardware instructed by a program. The corresponding program may be stored in a computer-readable storage medium. The storage medium may be a ready-only memory, a magnetic disk, or an optical disc.

Detailed above are merely example embodiments of the present invention, but the protection scope of the present invention is not limited thereto. Any modification or replacement that a person skilled in the art can easily figure out in the technical scope disclosed by the embodiments of the present invention shall fall within the protection scope of the present invention. Therefore, the protection scope of the present invention shall be subject to the protection scope of the claims.

## Claims

1. A voice data transmission control method, comprising:
after receiving a connection establishment request from a calling terminal, sending, by a radio access network device, first configuration information to the calling terminal, and establishing a voice-dedicated domain based first signaling connection between the radio access network device and the calling terminal based on the first configuration information;
receiving, by the radio access network device by using the first signaling connection, a call establishment request sent by the calling terminal; and
sending, by the radio access network device, the call establishment request to a core network device, and establishing a voice-dedicated domain based second signaling connection between the radio access network device and the core network device.

2. The method according to claim 1, wherein the voice-dedicated domain is a circuit switched, CS, domain or an Internet Protocol multimedia subsystem, IMS, domain.

3. The method according to claim 1 or 2, wherein the call establishment request sent by the calling terminal is transmitted by using any one of the following signaling connections: non-access stratum NAS signaling, Session Initiation Protocol SIP signaling, and SIP signaling carried in NAS signaling.

4. The method according to any one of claims 1 to 3, wherein the call establishment request carries identifier information of a called terminal, and the identifier information of the called terminal is used by the radio access network device or the core network device to identify the called terminal; and
after the sending, by the radio access network device, the call establishment request to the core network device, the method further comprises:
receiving, by the radio access network device, a call response from the core network device, sending the call response to the calling terminal, and establishing a packet switched PS domain based second data connection dedicated to carrying voice data, between the radio access network device and the core network device; and
receiving, by the radio access network device, second configuration information from the core network device, and establishing a PS domain based first data connection dedicated to carrying the voice data, between the radio access network device and the calling terminal based on the second configuration information.

5. The method according to claim 4, wherein the method further comprises:
receiving, by the radio access network device, the voice data by using the first data connection, wherein the voice data comprises a voice payload; and sending, by the radio access network device, the voice payload to the core network device by using the second data connection; or
the method further comprises:
receiving, by the radio access network device, the voice data by using the first data connection, wherein the voice data comprises a voice payload and configuration information of the voice payload; and
restoring, by the radio access network device, a protocol header of the voice payload based on the configuration information to obtain a voice data packet carrying the protocol header, and sending the voice data packet carrying the protocol header to the core network device by using the second data connection; or sending the configuration information and the voice payload to the core network device by using the second data connection; or
the method further comprises:
receiving, by the radio access network device, the voice data by using the first data connection, wherein the voice data comprises a first voice data packet, and the first voice data packet comprises a voice payload and a data link layer L2 protocol header; and sending, by the radio access network device, the first voice data packet to the core network device by using the second data connection; or
the method further comprises:
receiving, by the radio access network device, the voice data by using the first data connection, wherein the voice data comprises a second voice data packet, and the second voice data packet comprises a voice payload and carries identifier information used to indicate a sequence of the second voice data packet; and sending, by the radio access network device, the second voice data packet to the core network device by using the second data connection; or
the method further comprises:
receiving, by the radio access network device, the voice data by using the first data connection, wherein the voice data comprises a third voice data packet, and the third voice data packet comprises a voice payload and a voice over Internet Protocol VoIP protocol header and carries identifier information used to indicate a sequence of the third voice data packet; and sending, by the radio access network device, the third voice data packet to the core network device by using the second data connection.

6. The method according to claim 5, wherein the method further comprises:
before sending the voice data packet, reading, by the radio access network device, indication information carried in the voice data, and increasing a priority of the voice data based on the indication information; or before sending the voice data packet, adding, by the radio access network device to the voice data, indication information used to increase a priority of sending in a network; wherein the voice data comprises at least one of the voice payload, the voice data packet carrying the protocol header, the first voice data packet, the second voice data packet, and the third voice data packet, and the indication information comprises at least one of a quality identifier, a service type, and priority information.

7. A voice data transmission control method, comprising:
sending, by a calling terminal, a connection establishment request to a radio access network device;
receiving, by the calling terminal, first configuration information sent by the radio access network device;
establishing, by the calling terminal, a voice-dedicated domain based first signaling connection between the calling terminal and the radio access network device based on the first configuration information;
sending, by the calling terminal, a call establishment request to the radio access network device by using the first signaling connection, wherein the call establishment request carries identifier information of a called terminal, and the identifier information of the called terminal is used by the radio access network device or the core network device to identify the called terminal;
after receiving a call response sent by the radio access network device, determining, by the calling terminal, that a call is successful; and
receiving, by the calling terminal, second configuration information sent by the radio access network device, and establishing a voice-dedicated domain based first data connection between the calling terminal and the radio access network device.

8. The method according to claim 7, wherein the voice-dedicated domain is a circuit switched CS domain or an Internet Protocol multimedia subsystem IMS domain.

9. The method according to claim 7 or 8, wherein the call establishment request sent by the calling terminal is transmitted by using any one of the following signaling connections: non-access stratum NAS signaling, Session Initiation Protocol SIP signaling, and SIP signaling carried in NAS signaling.

10. The method according to any one of claims 7 to 9, wherein the voice-dedicated domain based first data connection comprises a packet switched PS domain based first data connection dedicated to carrying voice data; and
the method further comprises: sending, by the calling terminal, the voice data to the radio access network device by using the first data connection, wherein the voice data comprises a voice payload; or
the method further comprises: sending, by the calling terminal, the voice data to the radio access network device by using the first data connection, wherein the voice data comprises a voice payload and configuration information of the voice payload; or
the method further comprises: sending, by the calling terminal, the voice data to the radio access network device by using the first data connection, wherein the voice data comprises a first voice data packet, and the first voice data packet comprises a voice payload and a data link layer L2 protocol header; or
the method further comprises: sending, by the calling terminal, the voice data to the radio access network device by using the first data connection, wherein the voice data comprises a second voice data packet, and the second voice data packet comprises a voice payload and carries identifier information used to indicate a sequence of the second voice data packet; or
the method further comprises: sending, by the calling terminal, the voice data to the radio access network device by using the first data connection, wherein the voice data comprises a third voice data packet, and the third voice data packet comprises a voice payload and a voice over Internet Protocol VoIP protocol header and carries identifier information used to indicate a sequence of the third voice data packet.

11. The method according to claim 10, wherein the method further comprises:
before sending the voice data packet, adding, by the calling terminal to the voice data, indication information used to increase a priority of sending in a network; wherein the voice data comprises at least one of the voice payload, the voice data packet carrying the protocol header, the first voice data packet, the second voice data packet, and the third voice data packet, and the indication information comprises at least one of a quality identifier, a service type, and priority information.

12. The method according to any one of claims 8 to 10, wherein the method further comprises:
receiving or sending, by the calling terminal, the voice data by using the first data connection; wherein
a mode used for transmitting the voice data on the first data connection comprises at least one of: sending in frequency division multiplexing FDM mode on at least one subcarrier, wherein a minimum frequency spacing is one subcarrier; sending in code division multiplexing CDM mode in a frequency band dedicated to a voice data service; and sending in time division multiplexing TDM mode in a frequency band dedicated to a voice data service.

13. The method according to claim 12, wherein the sending the voice data in frequency division multiplexing FDM mode on at least one subcarrier comprises:
sending the voice data in frequency hopping mode on the at least one subcarrier.

14. An apparatus for a radio access network device on a calling terminal side and comprises a receiver, a transmitter, a processor, and a memory, wherein the processor is configured to control execution of the method according to any one of claims 1 to 6.

15. An apparatus for a calling terminal and comprises a receiver, a transmitter, a processor, and a memory, wherein the processor is configured to control execution of the method according to any one of claims 7 to 13.

## Patentansprüche

1. Sprachdatenübertragungssteuerverfahren, das Folgendes umfasst:
nach einem Empfangen einer Verbindungsaufbauanforderung von einem anrufenden Endgerät, Senden, durch eine Funkzugangsnetzvorrichtung, von ersten Konfigurationsinformationen an das anrufende Endgerät und Aufbauen einer ersten Signalisierungsverbindung auf Basis einer sprachdedizierten Domäne zwischen der Funkzugangsnetzvorrichtung und dem anrufenden Endgerät basierend auf den ersten Konfigurationsinformationen;
Empfangen, durch die Funkzugangsnetzvorrichtung durch Verwenden der ersten Signalisierungsverbindung, einer Anrufaufbauanforderung, die durch das anrufende Endgerät gesendet wird; und
Senden, durch die Funkzugangsnetzvorrichtung, der Anrufaufbauanforderung an eine Kernnetzvorrichtung und Aufbauen einer zweiten Signalisierungsverbindung auf Basis der sprachdedizierten Domäne zwischen der Funkzugangsnetzvorrichtung und der Kernnetzvorrichtung.

2. Verfahren nach Anspruch 1, wobei die sprachdedizierte Domäne eine leitungsvermittelte (*circuit switched* - CS) Domäne oder eine Internetprotokollmultimediasubsystem(IMS)-Domäne ist.

3. Verfahren nach Anspruch 1 oder 2, wobei die Anrufaufbauanforderung, die durch das anrufende Endgerät gesendet wird, durch Verwenden einer der folgenden Signalisierungsverbindungen übertragen wird:
Vermittlungsebenen(*non-access stratum* - NAS)-Signalisierung, Sitzungsinitiierungsprotokoll(SIP)-Signalisierung und SIP-Signalisierung, die in der NAS-Signalisierung getragen wird.

4. Verfahren nach einem der Ansprüche 1 bis 3, wobei die Anrufaufbauanforderung Kennungsinformationen eines angerufenen Endgeräts trägt und die Kennungsinformationen des angerufenen Endgeräts durch die Funkzugangsnetzvorrichtung oder die Kernnetzvorrichtung verwendet werden, um das angerufene Endgerät zu identifizieren; und
wobei, nach dem Senden, durch die Funkzugangsnetzvorrichtung, der Anrufaufbauanforderung an die Kernnetzvorrichtung, das Verfahren ferner Folgendes umfasst:
Empfangen, durch die Funkzugangsnetzvorrichtung, einer Anrufantwort von der Kernnetzvorrichtung durch die Funkzugangsnetzvorrichtung, Senden der Anrufantwort an das anrufende Endgerät und Aufbauen einer zweiten Datenverbindung auf Basis der atpaketvermittelten (*packet switched* - PS) Domäne, die dediziert ist, um Sprachdaten zu tragen, zwischen der Funkzugangsnetzvorrichtung und der Kernnetzvorrichtung; und
Empfangen, durch die Funkzugangsnetzvorrichtung, von zweiten Konfigurationsinformationen von der Kernnetzvorrichtung und Aufbauen einer ersten Datenverbindung auf Basis der PS Domäne, die dediziert ist, um die Sprachdaten zu tragen, zwischen der Funkzugangsnetzvorrichtung und dem anrufenden Endgerät basierend auf den zweiten Konfigurationsinformationen.

5. Verfahren nach Anspruch 4, wobei das Verfahren ferner Folgendes umfasst:
Empfangen, durch die Funkzugangsnetzvorrichtung, der Sprachdaten durch Verwenden der ersten Datenverbindung, wobei die Sprachdaten Sprachnutzdaten umfassen; und
Senden, durch die Funkzugangsnetzvorrichtung, der Sprachnutzdaten an die Kernnetzvorrichtung durch Verwenden der zweiten Datenverbindung; oder
wobei das Verfahren ferner Folgendes umfasst:
Empfangen, durch die Funkzugangsnetzvorrichtung, der Sprachdaten durch Verwenden der ersten Datenverbindung, wobei die Sprachdaten Sprachnutzdaten und Konfigurationsinformationen der Sprachnutzdaten umfassen; und
Wiederherstellen, durch die Funkzugangsnetzvorrichtung, eines Protokollheaders der Sprachnutzdaten basierend auf den Konfigurationsinformationen, um ein Sprachdatenpaket zu erhalten, das den Protokollheader trägt, und Senden des Sprachdatenpakets, das den Protokollheader trägt, an die Kernnetzvorrichtung durch Verwenden der zweiten Datenverbindung; oder
Senden der Konfigurationsinformationen und der Sprachnutzdaten an die Kernnetzvorrichtung durch Verwenden der zweiten Datenverbindung; oder
wobei das Verfahren ferner Folgendes umfasst:
Empfangen, durch die Funkzugangsnetzvorrichtung, der Sprachdaten durch Verwenden der ersten Datenverbindung, wobei die Sprachdaten ein erstes Sprachdatenpaket umfassen und das erste Sprachdatenpaket Sprachnutzdaten und einen Datensicherungsschicht(*data link layer-* L2)-Protokollheader umfasst; und Senden, durch die Funkzugangsnetzvorrichtung, des ersten Sprachdatenpakets an die Kernnetzvorrichtung durch Verwenden der zweiten Datenverbindung; oder
wobei das Verfahren ferner Folgendes umfasst:
Empfangen, durch die Funkzugangsnetzvorrichtung, der Sprachdaten durch Verwenden der ersten Datenverbindung, wobei die Sprachdaten ein zweites Sprachdatenpaket umfassen und das zweite Sprachdatenpaket Sprachnutzdaten umfasst und Kennungsinformationen trägt, die verwendet werden, um eine Sequenz des zweiten Sprachdatenpakets anzuzeigen; und
Senden, durch die Funkzugangsnetzvorrichtung, des zweiten Sprachdatenpakets an die Kernnetzvorrichtung durch Verwenden der zweiten Datenverbindung; oder
wobei das Verfahren ferner Folgendes umfasst:
Empfangen, durch die Funkzugangsnetzvorrichtung, der Sprachdaten durch Verwenden der ersten Datenverbindung, wobei die Sprachdaten ein drittes Sprachdatenpaket umfassen und das dritte Sprachdatenpaket Sprachnutzdaten und einen Sprache-über-Internetprotokoll(*voice over Internet Protocol* - VoIP)-Protokollheader umfasst und Kennungsinformationen trägt, die verwendet werden, um eine Sequenz des dritten Sprachdatenpakets anzuzeigen; und
Senden, durch die Funkzugangsnetzvorrichtung, des dritten Sprachdatenpakets an die Kernnetzvorrichtung durch Verwenden der zweiten Datenverbindung.

6. Verfahren nach Anspruch 5, wobei das Verfahren ferner Folgendes umfasst:
vor dem Senden des Sprachdatenpakets, Auslesen, durch die Funkzugangsnetzvorrichtung, von Anzeigeinformationen, die in den Sprachdaten getragen werden, und Steigern einer Priorität der Sprachdaten basierend auf den Anzeigeinformationen; oder vor dem Senden des Sprachdatenpakets, Hinzufügen, durch die Funkzugangsnetzvorrichtung zu den Sprachdaten, von Anzeigeinformationen, die verwendet werden, um eine Priorität des Sendens in einem Netz zu steigern; wobei die Sprachdaten die Sprachnutzdaten, das Sprachdatenpaket, das den Protokollheader trägt, das erste Sprachdatenpaket, das zweite Sprachdatenpaket und/oder das dritte Sprachdatenpaket umfassen, und die Anzeigeinformationen eine Qualitätskennung, eine Dienstart und/oder Prioritätsinformationen umfassen.

7. Sprachdatenübertragungssteuerverfahren, das Folgendes umfasst:
Senden, durch ein anrufendes Endgerät, einer Verbindungsaufbauanforderung an eine F u nkzugangsnetzvorrichtu ng;
Empfangen, durch das anrufende Endgerät, von ersten Konfigurationsinformationen, die durch die Funkzugangsnetzvorrichtung gesendet werden;
Aufbauen, durch das anrufende Endgerät, einer ersten Signalisierungsverbindung auf Basis der sprachdedizierten Domäne zwischen dem anrufenden Endgerät und der Funkzugangsnetzvorrichtung basierend auf den ersten Konfigurationsinformationen;
Senden, durch das anrufende Endgerät, einer Anrufaufbauanforderung an die Funkzugangsnetzvorrichtung durch Verwenden der ersten Signalisierungsverbindung, wobei die Anrufaufbauanforderung Kennungsinformationen eines angerufenen Endgeräts trägt und die Kennungsinformationen des angerufenen Endgeräts durch die Funkzugangsnetzvorrichtung oder die Kernnetzvorrichtung verwendet werden, um das angerufene Endgerät zu identifizieren;
nach dem Empfangen einer Anrufantwort, die durch die Funkzugangsnetzvorrichtung gesendet wird, Bestimmen, durch das anrufende Endgerät, dass ein Anruf erfolgreich ist; und
Empfangen, durch das anrufende Endgerät, von zweiten Konfigurationsinformationen, die durch die Funkzugangsnetzvorrichtung gesendet werden, und Aufbauen einer ersten Datenverbindung auf Basis der sprachdedizierten Domäne zwischen dem anrufenden Endgerät und der Funkzugangsnetzvorrichtung.

8. Verfahren nach Anspruch 7, wobei die sprachdedizierte Domäne eine leitungsvermittelte (CS) Domäne oder eine Internetprotokollmultimediasubsystem(IMS)-Domäne ist.

9. Verfahren nach Anspruch 7 oder 8, wobei die Anrufaufbauanforderung, die durch das anrufende Endgerät gesendet wird, durch Verwenden einer der folgenden Signalisierungsverbindungen übertragen wird:
Vermittlungsebenen(NAS)-Signalisierung, Sitzungsinitiierungsprotokoll(SIP)-Signalisierung und SIP-Signalisierung, die in der NAS-Signalisierung getragen wird.

10. Verfahren nach einem der Ansprüche 7 bis 9, wobei die erste Datenverbindung auf Basis der sprachdedizierten Domäne eine erste Datenverbindung auf Basis einer paketvermittelten (PS) Domäne umfasst, die dediziert ist, um Sprachdaten zu tragen; und
wobei das Verfahren ferner Folgendes umfasst: Senden, durch das anrufende Endgerät, der Sprachdaten an die Funkzugangsnetzvorrichtung durch Verwenden der ersten Datenverbindung, wobei die Sprachdaten Sprachnutzdaten umfassen; oder wobei das Verfahren ferner Folgendes umfasst: Senden, durch das anrufende Endgerät, der Sprachdaten an die Funkzugangsnetzvorrichtung durch Verwenden der ersten Datenverbindung, wobei die Sprachdaten Sprachnutzdaten und Konfigurationsinformationen der Sprachnutzdaten umfassen; oder
wobei das Verfahren ferner Folgendes umfasst: Senden, durch das anrufende Endgerät, der Sprachdaten an die Funkzugangsnetzvorrichtung durch Verwenden der ersten Datenverbindung, wobei die Sprachdaten ein erstes Sprachdatenpaket umfassen und das erste Sprachdatenpaket Sprachnutzdaten und einen Datensicherungsschicht-L2-Protokollheader umfasst; oder
wobei das Verfahren ferner Folgendes umfasst: Senden, durch das anrufende Endgerät, der Sprachdaten an die Funkzugangsnetzvorrichtung durch Verwenden der ersten Datenverbindung, wobei die Sprachdaten ein zweites Sprachdatenpaket umfassen und das zweite Sprachdatenpaket Sprachnutzdaten umfasst und Kennungsinformationen trägt, die verwendet werden, um eine Sequenz des zweiten Sprachdatenpakets anzuzeigen; oder
wobei das Verfahren ferner Folgendes umfasst: Senden, durch das anrufende Endgerät, der Sprachdaten an die Funkzugangsnetzvorrichtung durch Verwenden der ersten Datenverbindung, wobei die Sprachdaten ein drittes Sprachdatenpaket umfassen und das dritte Sprachdatenpaket Sprachnutzdaten und einen Sprache-über-lnternetprotokoll(VoIP)-Protokollheader umfasst und Kennungsinformationen trägt, die verwendet werden, um eine Sequenz des dritten Sprachdatenpakets anzuzeigen.

11. Verfahren nach Anspruch 10, wobei das Verfahren ferner Folgendes umfasst:
vor dem Senden des Sprachdatenpakets, Hinzufügen, durch das anrufende Endgerät zu den Sprachdaten, von Anzeigeinformationen, die verwendet werden, um eine Priorität des Sendens in einem Netz zu steigern; wobei die Sprachdaten die Sprachnutzdaten, das Sprachdatenpaket, das den Protokollheader trägt, das erste Sprachdatenpaket, das zweite Sprachdatenpaket und/oder das dritte Sprachdatenpaket umfassen, und die Anzeigeinformationen eine Qualitätskennung, eine Dienstart und/oder Prioritätsinformationen umfassen.

12. Verfahren nach einem der Ansprüche 8 bis 10, das ferner Folgendes umfasst:
Empfangen oder Senden, durch das anrufende Endgerät, der Sprachdaten durch Verwenden der ersten Datenverbindung; wobei
ein Modus, der zum Übertragen der Sprachdaten auf der ersten Datenverbindung verwendet wird, Folgendes umfasst: Senden in einem Frequenzmultiplex(frequency *division multiplexing* - FDM)-Modus auf wenigstens einem Hilfsträger, wobei ein minimaler Frequenzabstand ein Hilfsträger ist; Senden in einem Codemultiplex(code *division multiplexing* - CDM)-Modus in einem Frequenzband, das einem Sprachdatendienst dediziert ist; und/oder Senden in einem Zeitmultiplex(*time division multiplexing* - TDM)-Modus in einem Frequenzband, das einem Sprachdatendienst dediziert ist.

13. Verfahren nach Anspruch 12, wobei das Senden der Sprachdaten in dem Frequenzmultiplex(FDM)-Modus auf wenigstens einem Hilfsträger Folgendes umfasst: Senden der Sprachdaten in einem Frequenzsprungmodus auf dem wenigstens einen Hilfsträger.

14. Einrichtung für eine Funkzugangsnetzvorrichtung auf einer Seite des anrufenden Endgeräts und die einen Empfänger, einen Sender, einen Prozessor und einen Speicher umfasst, wobei der Prozessor konfiguriert ist, um eine Ausführung des Verfahrens nach einem der Ansprüche 1 bis 6 zu steuern.

15. Einrichtung für ein anrufendes Endgerät und die einen Empfänger, einen Sender, einen Prozessor und einen Speicher umfasst, wobei der Prozessor konfiguriert ist, um die Ausführung des Verfahrens nach einem der Ansprüche 7 bis 13 zu steuern.

## Revendications

1. Procédé de commande de transmission de données vocales, comprenant :
après réception d'une demande d'établissement de connexion d'un terminal appelant, l'envoi, par un dispositif de réseau d'accès radio, de premières informations de configuration au terminal appelant, et l'établissement d'une première connexion de signalisation basée sur un domaine dédié à la voix entre le dispositif de réseau d'accès radio et le terminal appelant sur la base des premières informations de configuration ;
la réception, par le dispositif de réseau d'accès radio en utilisant la première connexion de signalisation, d'une demande d'établissement d'appel envoyée par le terminal appelant ; et
l'envoi, par le dispositif de réseau d'accès radio, de la demande d'établissement d'appel à un dispositif de réseau central, et l'établissement d'une seconde connexion de signalisation basée sur un domaine dédié à la voix entre le dispositif de réseau d'accès radio et le dispositif de réseau central.

2. Procédé selon la revendication 1, dans lequel le domaine dédié à la voix est un domaine à commutation de circuits, CS, ou un domaine de sous-système multimédia de protocole Internet, IMS.

3. Procédé selon la revendication 1 ou 2, dans lequel la demande d'établissement d'appel envoyée par le terminal appelant est transmise en utilisant l'une quelconque des connexions de signalisation suivantes : la signalisation NAS de strate de non-accès, la signalisation SI P de protocole de lancement de session et la signalisation SIP transportée dans la signalisation NAS.

4. Procédé selon l'une quelconque des revendications 1 à 3, dans lequel la demande d'établissement d'appel transporte des informations d'identification d'un terminal appelé, et les informations d'identification du terminal appelé sont utilisées par le dispositif de réseau d'accès radio ou le dispositif de réseau central pour identifier le terminal appelé ; et
après l'envoi, par le dispositif de réseau d'accès radio, de la demande d'établissement d'appel au dispositif de réseau central, le procédé comprend en outre :
la réception, par le dispositif de réseau d'accès radio, d'une réponse d'appel du dispositif de réseau central, l'envoi de la réponse d'appel au terminal appelant et l'établissement d'une seconde connexion de données basée sur le domaine PS à commutation de paquets dédiée au transport de données vocales, entre le dispositif de réseau d'accès radio et le dispositif de réseau central ; et
la réception, par le dispositif de réseau d'accès radio, de secondes informations de configuration provenant du dispositif de réseau central, et l'établissement d'une première connexion de données basée sur le domaine PS dédiée au transport des données vocales, entre le dispositif de réseau d'accès radio et le terminal appelant sur la base des secondes informations de configuration.

5. Procédé selon la revendication 4, le procédé comprenant en outre :
la réception, par le dispositif de réseau d'accès radio, des données vocales en utilisant la première connexion de données, les données vocales comprenant une charge utile vocale ; et l'envoi, par le dispositif de réseau d'accès radio, de la charge utile vocale au dispositif de réseau central en utilisant la seconde connexion de données ; ou
le procédé comprenant en outre :
la réception, par le dispositif de réseau d'accès radio, des données vocales en utilisant la première connexion de données, les données vocales comprenant une charge utile vocale et des informations de configuration de la charge utile vocale ; et
la restauration, par le dispositif de réseau d'accès radio, d'un en-tête de protocole de la charge utile vocale sur la base des informations de configuration pour obtenir un paquet de données vocales transportant l'en-tête de protocole, et l'envoi du paquet de données vocales transportant l'en-tête de protocole au dispositif de réseau central en utilisant la seconde connexion de données ; ou l'envoi des informations de configuration et de la charge utile vocale au dispositif de réseau central en utilisant la seconde connexion de données ; ou
le procédé comprenant en outre :
la réception, par le dispositif de réseau d'accès radio, des données vocales en utilisant la première connexion de données, les données vocales comprenant un premier paquet de données vocales, et le premier paquet de données vocales comprenant une charge utile vocale et un en-tête de protocole de couche de liaison de données L2 ; et
l'envoi, par le dispositif de réseau d'accès radio, du premier paquet de données vocales au dispositif de réseau central en utilisant la seconde connexion de données ; ou
le procédé comprenant en outre :
la réception, par le dispositif de réseau d'accès radio, des données vocales en utilisant la première connexion de données, les données vocales comprenant un deuxième paquet de données vocales, et le deuxième paquet de données vocales comprenant une charge utile vocale et transportant des informations d'identification utilisées pour indiquer une séquence du deuxième paquet de données vocales ; et l'envoi, par le dispositif de réseau d'accès radio, du deuxième paquet de données vocales au dispositif de réseau central en utilisant la seconde connexion de données ; ou
le procédé comprenant en outre :
la réception, par le dispositif de réseau d'accès radio, des données vocales en utilisant la première connexion de données, les données vocales comprenant un troisième paquet de données vocales, et le troisième paquet de données vocales comprenant une charge utile vocale et un en-tête de protocole de protocole de téléphonie vocale sur Internet, VoIP, et transportant des informations d'identification utilisées pour indiquer une séquence du troisième paquet de données vocales ; et l'envoi, par le dispositif de réseau d'accès radio, du troisième paquet de données vocales au dispositif de réseau central en utilisant la seconde connexion de données.

6. Procédé selon la revendication 5, le procédé comprenant en outre :
avant l'envoi du paquet de données vocales, la lecture, par le dispositif de réseau d'accès radio, d'informations d'indication transportées dans les données vocales, et l'augmentation d'une priorité des données vocales sur la base des informations d'indication ; ou avant l'envoi du paquet de données vocales, l'ajout, par le dispositif de réseau d'accès radio aux données vocales, d'informations d'indication utilisées pour augmenter une priorité d'envoi dans un réseau ; les données vocales comprenant la charge utile vocale, et/ou le paquet de données vocales transportant l'en-tête de protocole, et/ou le premier paquet de données vocales, et/ou le deuxième paquet de données vocales et/ou le troisième paquet de données vocales, et les informations d'indication comprenant un identifiant de qualité, et/ou un type de service et/ou des informations de priorité.

7. Procédé de commande de transmission de données vocales, comprenant :
l'envoi, par un terminal appelant, d'une demande d'établissement de connexion à un dispositif de réseau d'accès radio ;
la réception, par le terminal appelant, de premières informations de configuration envoyées par le dispositif de réseau d'accès radio ;
l'établissement, par le terminal appelant, d'une première connexion de signalisation basée sur un domaine dédié à la voix entre le terminal appelant et le dispositif de réseau d'accès radio sur la base des premières informations de configuration ;
l'envoi, par le terminal appelant, d'une demande d'établissement d'appel au dispositif de réseau d'accès radio en utilisant la première connexion de signalisation, la demande d'établissement d'appel transportant des informations d'identification d'un terminal appelé, et les informations d'identification du terminal appelé étant utilisées par le dispositif de réseau d'accès radio ou le dispositif de réseau central pour identifier le terminal appelé ;
après réception d'une réponse d'appel envoyée par le dispositif de réseau d'accès radio, la détermination, par le terminal appelant, qu'un appel a abouti ; et
la réception, par le terminal appelant, de secondes informations de configuration envoyées par le dispositif de réseau d'accès radio, et l'établissement d'une première connexion de données basée sur un domaine dédié à la voix entre le terminal appelant et le dispositif de réseau d'accès radio.

8. Procédé selon la revendication 7, dans lequel le domaine dédié à la voix est un domaine à commutation de circuits, CS, ou un domaine de sous-système multimédia de protocole Internet, IMS.

9. Procédé selon la revendication 7 ou 8, dans lequel la demande d'établissement d'appel envoyée par le terminal appelant est transmise en utilisant l'une quelconque des connexions de signalisation suivantes : la signalisation NAS de strate de non-accès, la signalisation SI P de protocole de lancement de session et la signalisation SIP transportée dans la signalisation NAS.

10. Procédé selon l'une quelconque des revendications 7 à 9, dans lequel la première connexion de données basée sur un domaine dédié à la voix comprend une première connexion de données basée sur le domaine PS à commutation de paquets dédié au transport de données vocales ; et
le procédé comprenant en outre : l'envoi, par le terminal appelant, des données vocales au dispositif de réseau d'accès radio en utilisant la première connexion de données, les données vocales comprenant une charge utile vocale ; ou
le procédé comprenant en outre : l'envoi, par le terminal appelant, des données vocales au dispositif de réseau d'accès radio en utilisant la première connexion de données, les données vocales comprenant une charge utile vocale et des informations de configuration de la charge utile vocale ; ou
le procédé comprenant en outre : l'envoi, par le terminal appelant, des données vocales au dispositif de réseau d'accès radio en utilisant la première connexion de données, les données vocales comprenant un premier paquet de données vocales, et le premier paquet de données vocales comprenant une charge utile vocale et un en-tête de protocole de couche de liaison de données L2 ; ou
le procédé comprenant en outre : l'envoi, par le terminal appelant, des données vocales au dispositif de réseau d'accès radio en utilisant la première connexion de données, les données vocales comprenant un deuxième paquet de données vocales, et le deuxième paquet de données vocales comprenant une charge utile vocale et transportant des informations d'identification utilisées pour indiquer une séquence du deuxième paquet de données vocales ; ou
le procédé comprenant en outre : l'envoi, par le terminal appelant, des données vocales au dispositif de réseau d'accès radio en utilisant la première connexion de données, les données vocales comprenant un troisième paquet de données vocales, et le troisième paquet de données vocales comprenant une charge utile vocale et un en-tête de protocole de protocole de téléphonie vocale sur Internet, VoIP, et transportant des informations d'identification utilisées pour indiquer une séquence du troisième paquet de données vocales.

11. Procédé selon la revendication 10, le procédé comprenant en outre :
avant l'envoi du paquet de données vocales, l'ajout, par le terminal appelant aux données vocales, d'informations d'indication utilisées afin d'augmenter une priorité d'envoi dans un réseau ; les données vocales comprenant la charge utile vocale, et/ou le paquet de données vocales transportant l'en-tête de protocole, et/ou le premier paquet de données vocales, et/ou le deuxième paquet de données vocales et/ou le troisième paquet de données vocales, et les informations d'indication comprenant un identifiant de qualité, et/ou un type de service et/ou des informations de priorité.

12. Procédé selon l'une quelconque des revendications 8 à 10, le procédé comprenant en outre :
la réception ou l'envoi, par le terminal appelant, des données vocales en utilisant la première connexion de données ;
dans lequel un mode utilisé pour transmettre les données vocales sur la première connexion de données comprend : l'envoi en mode multiplexage par répartition en fréquence, FDM, sur au moins une sous-porteuse, dans lequel un espacement de fréquence minimal est une sous-porteuse ; l'envoi en mode multiplexage par répartition en code, CDM, dans une bande de fréquences dédiée à un service de données vocales ; et l'envoi en mode multiplexage par répartition dans le temps, TDM, dans une bande de fréquences dédiée à un service de données vocales.

13. Procédé selon la revendication 12, dans lequel l'envoi des données vocales en mode de multiplexage par répartition en fréquence, FDM, sur au moins une sous-porteuse comprend :
l'envoi des données vocales en mode saut de fréquence sur au moins une sous-porteuse.

14. Appareil pour un dispositif de réseau d'accès radio sur un côté terminal appelant et comprenant un récepteur, un émetteur, un processeur et une mémoire, le processeur étant configuré pour commander l'exécution du procédé selon l'une quelconque des revendications 1 à 6.

15. Appareil pour un terminal appelant et comprenant un récepteur, un émetteur, un processeur et une mémoire, le processeur étant configuré pour commander l'exécution du procédé selon l'une quelconque des revendications 7 à 13.
